(19) Europäisches Patentamt
European Patent Office
Office européen des brevets

(11) Veröffentlichungsnummer: **0 298 041 B1**

# (12) EUROPÄISCHE PATENTSCHRIFT

(45) Veröffentlichungstag der Patentschrift: **08.06.94**

(51) Int. Cl.$^5$: **C09B 62/008**, C07D 239/24, D06P 1/38

(21) Anmeldenummer: **88810445.2**

(22) Anmeldetag: **27.06.88**

Die Akte enthält technische Angaben, die nach dem Eingang der Anmeldung eingereicht wurden und die nicht in dieser Patentschrift enthalten sind.

## (54) Reaktivfarbstoffe, deren Herstellung und Verwendung.

(30) Priorität: **02.07.87 CH 2510/87**

(43) Veröffentlichungstag der Anmeldung:
**04.01.89 Patentblatt 89/01**

(45) Bekanntmachung des Hinweises auf die Patenterteilung:
**08.06.94 Patentblatt 94/23**

(84) Benannte Vertragsstaaten:
**BE CH DE ES FR GB IT LI**

(56) Entgegenhaltungen:
**FR-A- 2 224 525**

(73) Patentinhaber: **CIBA-GEIGY AG**
**Klybeckstrasse 141**
**CH-4002 Basel(CH)**

(72) Erfinder: **Tzikas, Athanassios, Dr.**
**Muttenzerstrasse 78**
**CH-4133 Pratteln(CH)**
Erfinder: **Burdeska, Kurt, Dr.**
**Laufenburgerstrasse 30**
**CH-4058 Basel(CH)**

EP 0 298 041 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z.B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anforderungen genügen.

Gegenstand der Erfindung sind Reaktivfarbstoffe der Formel

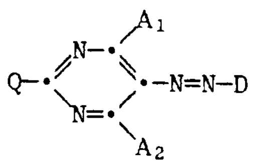

(1),

worin D der Rest einer Diazokomponente ist, Q einen gegebenenfalls substituierten Phenyl- oder Naphthylrest oder einen gegebenenfalls substituierten aromatisch-heterocyclischen Rest bedeutet und $A_1$ und $A_2$ unabhängig voneinander einen Rest der Formel

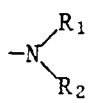

(1a),

worin $R_1$ und $R_2$ unabhängig voneinander für Wasserstoff, gegebenenfalls substituiertes $C_1$-$C_6$-Alkyl oder gegebenenfalls substituiertes Aryl stehen, bedeuten, oder $R_1$ und $R_2$ zusammen mit dem N-Atom einen gegebenenfalls weitersubstituierten heterocyclischen 5- oder 6-Ring bilden, mit der Massgabe, dass mindestens einer der Reste $A_1$, $A_2$ und D eine faserreaktive Gruppe aufweist.

Bei D handelt es sich z.B. um den Rest eines Aminobenzols, Aminonaphthalins, Phenylazo-aminobenzols, Naphthylazo-aminobenzols, Phenylazo-aminonaphthalins oder Naphthylazo-aminonaphthalins, welcher jeweils unsubstituiert oder, vorzugsweise, wie unten geschildert substituiert sein kann. Vorzugsweise ist D ein gegebenenfalls substituierter Rest eines Aminobenzols oder Aminonaphthalins.

Geeignete Substituenten am Rest D sind z.B.:

$C_1$-$C_4$-Alkyl, womit generell Methyl, Ethyl, n- oder iso-Propyl oder n-, sec- oder tert.-Butyl umfasst ist; $C_1$-$C_4$-Alkoxy, worunter generell Methoxy, Ethoxy, n- oder iso-Propoxy oder n-, sec.- oder tert.-Butoxy zu verstehen ist; Amino; N-Mono- oder N,N-Di-$C_1$-$C_4$-Alkylamino, wobei das Alkyl gegebenenfalls z.B. durch -OH, -$OCOCH_3$, -$OSO_3H$, -CN oder Halogen weitersubstituiert sein kann, z.B. Methylamino, Ethylamino, n- oder iso-Propylamino oder n-, sec-oder tert.-Butylamino, N,N-Dimethyl- oder -Diethylamino, $\beta$-Chlorethylamino, $\beta$-Cyanethylamino, $\beta$-Acetyloxyethylamino, N-($\beta$-Hydroxyethyl),N-ethyl-amino, $\beta$-Sulfatoethylamino, N,N-Di-($\beta$-hydroxyethyl)-amino,N,N-Di-($\beta$-Sulfatoethyl)-amino oder Hydroxypropylamino; Phenylamino; $C_1$-$C_4$-Alkanoylamino, besonders Acetylamino, Propionylamino; Benzoylamino; $C_1$-$C_4$-Alkoxycarbonyl, z.B. Methoxy- oder Ethoxycarbonyl; Nitro; Cyano; Trifluormethyl; Halogen, worunter generell Fluor, Chlor und Brom zu verstehen ist; Hydroxy; Carboxy; Sulfo; Sulfomethyl; Sulfamoyl; N-Mono- oder N,N-Di-$C_1$-$C_4$-Alkylsulfamoyl; N-Phenylsulfamoyl; Carbamoyl; N-Mono- oder N,N-Di-$C_1$-$C_4$-Alkylcarbamoyl; Ureido; $C_1$-$C_4$-Alkylsulfonyl, z.B. Methyl- oder Ethylsulfonyl.

D weist gegebenenfalls ferner einen Reaktivrest auf, z.B. einen durch eine abspaltbare Gruppe oder ein abspaltbares Atom substituierten $C_2$-$C_4$-Alkanoyl- oder $C_2$-$C_4$-Alkylsulfonylrest, einen gegebenenfalls durch ein abspaltbares Atom oder eine abspaltbare Gruppe substituierten $C_2$-$C_4$-Alkenoyl- oder $C_2$-$C_4$-Alkensulfo-

nylrest und/oder einen durch ein abspaltbares Atom oder eine abspaltbare Gruppe substituierten carbo- oder heterocyclische 5- oder 6-Ringe enthaltenden Rest, wobei die genannten Reste direkt oder über ein Brückenglied an den Chromophor gebunden sein können. Das Brückenglied kann dabei z.B. aus einer funktionellen Gruppe, z.B. einer Amino-, Carbonyl-, Carbonylamino-, Aminocarbonyl-, Sulfonyl-, Sulfonylamino- oder Aminosulfonylgruppe oder aus einer aliphatischen, cycloaliphatischen, aliphatisch-heterocyclischen, aromatischen oder gemischt aliphatisch-aromatischen Gruppe, die eine der genannten funktionellen Gruppen trägt, bestehen.

Eine Gruppe von geeigneten erfindungsgemässen Reaktivfarbstoffen umfasst Verbindungen der zuvor angegebenen Formel (1), worin D einen Reaktivrest der Formel

$-SO_2-Z$ (2),

$$-W-\underset{\displaystyle R}{\underset{|}{alk}}-SO_2-Z \qquad (2a),$$

$-W-alk-E-alk'-SO_2-Z$ (2b),

$$-alk-\underset{\displaystyle R}{\underset{|}{W}}-alk'-SO_2-Z \qquad (2c),$$

$$-O-alk-\underset{\displaystyle R}{\underset{|}{W}}-alk'-SO_2-Z \qquad (2d) \quad oder$$

$$-W-arylen-\underset{\displaystyle R_3}{\underset{|}{N}}-\underset{\displaystyle R}{\underset{|}{alk}}-SO_2-Z \qquad (2e)$$

aufweist, worin W eine funktionelle Gruppe, z.B. $-SO_2NR_3-$, $-CONR_3-$oder $-NR_3CO-$ ist, $R_3$ Wasserstoff, $C_1$-$C_4$-Alkyl, das gegebenenfalls durch Hydroxy, Sulfo, Sulfato, Carboxy oder Cyano substituiert ist, oder einen Rest

$$-\underset{\displaystyle R}{\underset{|}{alk}}-SO_2-Z$$

bedeutet, R für Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder für die Gruppe $-SO_2-Z$ steht, Z $-CH=CH_2$ oder $-CH_2-CH_2-Y$ und Y eine Abgangsgruppe ist, E für -O- oder $-NR_4-$ steht, $R_4$ Wasserstoff oder $C_1$-$C_4$-Alkyl bedeutet, alk und alk′ unabhängig voneinander einen $C_1$-$C_6$-Alkylenrest darstellen und arylen z.B. für einen Phenylen- oder Naphthylenrest, der unsubstituiert oder z.B. durch Sulfo, Carboxy, $C_1$-$C_4$-Alkyl, $C_1$-$C_4$-Alkoxy und/oder Halogen substituiert ist, steht.

Geeignete Abgangsgruppen Y sind z.B. -Cl, -Br, -F, $-OSO_3H$, $-SSO_3H$, $-OCO-CH_3$, $-OCO-C_6H_5$, $-OPO_3H_2$, $-OCO-CCL_3$, $-OCO-CHCl_2$, $-OCO-CH_2Cl$, $-OSO_2-R^*$, worin $R^*$ $C_1$-$C_4$-Alkyl oder gegebenenfalls durch $C_1$-$C_4$-Alkyl substituiertes Phenyl bedeutet, oder $-OSO_2-N(C_1$-$C_4$-$Alkyl)_2$.

Vorzugsweise ist Y eine Gruppe -Cl, $-OSO_3H$, $-SSO_3H$, $-OCOCH_3$, $-OCO-C_6H_5$ oder $-OPO_3H_2$.

Bei alk und alk′ handelt es sich unabhängig voneinander z.B. um einen Methylen-, Ethylen-, 1,3-Propylen-, 1,4-Butylen-, 1,5-Pentylen- oder 1,6-Hexylenrest oder deren verzweigte Isomere.

alk und alk′ stehen unabhängig voneinander bevorzugt für einen $C_1$-$C_4$-Alkylenrest und insbesondere bevorzugt für einen Ethylenrest.

R bedeutet vorzugsweise Wasserstoff oder die Gruppe $-SO_2-Z$, worin Z die zuvor angegebene Bedeutung hat. Besonders bevorzugt steht R für Wasserstoff.

$R_3$ ist vorzugsweise Wasserstoff, $C_1$-$C_4$-Alkyl oder eine Gruppe $-alk-SO_2-Z$, worin alk und Z jeweils die zuvor angegebene Bedeutung haben.

arylen steht bevorzugt für einen 1,3- oder 1,4-Phenylenrest, der unsubstituiert oder z.B. durch Sulfo, Methyl, Methoxy oder Carboxy substituiert ist.

E steht vorzugsweise für -NH- und insbesondere bevorzugt für -O-.

W bedeutet bevorzugt eine funktionelle Gruppe -CONH- oder -NHCO-.

Vorzugsweise enthält D einen Reaktivrest der zuvor angegebenen Formel (2) oder (2a), worin W -CO-NH- oder -NH-CO- ist, Z jeweils die oben angegebene Bedeutung hat und alk für einen $C_1$-$C_4$-Alkylenrest steht.

In einer weiteren Gruppe von geeigneten erfindungsgemässen Reaktivfarbstoffen der Formel (1) enthält D einen Reaktivrest der Formel

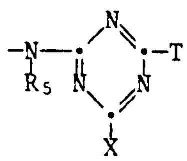 (3),

worin $R_5$ für Wasserstoff oder $C_1$-$C_4$-Alkyl, welches gegebenenfalls durch Carboxy, Cyano, Hydroxy, Sulfo oder Sulfato substituiert ist, steht, X eine als Anion abspaltbare Gruppe bedeutet und T entweder unabhängig die Bedeutung von X hat oder eine Gruppierung enthaltend einen weiteren Reaktivrest darstellt oder für einen nicht-reaktiven Substituenten steht.

Hierbei bedeutet $R_5$ vorzugsweise einen $C_1$-$C_4$-Alkylrest und insbesondere bevorzugt Wasserstoff.

X steht z.B. für Fluor, Chlor, Brom, Sulfo, $C_1$-$C_4$-Alkylsulfonyl oder Phenylsulfonyl und bevorzugt für Fluor oder Chlor.

Steht T für einen nicht-reaktiven Substituenten, so kann dies z.B. ein Hydroxy, $C_1$-$C_4$-Alkoxy-, $C_1$-$C_4$-Alkylthio-, Amino-, N-$C_1$-$C_4$-Alkylamino- oder N,N-Di-$C_1$-$C_4$-Alkylamino, wobei das Alkyl gegebenenfalls z.B. durch Sulfo, Sulfato, Hydroxy, Carboxy oder phenyl substituiert ist, Cyclohexylamino-, Morpholino-, Phenylamino-, N-$C_1$-$C_4$-Alkyl,N-Phenylamino- oder Naphthylaminorest, wobei das Phenyl oder Naphthyl gegebenenfalls z.B. durch $C_1$-$C_4$-Alkyl, $C_1$-$C_4$-Alkoxy, Carboxy, Sulfo und/oder Halogen substituiert ist, sein.

Beispiele für geeignete nicht-reaktive Substituenten T sind Amino, Methylamino, Ethylamino, $\beta$-Hydroxyethylamino, N,N-Di-$\beta$-hydroxyethylamino, $\beta$-Sulfoethylamino, Cyclohexylamino, Morpholino, o-, m-oder p-Methylphenylamino, o-, m- oder p-Methoxyphenylamino, o-, m- oder p-Chlorphenylamino, o-, m- oder p-Sulfophenylamino, Disulfophenylamino, o-Carboxyphenylamino, 1-oder 2-Naphthylamino, 1-Sulfo-2-naphthylamino, 4,8-Disulfo-2-naphthylamino, N-Ethyl,N-phenylamino, N-Methyl,N-phenylamino, Methoxy, Ethoxy, n- oder iso-Propoxy, Hydroxy.

Als nicht-reaktiver Substituent hat T vorzugsweise die Bedeutung Amino, N-$C_1$-$C_4$-Alkylamino, worin das Alkyl unsubstituiert oder durch Hydroxy, Sulfato oder Sulfo substituiert ist, Morpholino, Phenylamino oder N-$C_1$-$C_4$-Alkyl,N-Phenylamino, worin das Phenyl jeweils unsubstituiert oder durch Sulfo, Carboxy, Methyl oder Methoxy substituiert ist.

Hat T unabhängig die Bedeutung von X, bedeutet es bevorzugt Chlor oder Fluor.

Bedeutet T eine Gruppe, die einen weiteren Reaktivrest enthält, so kann diese z.B. der Formel

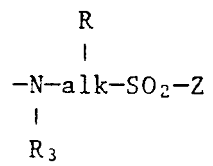 (4),

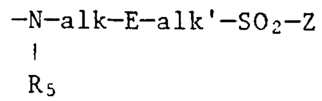 (4a),

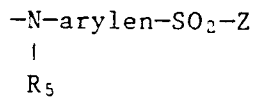 (4b)

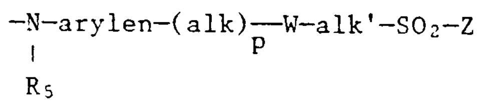 (4c) oder

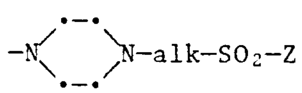 (4d),

entsprechen, worin für R, $R_3$, $R_5$, E,W, Z, alk, alk′ und arylen die zuvor genannten Bedeutungen und Bevorzugungen gelten und p 0 oder 1 ist.

T entspricht als Gruppe, die einen weiteren Reaktivrest enthält, vorzugsweise einer der unten angegebenen Formeln

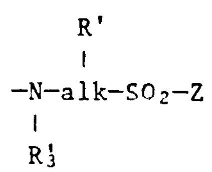 (4′),

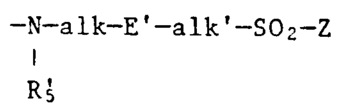 (4a′),

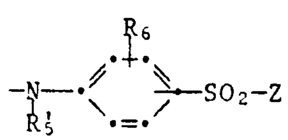 (4b′),

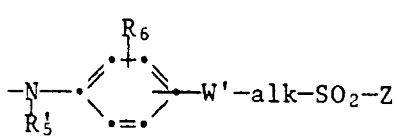 (4c′) oder

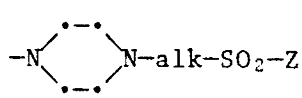 (4d),

worin W′ $-CONR_5'$ - oder $-NR_5'$ CO-, R′ Wasserstoff oder die Gruppe $-SO_2-Z$, $R_3'$ Wasserstoff, $C_1$-$C_4$-Alkyl oder die Gruppe -alk-$SO_2$-Z, $R_5'$ Wasserstoff oder $C_1$-$C_4$-Alkyl, E′ -O- oder -NH- und $R_6$ Wasserstoff, Sulfo, Carboxy, Chlor, Methoxy oder Methyl ist, alk und alk′ unabhängig voneinander einen $C_1$-$C_4$-Alkylenrest

bedeuten, und für Z die zuvor genannten Bedeutungen und Bevorzugungen gelten.

Weist D einen Reaktivrest auf, so kann es sich dabei z.B. auch um einen Pyrimidin- oder Chinoxalinrest, welcher jeweils über mindestens eine als Anion abspaltbare Gruppe verfügt, handeln. Beispiele sind der 2,3-Dichlorchinoxalin-6-carbonylaminorest, 2,4-Dichlorpyrimidin-5-carbonylaminorest oder ein Rest der Formel

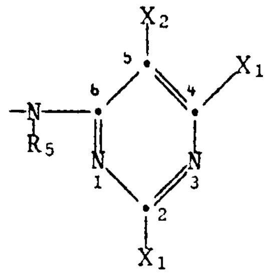

(5)

worin einer der Reste $X_1$, vorzugsweise derjenige in 2-Position, eine als Anion abspaltbare Gruppe ist und der andere Rest $X_1$ die unter der Formel (3) für T angegebene Bedeutung hat, $X_2$ ein negativer Substituent ist und $R_5$ unabhängig die unter der Formel (3) angegebene Bedeutung hat.

Hierbei gelten für $R_5$ und T die zuvor angegebenen Bedeutungen und Bevorzugungen; bei dem als Anion abspaltbaren Rest $X_1$ handelt es sich vorzugsweise um Fluor oder Chlor; Beispiele für geeignete Reste $X_2$ sind Nitro, Cyano, $C_1$-$C_4$-Alkylsulfonyl, Carboxy, Chlor, Hydroxy, $C_1$-$C_4$-Alkoxysulfonyl, $C_1$-$C_4$-Alkylsulfinyl, $C_1$-$C_4$-Alkoxycarbonyl oder $C_1$-$C_4$-Alkanoyl, wobei die Bedeutungen Chlor, Cyano, Formyl und Methylsulfonyl für $X_2$ bevorzugt sind.

Beispiele für bevorzugte Reaktivreste der Formel (5) am Rest D sind 2,4,5-Trichlorpyrimidin-6-amino, 2,4-Difluor-5-chlorpyrimidin-6-amino, 2,4-Dichlor-5-methylsulfonylpyrimidin-6-amino oder ein Rest der Formel

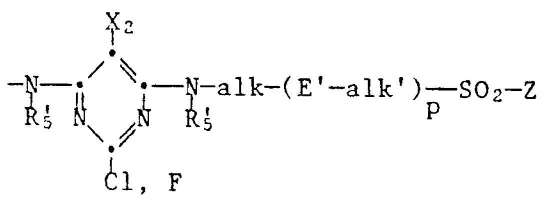

(6) oder

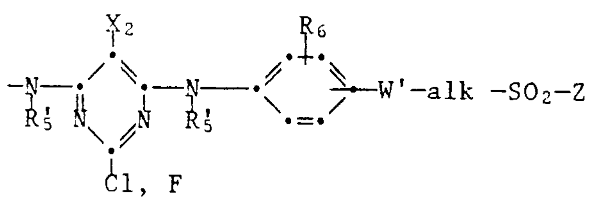

(7) ,

worin $R_5'$, E', W', $R_6$ und Z die zuvor angegebene Bedeutung haben, $X_2$ Chlor, Cyano oder Methylsulfonyl ist, p für die Zahl 0 oder 1 steht und alk und alk' unabhängig voneinander einen $C_1$-$C_4$-Alkylenrest bedeuten.

Weist der Rest D keine faserreaktive Gruppe auf, steht D bevorzugt für den Rest eines Aminobenzols oder Aminonaphthalins, welcher unsubstituiert oder durch Sulfo, Carboxy, $C_1$-$C_4$-Alkoxy, $C_1$-$C_4$-Alkyl, $C_1$-$C_4$-Alkanoylamino und/oder Halogen substituiert ist.

Weist D eine faserreaktive Gruppe auf, bedeutet es bevorzugt den Rest eines Aminobenzols oder Aminonaphthalins, welcher unsubstituiert oder durch Sulfo, Acetylamino, Methyl, Methoxy, Chlor oder Brom substituiert ist und darüberhinaus einen Reaktivrest der zuvor angegebenen Formel (2), (2a) oder (3) trägt.

Bedeuten $R_1$ und/oder $R_2$ in Formel (1a) einen gegebenenfalls substituierten $C_1$-$C_6$-Alkylrest, so handelt es sich z.B. um einen Methyl-, Ethyl-, n- oder iso-Propyl-, n-, sec.- oder tert.-Butyl-oder um einen geradkettigen oder verzweigten Pentyl- oder Hexylrest, wobei diese Reste z.B. durch Hydroxy, Sulfo, Sulfato, Carboxy, Cyano, Halogen, $C_1$-$C_4$-Alkoxycarbonyl, $C_1$-$C_4$-Alkanoyloxy, Carbamoyl und/oder einen Reaktivrest substituiert sein können und der Alkylrest mit Ausnahme von Methyl gegebenenfalls zusätzlich

z.B. durch eine Gruppe -O- oder $-NR_4-$ unterbrochen sein kann; hierbei hat $R_4$ die zuvor angegebene Bedeutung.

Ist der Alkylrest $R_1$ und/oder $R_2$ durch einen Reaktivrest substituiert, kann es sich dabei z.B. um einen Rest $-SO_2-Z$ handeln, wobei Z die zuvor angegebene Bedeutung hat.

In einer bevorzugten Ausführungsform der erfindungsgemässen Reaktivfarbstoffe bedeuten $R_1$ und $R_2$ unabhängig voneinander Wasserstoff oder einen $C_1$-$C_4$-Alkylrest, der unsubstituiert oder durch Hydroxy, Sulfo, Sulfato, Carboxy, Cyano oder die Gruppe $-SO_2-Z$ substituiert und/oder durch -O- unterbrochen ist; vorzugsweise bedeutet hierbei einer der Reste $R_1$ oder $R_2$ Wasserstoff.

Beispiele für besonders bevorzugte nicht-reaktive Alkylaminoreste $A_1$ und $A_2$ sind:
$-NH-CH_3$, $-NH-CH_2-SO_3H$, $-NH-CH_2-COOH$, $-NH-C_2H_5$, $-NH-CH_2-CH_2-OH$,
$-NH-CH_2-CH_2-SO_3H$, $-NH-CH_2-CH_2-OSO_3H$, $-NH-CH_2-CH_2-CN$,
$-NH-CH_2-CH_2-COOH$, $-NH-CH_2-CH_2-CH_2-OSO_3H$, $-NH-CH_2-CH_2-CH_2-OH$,

$$-NH-CH_2-\underset{OH}{\underset{|}{C}H}-CH_2-CH_3,$$

$-NH-CH_2-CH_2-O-CH_2-CH_2-OH$,
$-NH-CH_2-CH_2-O-CH_2-CH_2-OSO_3H$.

Beispiele für bevorzugte reaktive Alkylaminoreste $A_1$ und $A_2$ sind die zuvor genannten Reste der Formeln (4) oder (4a) und insbesondere die Reste der Formeln (4') oder (4a').

Bilden $R_1$ und $R_2$ zusammen mit dem Stickstoffatom, an das beide gebunden sind, einen heterocyclischen Rest, so kann dies z.B. ein Piperidinyl-, Piperazinyl- oder Pyrrolidinylrest sein, der jeweils unsubstituiert oder z.B. durch einen Reaktivrest der Formel

$$-(alk)_p-SO_2-Z,$$

worin alk, p und Z jeweils die zuvor angegebene Bedeutung haben, substituiert ist. Als nicht-reaktiver Rest ist hierbei der Piperidinylrest und als Reaktivrest ein Rest der zuvor angegebenen Formel (4d) bevorzugt.

Handelt es sich bei $R_1$ oder $R_2$ um einen Arylrest, so kann dies z.B. ein Phenyl- oder Naphthylrest sein, welcher unsubstituiert oder z.B. durch Sulfo, Carboxy, $C_1$-$C_4$-Alkyl, $C_1$-$C_4$-Alkoxy, Halogen, einen Reaktivrest und/oder eine Gruppe -N=N-K substituiert ist, worin K den Rest einer Kupplungskomponente der Benzol- oder Naphthalinreihe oder der heterocyclischen Reihe bedeutet.

Hierbei steht K bevorzugt für den Rest eines Benzols, Naphthalins, Pyrazolons, 1-Phenyl-5-pyrazolons oder Pyridons, welcher z.B. durch einen oder mehrere gleiche oder verschiedene der zuvor für D genannten Substituenten substituiert ist.

K entspricht besonders bevorzugt einer der im folgenden aufgeführten Formeln:

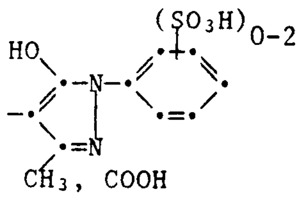

(8),

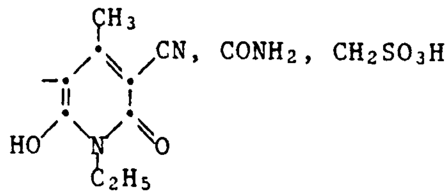

(8a),

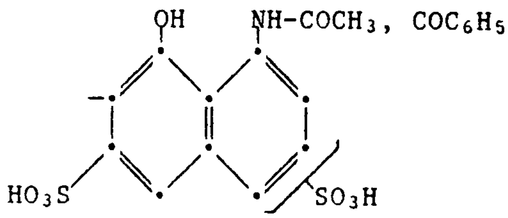

(8b).

Weisen $R_1$ oder $R_2$ als Aryl einen Reaktivrest auf, kann es sich dabei z.B. um einen Rest der zuvor angegebenen Formeln (2), (2a), (3) oder (5) oder um den 2,3-Dichlorchinoxalin-6-carbonylamino- oder 2,4-Dichlorpyrimidin-5-carbonylaminorest handeln.

Bedeuten $A_1$ und/oder $A_2$ einen nicht-reaktiven Arylrest, entspricht dieser z.B. der Formel

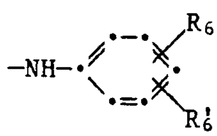

(9),

worin $R_6$ Wasserstoff, Sulfo, Chlor, Methoxy oder Carboxy ist und $R_6'$ unabhängig die Bedeutung von $R_6$ hat oder für eine Gruppe der zuvor angegebenen Formel (8) steht.

Bevorzugte reaktive Arylreste $A_1$ und $A_2$ sind die Gruppen der zuvor angegebenen Formeln (4b′) oder (4c′) oder eine Gruppe der Formel

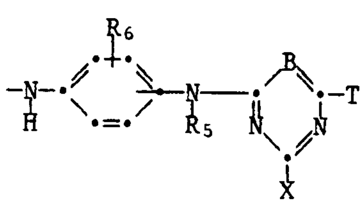

(3a),

worin $R_5$, $R_6$, X und T jeweils die zuvor angegebene Bedeutung haben und

B 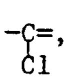, 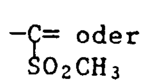 oder 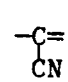

und insbesondere -N = bedeutet.

Eine bevorzugte Gruppe von erfindungsgemässen Reaktivfarbstoffen umfasst Verbindungen der Formel (1), worin $A_1$ und $A_2$ unabhängig voneinander Amino, N-$C_1$-$C_4$-Alkylamino, worin das Alkyl unsubstituiert oder durch Hydroxy, Sulfato oder Sulfo substituiert ist, oder Phenylamino, worin das Phenyl unsubstituiert oder durch Sulfo, Carboxy, Methyl, Methoxy, Chlor und/oder durch einen Rest der Formel

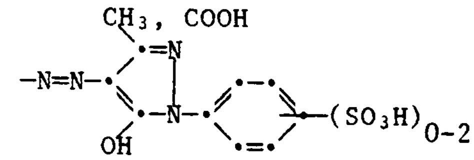

(8')

substituiert ist, bedeuten.

Eine weitere Gruppe von bevorzugten erfindungsgemässen Reaktivfarbstoffen umfasst Verbindungen der Formel (1), worin $A_1$ ein Rest der zuvor angegebenen Formel (1a), (4') oder (4a'), worin $R_1$ Wasserstoff und $R_2$ Wasserstoff oder unsubstituiertes oder durch Hydroxy, Sulfo oder Sulfato substituiertes $C_1$-$C_4$-Alkyl sind, R', $R_3'$ und $R_5'$ jeweils Wasserstoff bedeuten, E' für -O- steht, und alk, alk' und Z jeweils die zuvor angegebene Bedeutung haben, ist und $A_2$ unabhängig die Bedeutung von $A_1$ hat oder unsubstituiertes oder durch Sulfo, Chlor, Methoxy, Carboxy oder einen Rest der zuvor angegebenen Formel (2), (2a) oder (3) substituiertes Phenylamino ist.

Bei Q in der Bedeutung eines Phenylrestes kann es sich um unsubstituiertes oder z.B. durch $C_1$-$C_4$-Alkyl, $C_1$-$C_4$-Alkoxy, Halogen, Nitro, Cyano, $C_1$-$C_4$-Alkoxycarbonyl, $C_1$-$C_4$-Alkylsulfonyl, Sulfo oder Trihalogenmethyl substituiertes Phenyl handeln. Vorzugsweise ist hierbei der Phenylrest unsubstituiert oder durch Methyl, Isopropyl, Methoxy, Sulfo, Nitro, Chlor, Brom oder Trifluormethyl substituiert. Insbesondere bevorzugt stellt Q einen unsubstituierten Phenylrest dar.

Steht Q für Naphthyl, handelt es sich z.B. um einen unsubstituierten 1- oder 2-Naphthylrest.

Bedeuten Q einen aromatisch-heterocyclischen Rest, so kann dies z.B. ein Furanyl-, Thienyl-, Thiazolyl-, Oxazolyl-, Isothiazolyl-, Benzthiazolyl-, Benzisothiazolyl-, Pyrazolyl-, Imidazolyl-, 1,2,3-Triazolyl-, 1,2,4-Triazolyl-, 1,2,4-Thiadiazolyl, 1,3,4-Thiadiazolyl- oder 1,3,5-Triazinrest sein. Diese Reste können unsubstituiert oder z.B. durch $C_1$-$C_4$-Alkyl, Nitro, Cyano, $C_1$-$C_4$-Alkoxycarbonyl oder $C_1$-$C_4$-Alkylthio substituiert sein.

Vorzugsweise handelt es sich bei Q als aromatisch-heterocyclischem Rest um einen unsubstituierten Furanyl-, Thienyl- oder Benzthiazolylrest.

Eine besonders bevorzugte Ausführungsform der erfindungsgemässen Farbstoffe betrifft Verbindungen der Formel (1), worin Q ein Phenylrest ist.

Die Verbindungen der Formel (1) können in an sich bekannter Weise hergestellt werden, z.B. indem man eine Diazokomponente der Formel

$D\text{-}NH_2$ (10)

oder ihr Vorprodukt mit einer Verbindung der Formel

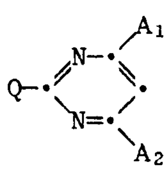

(11)

oder ihrem Vorprodukt durch Diazotierung und Kupplung zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst; hierbei gelten für D, $A_1$, $A_2$ und Q die zuvor genannten Bedeutungen und Bevorzugungen.

Die Diazotierung der Verbindungen der Formel (10) und die Kupplung mit den Verbindungen der Formel (11) erfolgen hierbei jeweils nach den üblichen Methoden.

Die Verbindungen der Formel (10), die über keinen Reaktivrest verfügen, sind bekannt oder können nach an sich bekannten Methoden hergestellt werden. Verbindungen der Formel (10), die einen Reaktivrest aufweisen, sind z.B. aus den europäischen Patentanmeldungen No. 144 766, 174 909, 208 655 oder 214 093 bekannt oder können analog dazu hergestellt werden.

Die Verbindungen der Formel (11) sind zum Teil neu; sie können hergestellt werden, z.B., indem man eine Verbindung der Formel

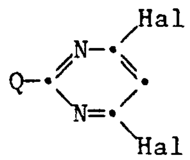

(12)

mit einem Amin der Formel

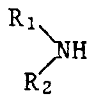

(1a*)

zur Verbindung der Formel

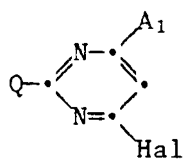

(13)

umsetzt und diese anschliessend mit einem weiteren Amin der Formel (1a*) zur Verbindung der Formel (11) umsetzt. Bei den Formeln (12), (1a*) und (13) weisen Q, $R_1$, $R_2$ und $A_1$ jeweils die zuvor angegebene Bedeutung auf und Hal steht für Halogen, z.B. für Brom und insbesondere Chlor.

Die Reaktion der Verbindungen (12) und (1a*) wird vorzugsweise in einem polaren Lösungsmittel durchgeführt, wobei z.B. $C_1$-$C_4$-Alkanole, z.B. Methanol oder Ethanol, Glykole und Glykolether wie Ethylenglykol oder Ethylenglykolmono- oder dimethylether, Formamide wie N,N-Dimethylformamid und insbesondere Wasser in Frage kommen; geeignet sind auch Gemische von mehreren Lösungsmitteln. Die Reaktionstemperatur liegt bei etwa 50 bis 150 ° C und vorzugsweise bei 60 bis 100 ° C.

Die Komponenten der Formeln (12) und (1a*) können in stöchiometrischem Verhältnis eingesetzt werden, jedoch erweist sich ein Ueberschuss der Komponente (1a*) oft als günstiger.

Die Umsetzung der Verbindungen der Formel (13) mit einem weiteren Amin der Formel (1a*) erfolgt vorzugsweise in einem der oben genannten Lösungsmittel bei einer Temperatur oberhalb von 100 ° C. Die Temperatur liegt normalerweise zwischen 120 und 250 ° C und vorzugsweise zwischen 140 und 200 ° C. Der Reaktionsschritt kann im offenen Gefäss unter Normaldruck oder, vorzugsweise, im abgeschlossenen Gefäss (Autoklav) unter Eigendruck ausgeführt werden. Die Komponenten (13) und (1a*) können in stöchiometrischen Mengen eingesetzt werden; vorzugsweise ist jedoch das Amin der Formel (1a*) in einem bis zu 5-fachen Ueberschuss, bezogen auf die Verbindung der Formel (13), anwesend.

Die den Resten $A_1$ und $A_2$ in Formel (11) zugrunde liegenden Amine der Formel (1a*) können gleich oder verschieden sein.

Sind $A_1$ und $A_2$ Reste unterschiedlicher Amine, wird man vorzugsweise den oben beschriebenen zweistufigen Weg zur Synthese der Verbindungen der Formel (11) wählen und dabei die Komponenten in etwa stöchiometrischen Mengen einsetzen; oft erweist sich jedoch ein Ueberschuss an Amin der Formel (1a*) als günstiger.

Bedeuten $A_1$ und $A_2$ jeweils den Rest eines identischen Amins, lassen sich die Verbindungen der Formel (11) vorteilhaft in einem Schritt herstellen, indem man die Verbindung der Formel (10) mit einem entsprechenden Ueberschuss an Amin der Formel (1a*) umsetzt.

Die Verbindungen der Formel (12) sind z.B. aus der EP-A 55 693 oder EP-A 96 657 bekannt oder können analog dazu hergestellt werden.

Verbindungen der Formel (1a*), die über keinen Reaktivrest verfügen, sind ebenfalls bekannt oder können auf an sich bekannte Weise hergestellt werden. Amine der Formel (1a*), die einen Reaktivrest aufweisen, sind z.B. aus den zuvor genannten EP-A-144 766, 174 909, 208 655 oder 214 093 bekannt oder

können analog dazu hergestellt werden.

Gegebenenfalls verwendet man bei der Herstellung der Verbindungen der Formel (1) anstelle der Diazokomponente der Formel (10) und/oder der Kupplungskomponente der Formel (11) entsprechende Vorprodukte und stellt den Endfarbstoff durch eine weitere Diazotierung und/oder Kupplung oder sonstige Umwandlungsreaktionen mit dem Zwischenprodukt fertig.

Eine abgewandelte Ausführungsform des Verfahrens besteht darin, zunächst einen Farbstoff herzustellen, der eine Vorstufe des Reaktivrestes enthält und diese nachträglich in die Endstufe umzuwandeln, z.B. durch Veresterung oder eine Additionsreaktion. Beispielsweise kann man einen Farbstoff, worin Z ein Rest $HO-CH_2CH_2$-ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe $H_2C=CH$- ist, und lagert an das Zwischenprodukt Thioschwefelsäure an, wobei ein Rest $HO_3SS-CH_2CH_2$-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung ähnlicher Gruppen, wie z.B. einer Thiosulfato- oder Phosphatogruppe, erfolgt in an sich bekannter Weise.

Ausserdem können Eliminierungsreaktionen an die Synthese angeschlossen werden. Beispielsweise kann man Reaktivfarbstoffe der Formel (1), welche Sulfatoethylsulfonylreste enthalten, mit halogenwasserstoffspaltenden Mitteln, wie Natriumhydroxid, behandeln, wobei die Sulfatoethylsulfonylreste in Vinylsulfonylreste übergehen.

Ein weiterer Gegenstand der Erfindung betrifft Verbindungen der zuvor angegebenen Formel (11), worin Q, $A_1$ und $A_2$ jeweils die zuvor angegebene Bedeutung haben, mit der Massgabe, dass $A_1$ und/oder $A_2$ einen Reaktivrest enthalten. Geeignete Reaktivreste sind z.B. aus den zuvor gemachten Erläuterungen ersichtlich.

Die erfindungsgemässen Farbstoffe der Formel (1) sind faserreaktiv. Unter faserreaktiven Farbstoffen sind solche zu verstehen, die mit den Hydroxylgruppen der Cellulose oer mit den reaktiven Zentren von natürlichen oder synthetischen Polyamiden unter Bildung kovalenter chemischer Bindungen zu reagieren vermögen.

Die erfindungsgemässen Reaktivfarbstoffe der Formel (1) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemässen Reaktivfarstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eins dispergierend wirkenden und die Diffusion der nicht fixierten Anteile fördernden Mittels gründlich gespült.

Die erfindungsgemässen Reaktivfarbstoffe zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in

saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit. Hervorzuheben ist insbesondere die sehr gute Chlorechtheit der erfindungsgemässen Reaktivfarbstoffe; die Verbindungen der Formel (1) zeigen darüberhinaus praktisch keinerlei Phototropie.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumteilen im Verhältnis von Kilogramm zu Liter.

Beispiel 1: Die salzsauer diazotierte Lösung von 28,1 Teilen 2-(4'-Amino-phenylsulfonyl)-ethyl-hydrogensulfat wird bei 0 bis 10 °C und pH = 6 bis 7 zu einer Lösung von 43,4 Teilen 4,6-Bis(2'-sulfatoethylamino)-2-phenylpyrimidin gegeben und gekuppelt. Der gelbe Monoazofarbstoff wird isoliert, er entspricht der Formel

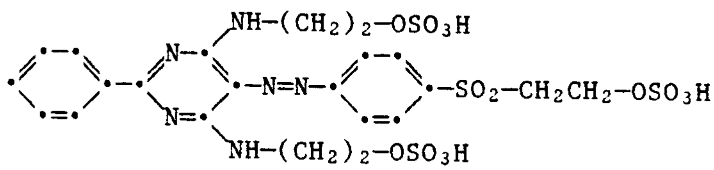

und färbt Cellulosefasern in goldgelben Farbtönen.

Beispiel 2: Der im Beispiel 1 erwähnte Farbstoff, wird bei Raumtemperatur und pH 10 30 Minuten lang vinyliert. Der pH-Wert wird mit Salzsäure auf 6,0 zurückgestellt. Der Monoazofarbstoff wird isoliert, er entspricht der Formel

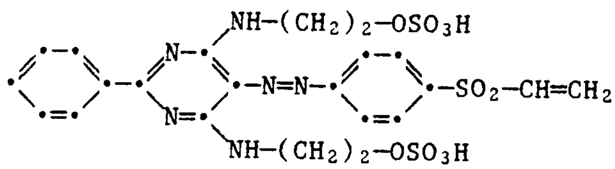

.

Beispiel 3: 33,6 g des primären Kondensationsproduktes aus 1 Mol Cyanurchlorid und 1 Mol 1,3-Diaminobenzol-4-sulfonsäure werden in 300 ml Wasser, 300 g Eis und 30 ml 30%iger Salzsäure angerührt und bei 0 bis 5 °C mit 6,9 g Natriumnitrit diazotiert. Die erhaltene kongosaure Diazoniumsuspension wird mit Natriumcarbonatlösung auf einen pH-Wert von 6,5 gestellt und hernach zu einer Lösung von 43 g 4,6-Bis(2'-sulfatoethylamino)-2-phenylpyrimidin in 900 ml Wasser und 20 g Natriumcarbonat gegeben. Nach beendeter Kupplung wird der Farbstoff durch Zugabe von Natriumchlorid abgeschieden, filtriert, mit Natriumchloridlösung gewaschen und bei 40 °C im Vakuum getrocknet. Der so erhaltene Monoazofarbstoff der Formel

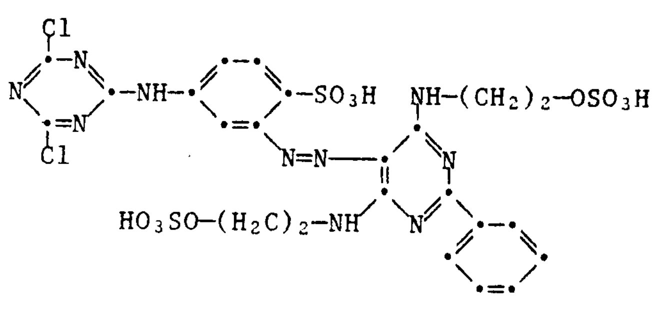

färbt Cellulosefasern in gelben Farbtönen.

Beispiel 4: 33,6 g des primären Kondensationsproduktes aus 1 Mol Cyanurchlorid und 1 Mol 1,3-Diaminobenzol-4-sulfonsäure werden in 300 ml Wasser, 300 g Eis und 30 ml 30%iger Salzsäure angerührt und bei 0 bis 5 °C mit 6,9 g Natriumnitrit diazotiert. Die erhaltene kongosaure Diazoniumsuspension wird mit Natriumcarbonatlösung auf einen pH-Wert von 6,5 gestellt und hernach zu einer Lösung von 43 g 4,6-Bis(2′-sulfatoethylamino)-2-phenylpyrimidin in 900 ml Wasser und 20 g Natriumcarbonat gegeben. Nach beendeter Kupplung gibt man 22,4 g β-(β′-Chlorethylsulfonyl)ethylamin-hydrochlorid zu und lässt die Reaktionslösung 3 Stunden lang bei Raumtemperatur und pH 7,0-7,5 kondensieren.
Durch Zugabe von Natriumchlorid wird der Farbstoff abgeschieden, filtriert, mit Natriumchloridlösung gewaschen und bei 40 ° C im Vakuum getrocknet. Der so erhaltene Monoazofarbstoff der Formel

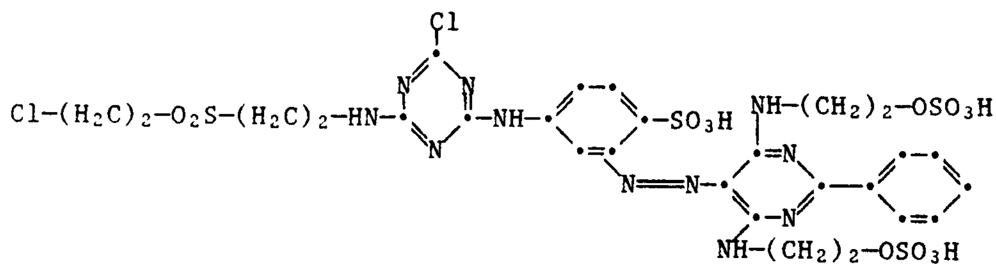

färbt Cellulosefasern in gelben Farbtönen mit sehr guten Echtheitseigenschaften.

Beispiel 5: 23 g 1-Acetylamino-3-aminobenzol-4-sulfonsäure werden in 200 ml Wasser neutral gelöst und mit 6,9 g Natriumnitrit und 30 ml 30%iger Salzsäure bei 0 bis 5 ° C diazotiert. Die erhaltenen kongosaure Diazosuspension wird mit Natriumcarbonatlösung auf einen pH-Wert von 4,5 gestellt und hernach zu einer Lösung von 34,2 g 4-Amino-6-(3′-sulfophenylamino)-2-phenylpyrimidin in 800 ml Wasser und 15 g Natriumbicarbonat gegeben. Nach beendeter Kupplung versetzt man die Farbstofflösung mit Natriumhydroxid, so dass eine 5%ige Natriumhydroxidlösung entsteht, und erwärmt auf 70 bis 80 ° C bis zur vollständigen Verseifung der Acetylaminogruppe. Man kühlt darauf die Reaktionslösung ab, neutralisiert mit konzentrierter Salzsäure und scheidet den Farbstoff durch Zugabe von Natriumchlorid vollständig aus. Nach dem Filtrieren und Waschen mit verdünnter Natriumchloridlösung löst man den so erhaltenen Aminomonoazofarbstoff in 400 ml Wasser. Zu dieser Farbstofflösung tropft man bei 70 ° C eine Lösung von 21 g 2,4,5,6-Tetrachlor-pyrimidin in 50 ml Aceton und hält den pH-Wert durch gleichzeitige Zugabe von Natriumcarbonatlösung bei 6 bis 7. Nach beendeter Kondensation wird der Farbstoff durch Zugabe von Natriumchlorid ausgefällt, filtriert und mit Natriumchloridlösung gewaschen. Nach dem Trocknen im Vakuum erhält man den Monoazofarbstoff der Formel

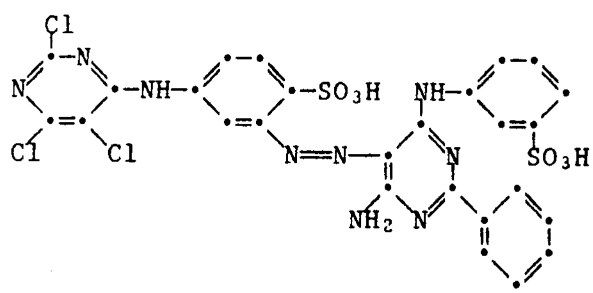

welcher Cellulosefasern in gelben Farbtönen färbt.

Beispiel 6: 35,7 g 4-Amino-6-(3′-amino-4′-sulfophenylamino)-2-phenylpyrimidin werden in 1000 ml Wasser bei einem pH-Wert von 8 gelöst, worauf man die Lösung auf 0 bis 5 ° C abkühlt. Bei dieser Temperatur tropft man innerhalb 30 Minuten eine Lösung von 24 g 2,4-Dichlorpyrimidin-5-carbonsäurechlorid in 100 ml Aceton zu und hält den pH-Wert des Reaktionsgemisches durch Zugabe von Natriumcarbonatlösung bei 7 bis 8. Sobald keine unveränderte Aminoverbindung mehr festgestellt werden kann, versetzt man die Reaktionsmischung mit 30 g Natriumbicarbonat und lässt dann eine Lösung von 17,3 g diazotierter 1-Aminobenzol-2-sulfonsäure zufliessen. Nach beendigter Kupplung wird das Reaktionsgemisch geklärt, die Reaktionslösung hernach mit Natriumchlorid versetzt, der ausgefällte Farbstoff abfiltriert und mit Natriumchloridlösung gewaschen. Nach dem Trocknen im Vakuum bei 40 ° C erhält man den Monoazofarbstoff der Formel

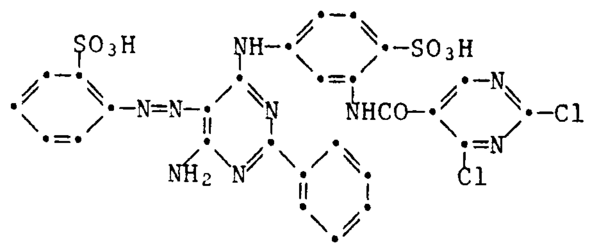

welcher Cellulosefasern in gelben Farbtönen färbt.

Beispiel 7: 54,1 g des Farbstoffes der Formel

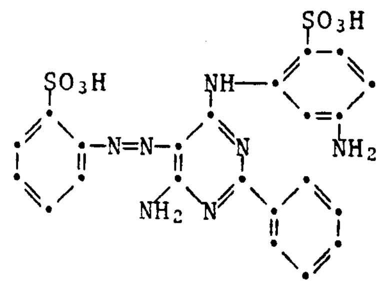

(erhalten durch Kuppeln von diazotierter 1-Aminobenzol-2-sulfonsäure mit 4-Amino-6-(3′-Amino-6′-sulfophenylamino)-2-phenylpyrimidin) werden in 1000 ml Wasser neutral gelöst. Zu dieser Farbstofflösung tropft man bei 0 bis 10 °C eine Lösung von 23 g 2,4-Dichlorpyrimidin-5-carbonsäurechlorid in 50 ml Aceton und hält den pH-Wert durch gleichzeitige Zugabe von Natriumcarbonatlösung bei 6. Man rührt das Reaktionsgemisch, bis keine diazotierbare Aminogruppen mehr nachweisbar sind, gibt bei Raumtemperatur 12,6 g Natriumsulfit hinzu und rührt, bis sich der pH-Wert nicht mehr verändert. Der neu gebildete Farbstoff wird mit Natriumchlorid ausgesalzen, abfiltriert mit Natriumchloridlösung gewaschen und bei 40 bis 50 °C im Vakuum getrocknet.

Man erhält den Monoazofarbstoff der Formel

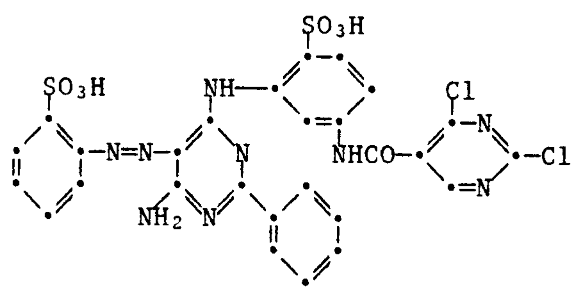

welcher Baumwolle nach den für Reaktivfarbstoffe üblichen Verfahren in nassechten gelben Tönen färbt.

Beispiel 8: 67,1 g des Aminoazofarbstoffes der Formel

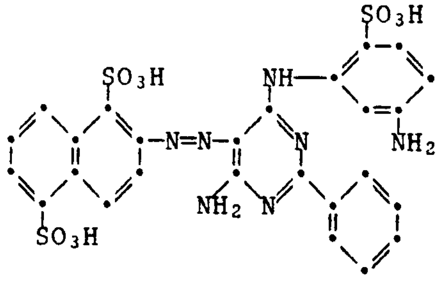

(erhalten durch Kuppeln von diazotierter 2-Naphthylamin-1,5-disulfonsäure mit 4-Amino-6-(3′-amino-6′-sulfophenylamino)-2-phenylpyrimidin werden als Natriumsalz in 1000 ml Wasser neutral gelöst. Zu dieser Farbstofflösung tropft man bei 40 °C eine Lösung von 29 g 2,3-Dichlor-chinoxalin-6-carbonsäurechlorid in 50 ml Aceton und hält den pH-Wert durch gleichzeitige Zugabe von Natriumcarbonatlösung bei 7. Nach beendeter Kondensation wird der Farbstoff durch Zugabe von Natriumchlorid ausgefällt, filtriert und mit Natriumchloridlösung gewaschen. Nach dem Trocknen im Vakuum bei 40 °C erhält man den Monoazofarbstoff der Formel

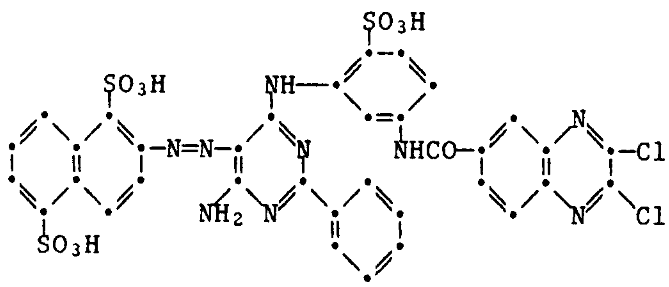

,

welcher Cellulosefasern in goldgelben Farbtönen färbt.

Beispiel 9: 38,3 g 2-Naphthylamin-1,5,7-trisulfonsäure werden in 300 ml Wasser neutral gelöst und bei 0 bis 5 °C mit 25 ml 30%iger Salzsäure und 6,9 g Natriumnitrit diazotiert. Die mit Natriumcarbonat auf einen pH-Wert von 4,5 abgestumpfte Diazoniumlösung lässt man sodann zu einer Suspension von 40,2 g 4-Cyclohexylamiono-6-(3′-nitrophenylamino)-2-phenylpyrimidin in 900 ml Wasser und 20 g Natriumbicarbonat fliessen. Nach beendeter Kupplung erhöht man den pH-Wert der Farbstofflösung auf 9 und lässt alsdann bei 70 bis 80 °C eine Lösung von 14 g Natriumsulfid in 100 ml Wasser langsam zutropfen. Man reduziert bei dieser Temperatur, bis keine Nitroverbindung mehr nachweisbar ist, versetzt die erkaltete Farbstofflösung mit 40 g Natriumbicarbonat und befreit sie vom ausgefallenen Schwefel. Der Farbstoff wird durch Zugabe von Natriumchlorid vollständig ausgefällt, filtriert, mit Natriumchloridlösung gewaschen und hernach in 700 ml Wasser erneut gelöst. Nach Zugabe von 20 g 2,4,5,6-Tetrachlorpyrimidin erwärmt man auf 80 bis 90 °C und kondensiert bei dieser Temperatur so lange, bis keine freien Aminogruppen mehr nachweisbar sind.

Der neue Farbstoff wird nach dem Abkühlen durch Zugabe von Natriumchlorid vollständig ausgefällt, filtriert, mit Natriumchloridlösung gewaschen und im Vakuum bei 60 bis 70 °C getrocknet.

Man erhält den Monoazofarbstoff der Formel

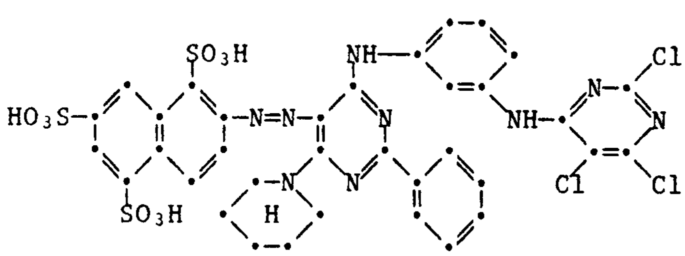

,

welcher Cellulosefasern in goldgelben Farbtönen färbt.

Beispiel 10: 68,4 g des Aminomonoazofarbstoffes der Formel

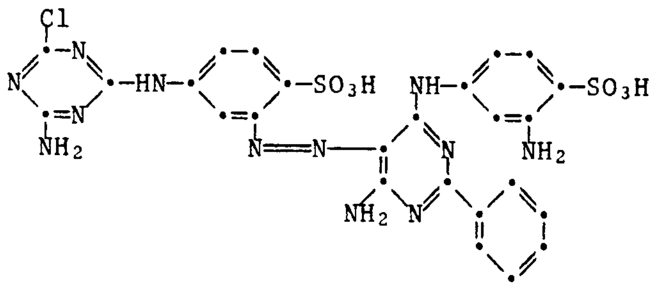

(erhalten durch Kuppeln von diazotierter 1-Amino-3-[2'-Chlor-4'-aminotriazinyl-(6')-amino]-benzol-6-sulfonsäure mit 4-Amino-6-(3'amino-4'-sulfophenylamino)-2-phenylpyrimidin) werden in 1000 ml Wasser suspendiert und bei 0 bis 10 °C mit 30 ml 30%iger Salzsäure und 6,9 g Natriumnitrit diazotiert. Die erhaltene Diazoniumsuspension lässt man sodann zu einer Lösung des Natriumsalzes von 25,4 g 1-(4'-Sulfophenyl)-3-methyl-5-pyrazolon in 200 ml Wasser und 30 g Natriumbicarbonat fliessen. Nach beendeter Kupplung wird der Farbstoff durch Zugabe von Natriumchlorid ausgefällt, abfiltriert und mit verdünnter Natriumchloridlösung gewaschen.

Nach dem Trocknen im Vakuum bei 40 °C erhält man den Bisazofarbstoff der Formel

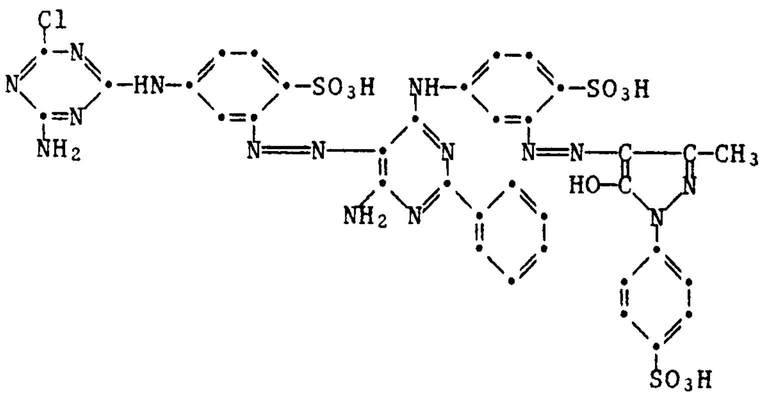

,

welcher Cellulosefasern in gelben Farbtönen färbt.

Beispiele 11-132: Analog zu den Beispielen 1-10 werden die in der folgenden Tabelle 1 aufgeführten Farbstoffe erhalten, die Baumwolle in dem jeweils angegebenen Farbton färben.

Tabelle 1

| Beispiel Nr. | | Farbton |
|---|---|---|
| 11 | 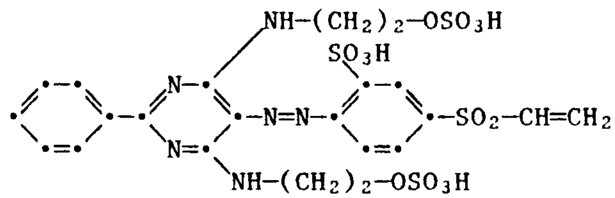 | Gelb |
| 12 | 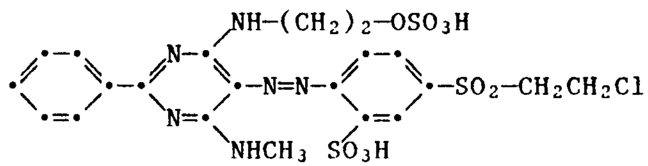 | Gelb |
| 13 | 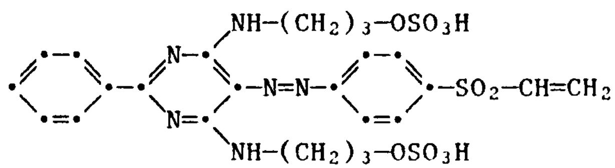 | Gelb |
| 14 | 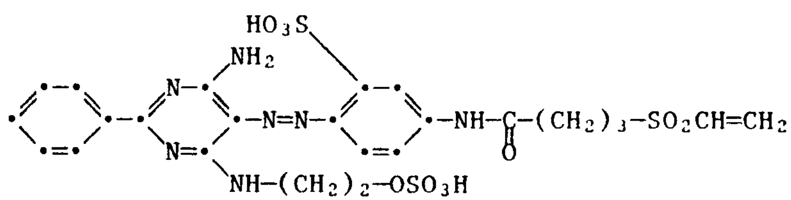 | Gelb |

| Beispiel Nr. | | Farbton |
|---|---|---|
| 15 | 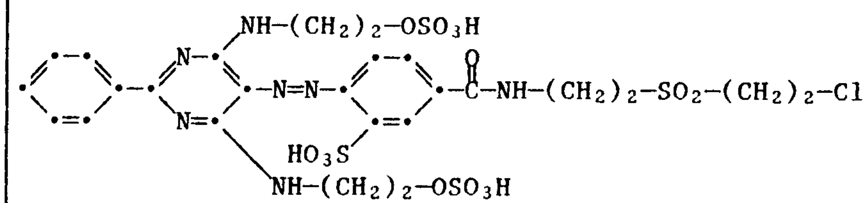 | Gelb |
| 16 | 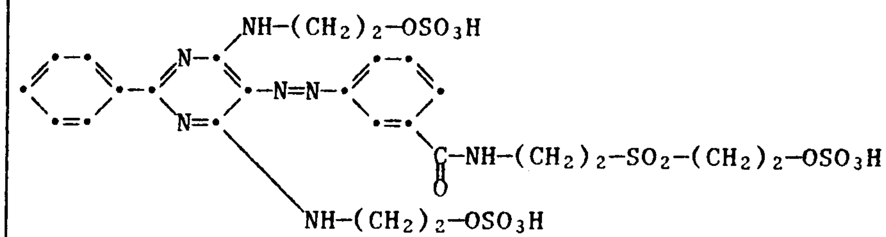 | Gelb |
| 17 | 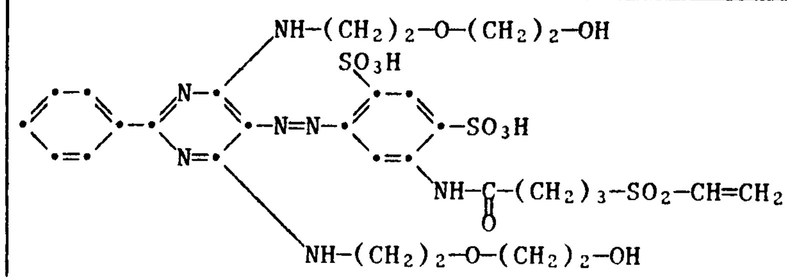 | Gelb |

| Beispiel Nr. | | Farbton |
|---|---|---|
| 18 | 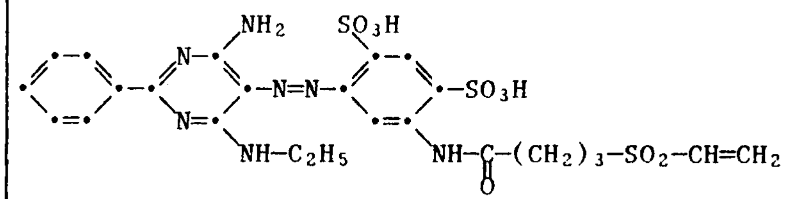 | Gelb |
| 19 | 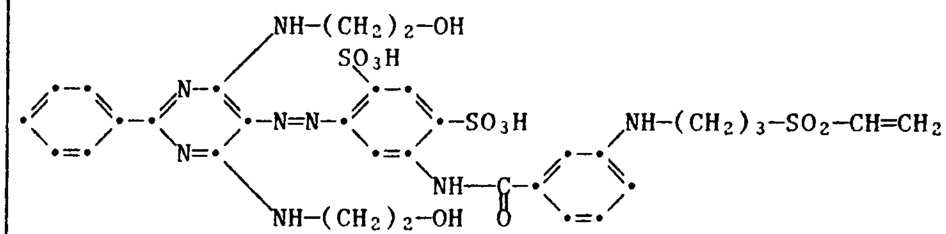 | Gelb |
| 20 | 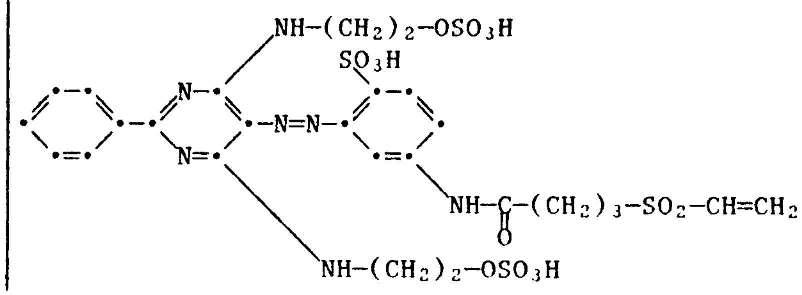 | Gelb |

| Beispiel Nr. | | Farbton |
|---|---|---|
| 21 | 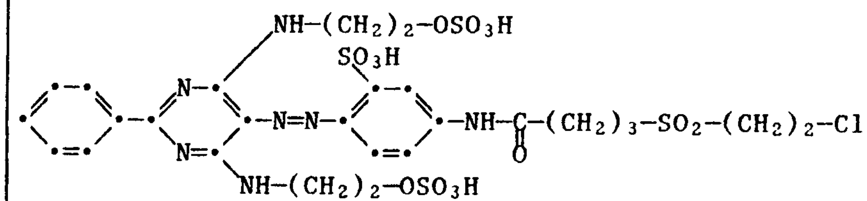 | Gelb |
| 22 | 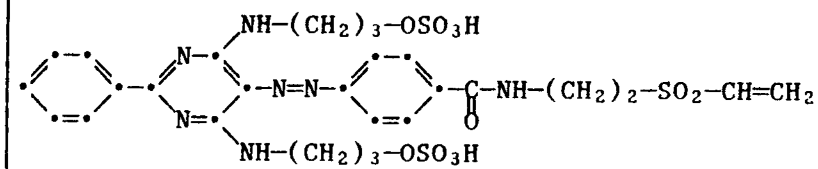 | Goldgelb |
| 23 | 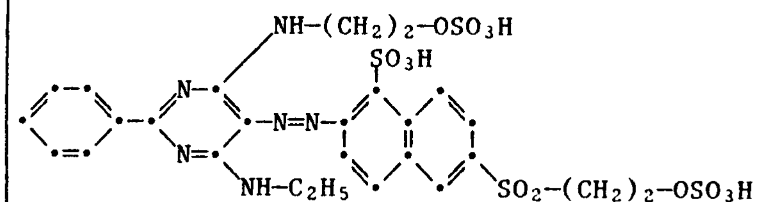 | Goldgelb |
| 24 | 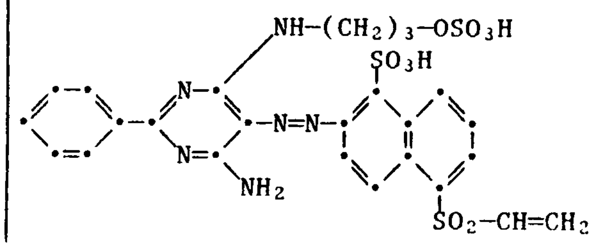 | Goldgelb |

| Beispiel Nr. | | Farbton |
|---|---|---|
| 25 | 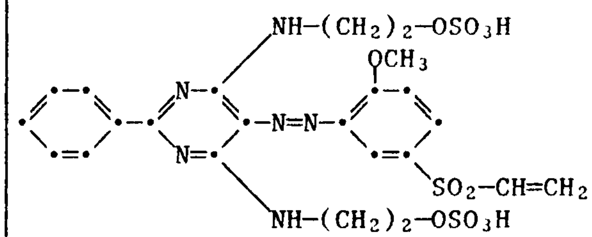 | Orange |
| 26 | 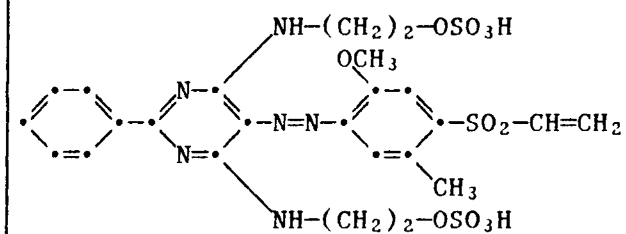 | Orange |
| 27 | 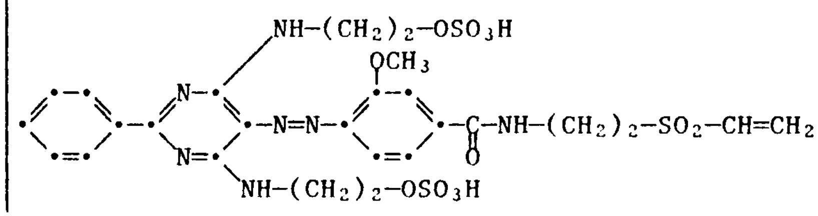 | Orange |

| Beispiel Nr. | | Farbton |
|---|---|---|
| 28 | 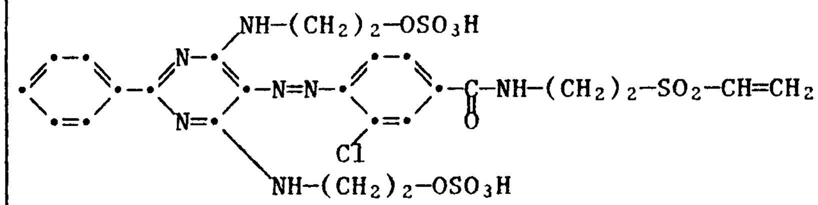 | Goldgelb |
| 29 | 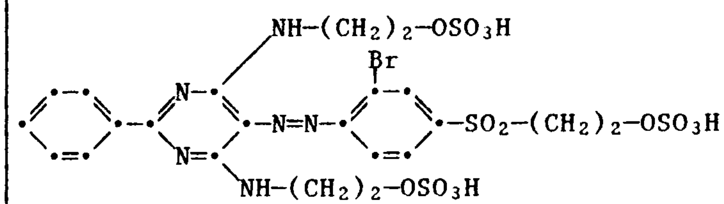 | Gelb |
| 30 | 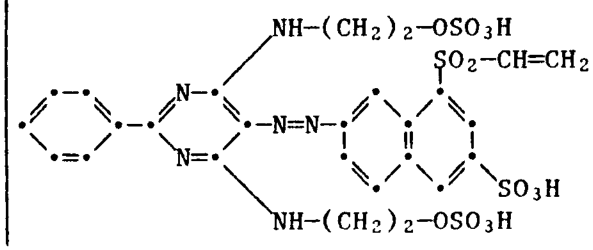 | Orange |

| Beispiel Nr. | | Farbton |
|---|---|---|
| 31 | 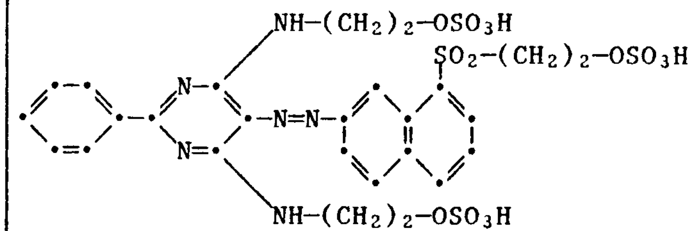 | Orange |
| 32 | 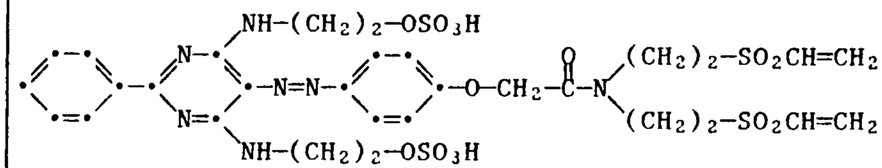 | Goldgelb |
| 33 | 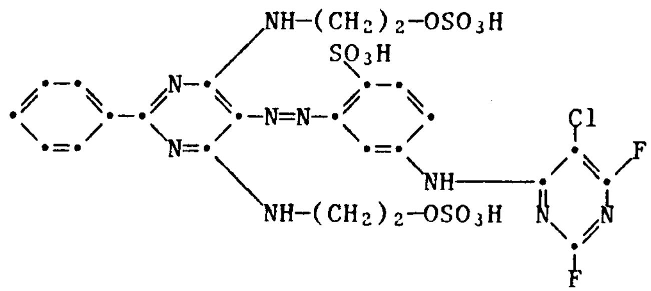 | Goldgelb |

| Beispiel Nr. | | Farbton |
|---|---|---|
| 34 | 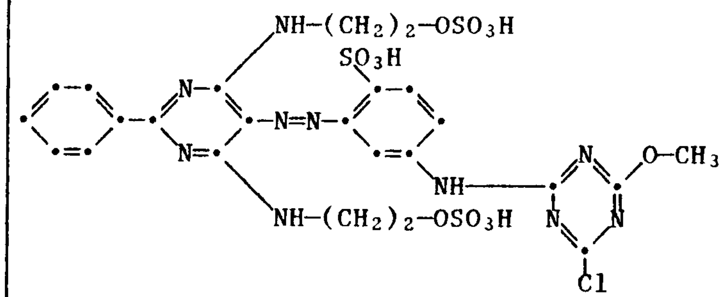 | Goldgelb |
| 35 | 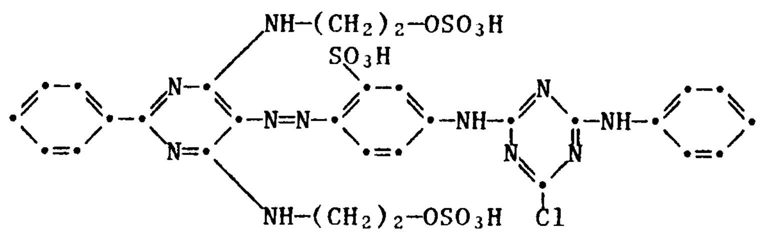 | Goldgelb |
| 36 | 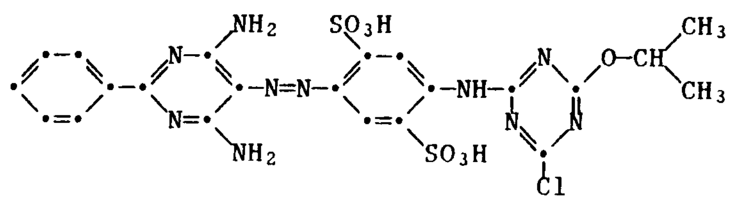 | Orange |

| Beispiel Nr. | | Farbton |
|---|---|---|
| 37 | 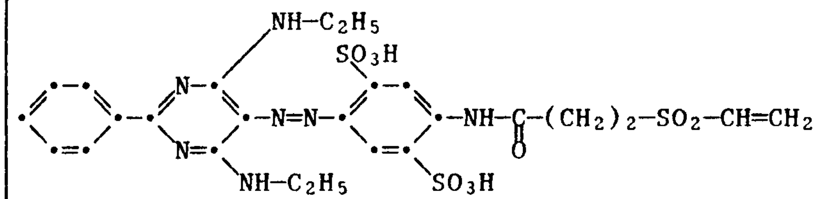 | Orange |
| 38 | 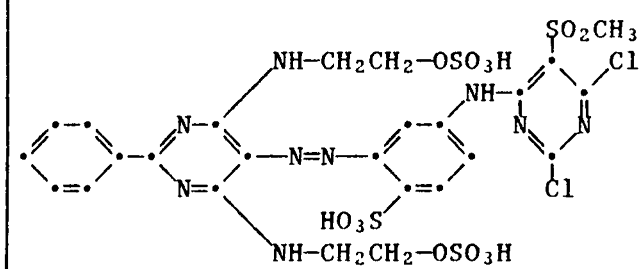 | Gelb |
| 39 | 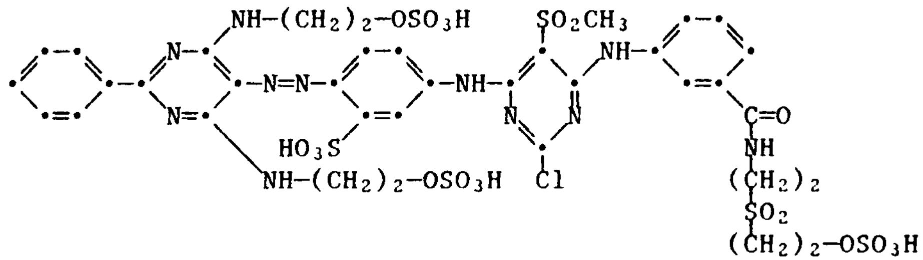 | Orange |

| Beispiel Nr. | | Farbton |
|---|---|---|
| 40 | 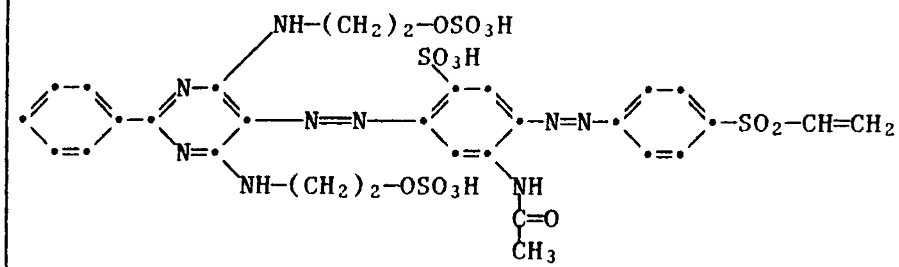 | Braun |
| 41 | 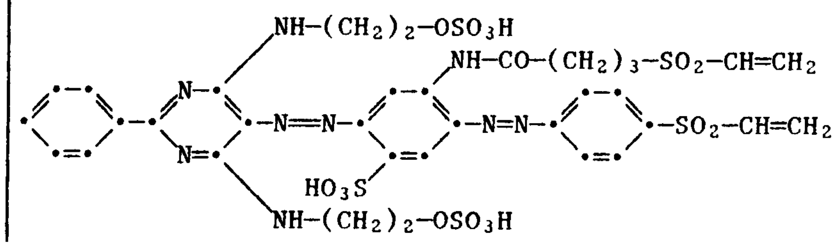 | Braun |

| Beispiel Nr. | 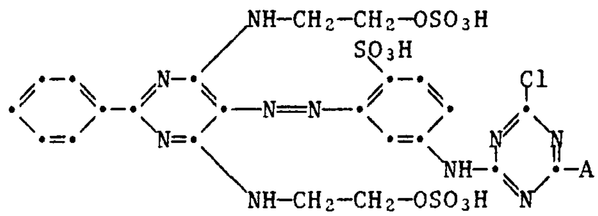 | |
|---|---|---|
| | A | Farbton |
| 42 | $-NH-(CH_2)_2-SO_2-CH=CH_2$ | Goldgelb |
| 43 | $-NH-(CH_2)_3-SO_2-CH=CH_2$ | Goldgelb |
| 44 | $-NH-(CH_2)_2-O-(CH_2)_2-SO_2-CH=CH_2$ | Goldgelb |
| 45 | 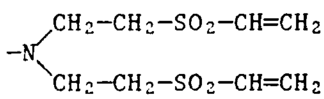 | Goldgelb |
| 46 | 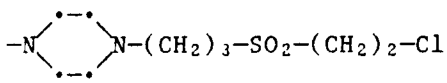 | Goldgelb |
| 47 | 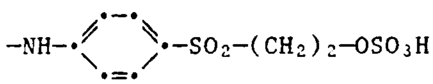 | Goldgelb |
| 48 | 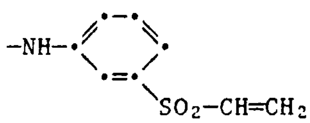 | Goldgelb |
| 49 | 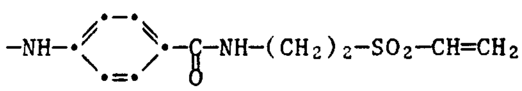 | Goldgelb |
| 50 | 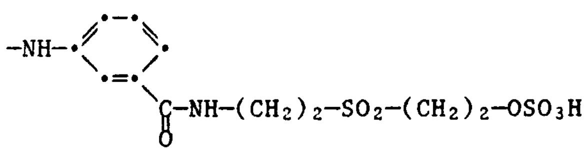 | Goldgelb |
| 51 | 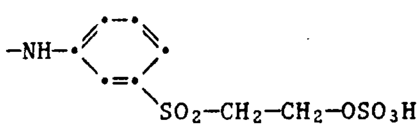 | Goldgelb |
| 52 | 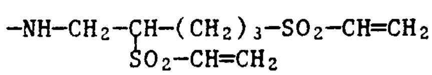 | Goldgelb |
| 53 | $-NH-(CH_2)_2-NH-(CH_2)_2-SO_2-CH=CH_2$ | Goldgelb |

| Beispiel Nr. | 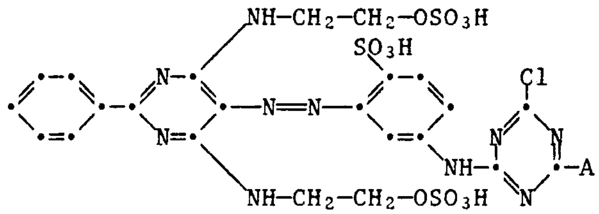 | |
|---|---|---|
| | A | Farbton |
| 54 | $CH_3$<br>$-N-(CH_2)_2-SO_2-CH=CH_2$ | Goldgelb |
| 55 | $-NH-(CH_2)_5-SO_2-CH=CH_2$ | Goldgelb |
| 56 | $(CH_2)_3-SO_2-CH=CH_2$<br>$-N$<br>$(CH_2)_3-SO_2-CH=CH_2$ | Goldgelb |
| 57 | 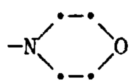 | Goldgelb |

| Beispiel Nr. | 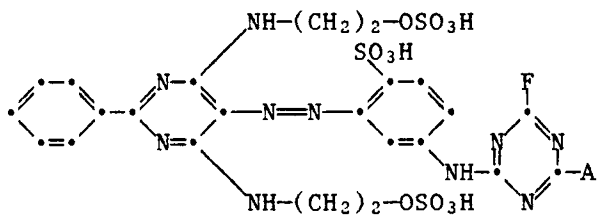 | |
|---|---|---|
| | A | Farbton |
| 58 | $-NH-(CH_2)_2-SO_2-CH=CH_2$ | Goldgelb |
| 59 | $-NH-(CH_2)_2-O-(CH_2)_2-SO_2-CH=CH_2$ | Goldgelb |
| 60 | $CH_3$<br>$-N-(CH_2)_4-SO_2-CH=CH_2$ | Goldgelb |
| 61 | $(CH_2)_2-SO_2-CH=CH_2$<br>$-N$<br>$(CH_2)_2-SO_2-CH=CH_2$ | Goldgelb |
| 62 | $-NH-CH_2-CH-(CH_2)_3-SO_2-CH=CH_2$<br>$SO_2-CH=CH_2$ | Goldgelb |
| 63 | $-NH-(CH_2)_5-SO_2-CH=CH_2$ | Goldgelb |
| 64 | $-NH-(CH_2)_2-NH-(CH_2)_2-SO_2-CH=CH_2$ | Goldgelb |

| Beispiel Nr. | 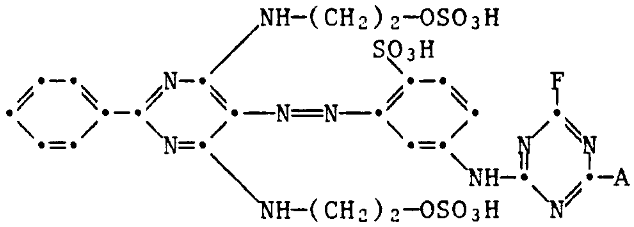<br>A | Farbton |
|---|---|---|
| 65 | 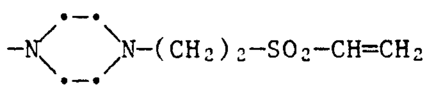 | Goldgelb |
| 66 | 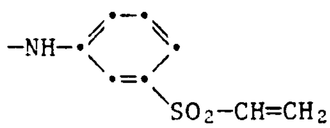 | Goldgelb |
| 67 | 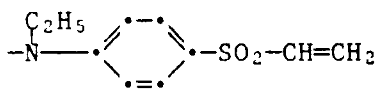 | Goldgelb |
| 68 | 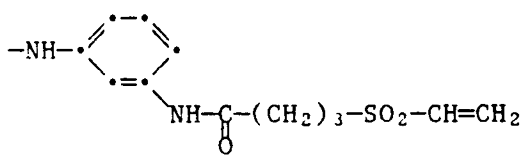 | Goldgelb |
| 69 | 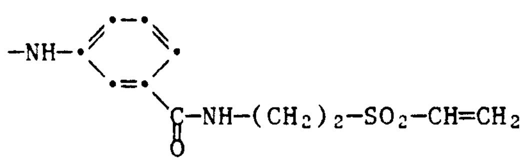 | Goldgelb |
| 70 | 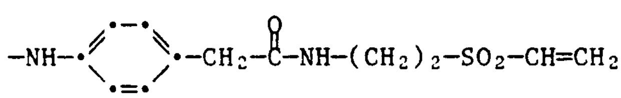 | Goldgelb |
| 71 | 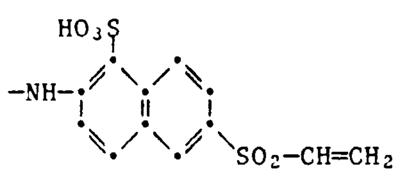 | Goldgelb |
| 72 | 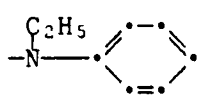 | Goldgelb |

| Bei-spiel Nr. | | Farb-ton |
|---|---|---|
| 73 | 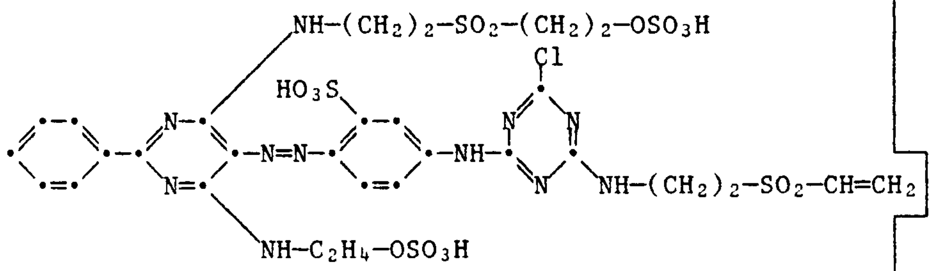 | Orange |
| 74 | 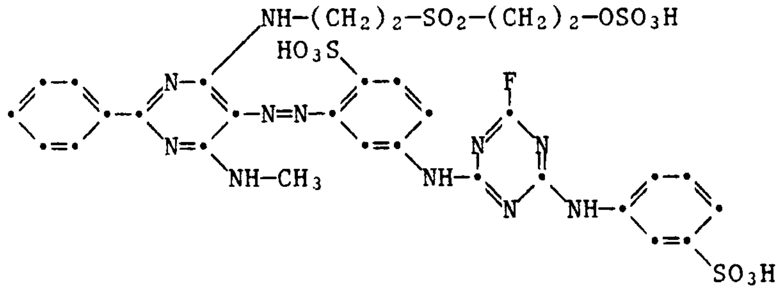 | Gold-gelb |
| 75 | 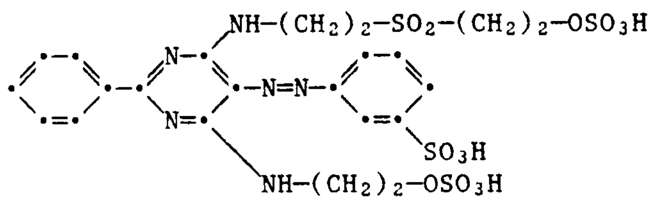 | Gelb |
| 76 | 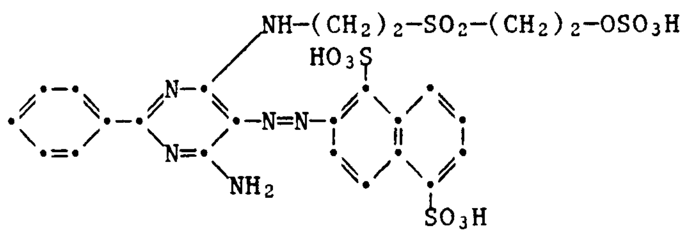 | Gold-gelb |
| 77 | 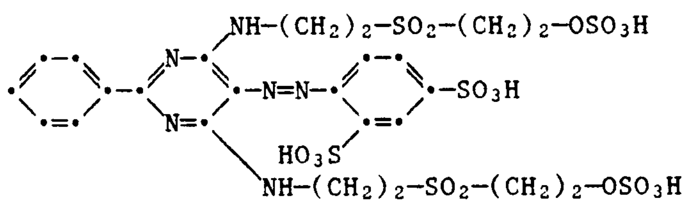 | Gelb |

| Beispiel Nr. | | Farbton |
|---|---|---|
| 78 | 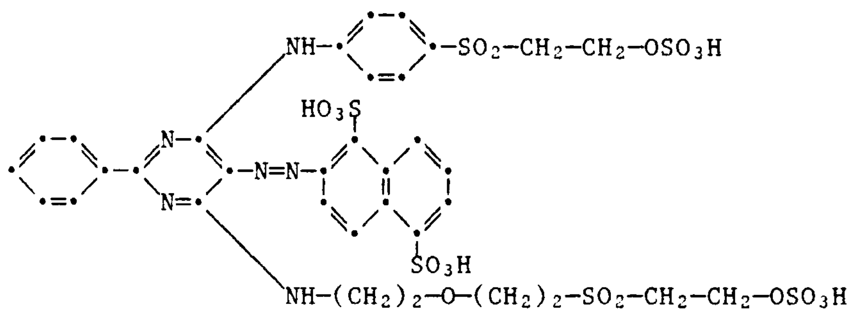 | Goldgelb |
| 79 | 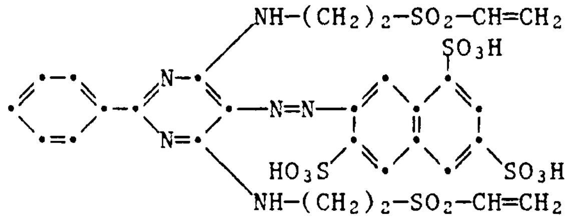 | Orange |

| Beispiel Nr. | 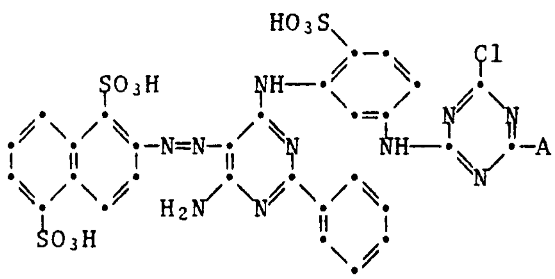 | |
|---|---|---|
| | A | Farbton |
| 80 | $-NH-CH_2-CH_2-SO_2-CH_2-CH_2-Cl$ | Goldgelb |
| 81 | 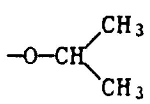 | Goldgelb |
| 82 | 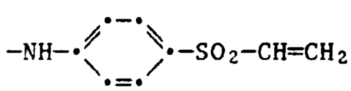 | Goldgelb |
| 83 | 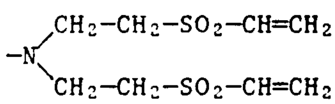 | Goldgelb |

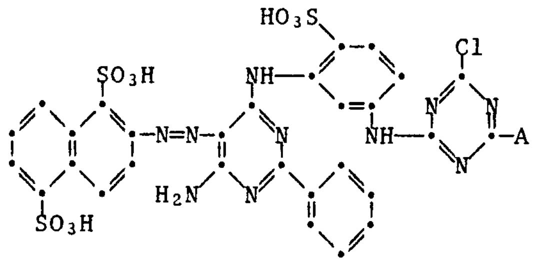

| Beispiel Nr. | A | Farbton |
|---|---|---|
| 84 | 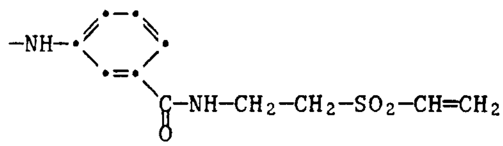 | Goldgelb |

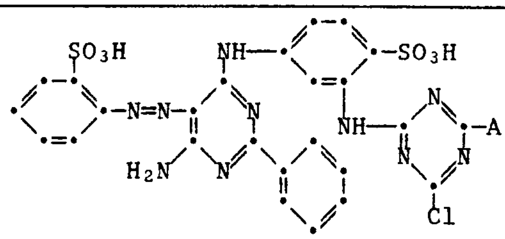

| Beispiel Nr. | A | Farbton |
|---|---|---|
| 85 | 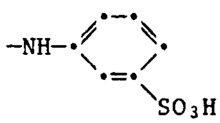 | gelb |
| 86 | $-NH-CH_2-CH_2-O-CH_2-CH_2-SO_2-CH=CH_2$ | gelb |
| 87 | $-NH-CH_2-CH-CH_2-CH_2-CH_2-SO_2-CH=CH_2$<br>$SO_2-CH=CH_2$ | gelb |
| 88 | 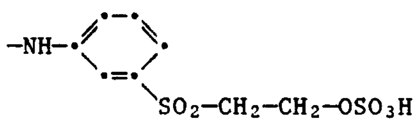 | gelb |
| 89 | 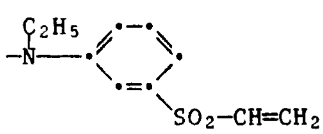 | gelb |
| 90 | 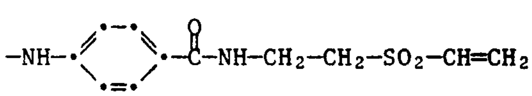 | gelb |

| Beispiel Nr. | 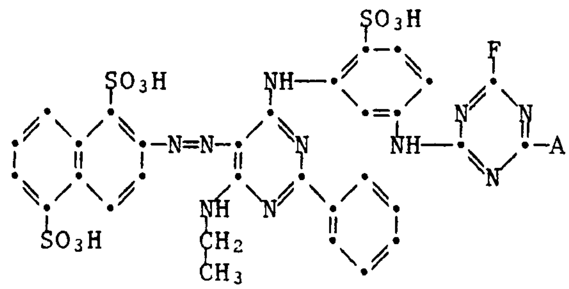 | |
|---|---|---|
| | A | Farbton |
| 91 | 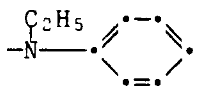 | Goldgelb |
| 92 | $-NH-(CH_2)_2-SO_2-CH=CH_2$ | Goldgelb |
| 93 | $-NH-(CH_2)_5-SO_2-CH=CH_2$ | Goldgelb |
| 94 | $-NH-(CH_2)_2-O-(CH_2)_2-SO_2-CH=CH_2$ | Goldgelb |
| 95 | 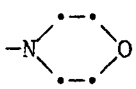 | Goldgelb |
| 96 | 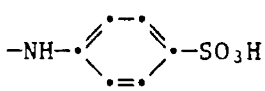 | Goldgelb |
| 97 | 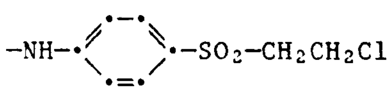 | Goldgelb |
| 98 | 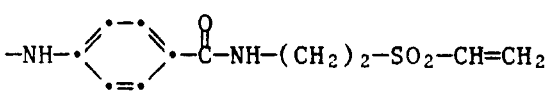 | Goldgelb |
| 99 | 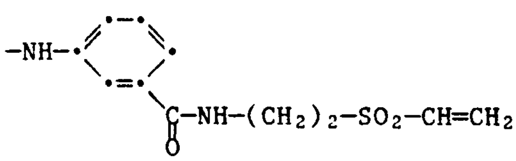 | Goldgelb |
| 100 | 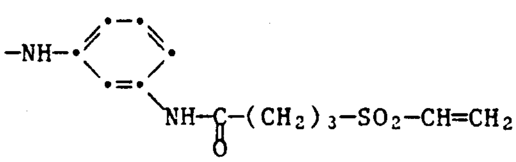 | Goldgelb |

| Beispiel Nr. | 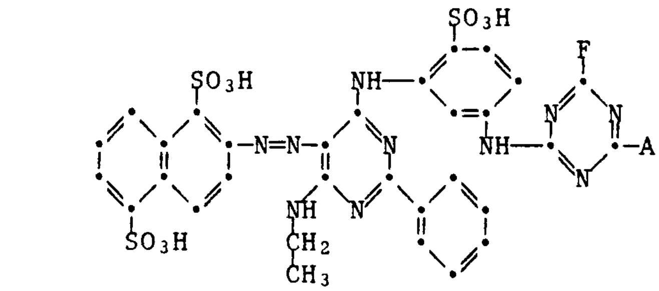 | |
|---|---|---|
| | A | Farbton |
| 101 | 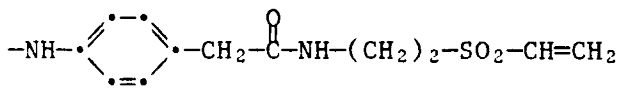 | Goldgelb |
| 102 | 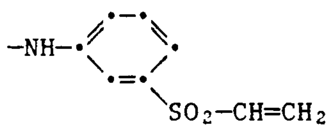 | Goldgelb |
| 103 | 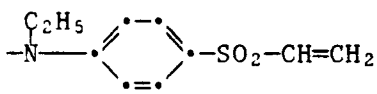 | Goldgelb |
| 104 | 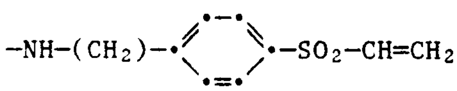 | Goldgelb |

| Beispiel Nr. | 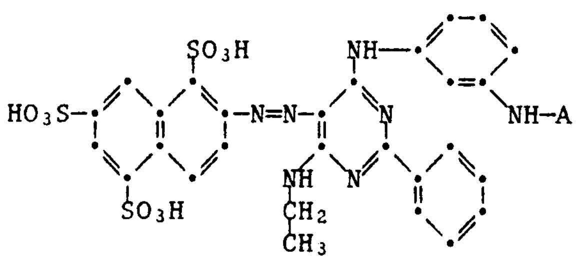 | |
|---|---|---|
| | A | Farbton |
| 105 | 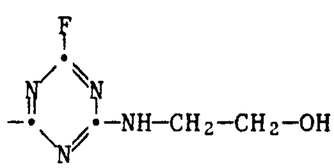 | orange |

| Beispiel Nr. | 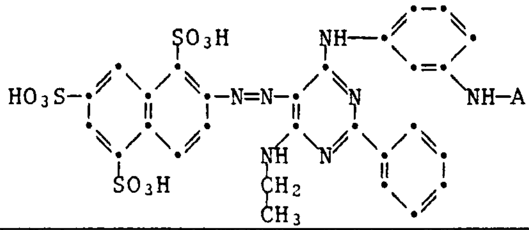 | |
|---|---|---|
| | A | Farbton |
| 106 | 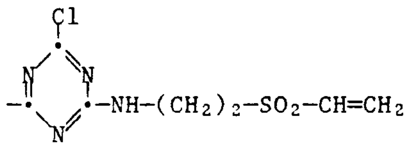 | orange |
| 107 | 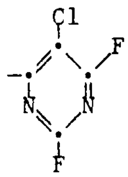 | orange |
| 108 | 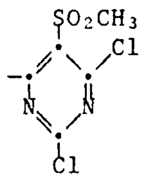 | orange |
| 109 | 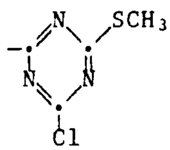 | orange |
| 110 | 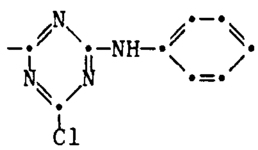 | orange |
| 111 | 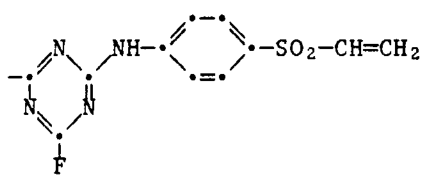 | orange |
| 112 | 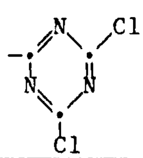 | orange |

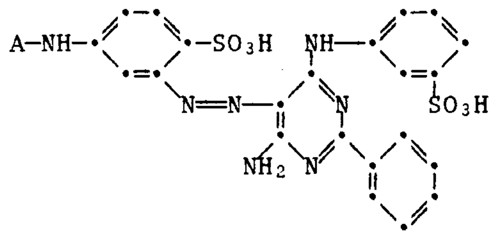

| Beispiel Nr. | A | Farbton |
| --- | --- | --- |
| 113 | 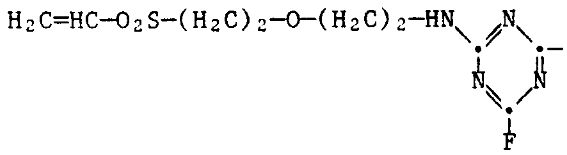 | gelb |
| 114 | 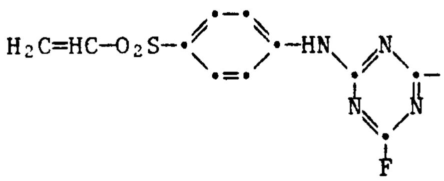 | gelb |
| 115 | 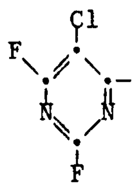 | gelb |
| 116 | 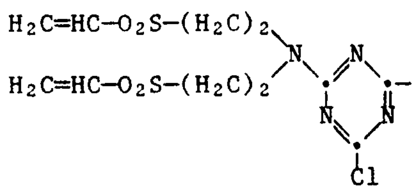 | gelb |
| 117 | 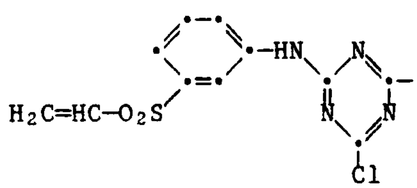 | gelb |
| 118 | 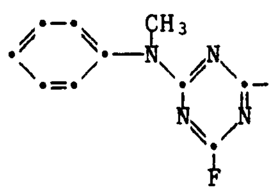 | gelb |

| Beispiel Nr. | 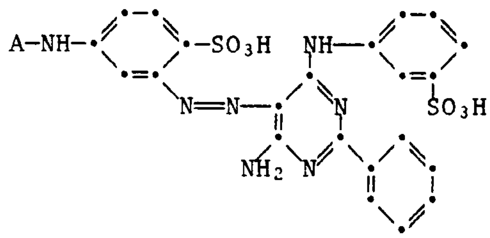 | |
|---|---|---|
| | A | Farbton |
| 119 | 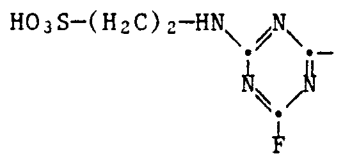 | gelb |

| Beispiel Nr. | 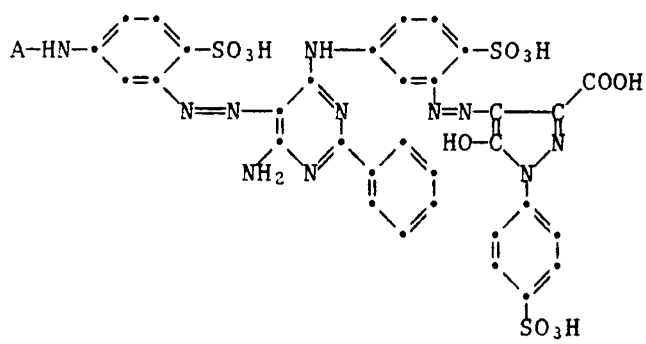 | |
|---|---|---|
| | A | Farbton |
| 120 | 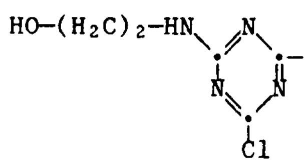 | gelb |
| 121 | 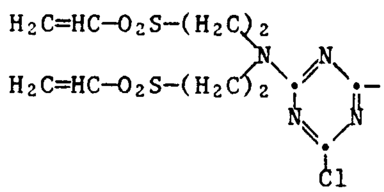 | gelb |
| 122 | 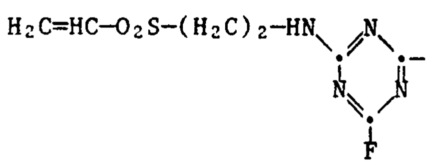 | gelb |

| Beispiel Nr. | 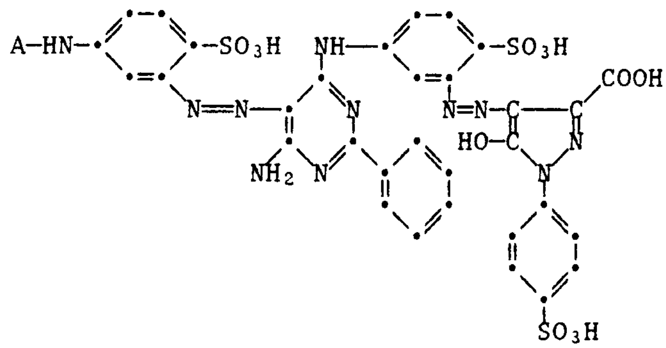 | |
|---|---|---|
| | A | Farbton |
| 123 | 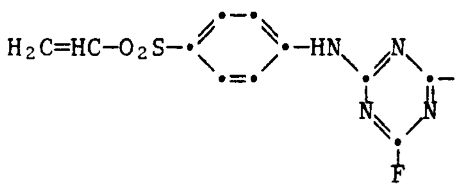 | gelb |
| 124 | 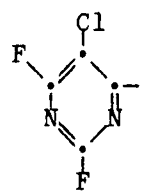 | gelb |
| 125 | 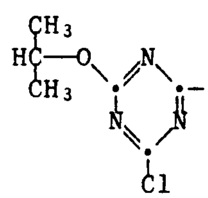 | gelb |
| 126 | 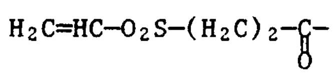 | gelb |

| Beispiel Nr. | | Farbton |
|---|---|---|
| 127 | 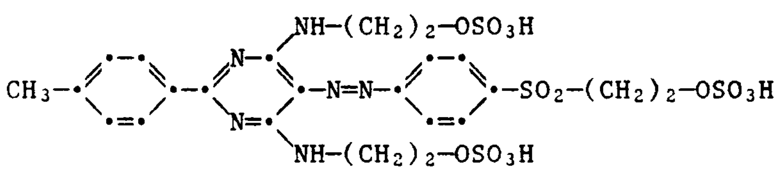 | Goldgelb |

| Bei-spiel Nr. | | Farb-ton |
|---|---|---|
| 128 | 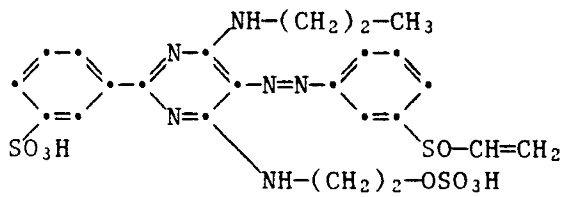 | Gold-gelb |
| 129 | 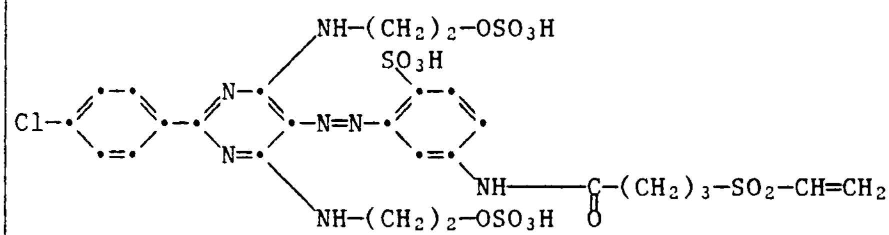 | Gold-gelb |
| 130 | 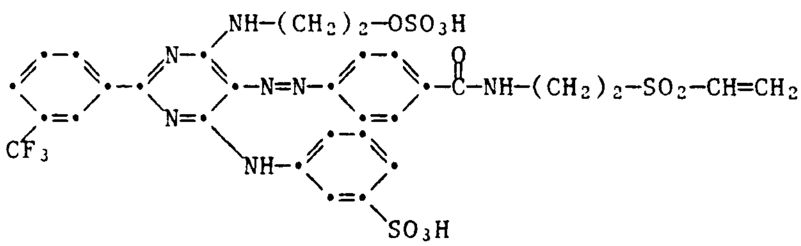 | Gold-gelb |
| 131 | 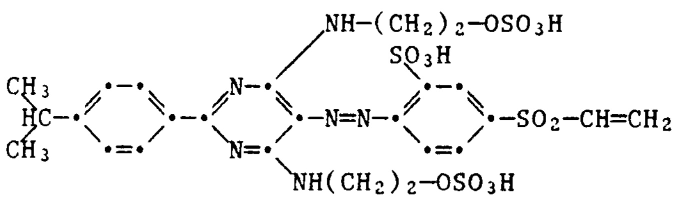 | Gold-gelb |
| 132 | 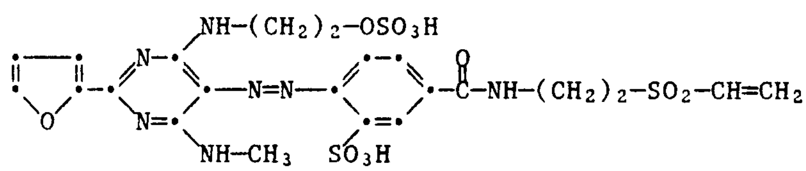 | Gold-gelb |
| 133 | 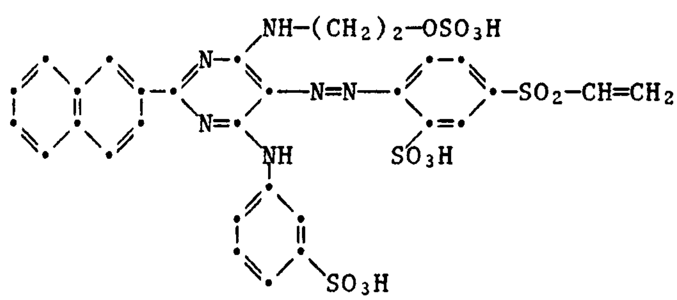 | Gold-gelb |

**Patentansprüche**

**Patentansprüche für folgende Vertragsstaaten : BE, CH, DE, FR, GB, IT, LI**

**1.** Reaktivfarbstoffe der Formel

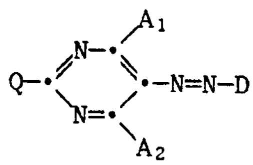 (1),

worin D der Rest einer Diazokomponente ist, Q einen gegebenenfalls substituierten Phenyl- oder Naphthylrest oder einen gegebenenfalls substituierten aromatisch-heterocyclischen Rest bedeutet und $A_1$ und $A_2$ unabhängig voneinander einen Rest der Formel

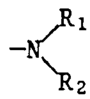 (1a),

worin $R_1$ und $R_2$ unabhängig voneinander für Wasserstoff, gegebenenfalls substituiertes $C_1$-$C_6$-Alkyl oder gegebenenfalls substituiertes Aryl stehen, bedeuten, oder $R_1$ und $R_2$ zusammen mit dem N-Atom einen gegebenenfalls weitersubstituierten heterocyclischen 5- oder 6-Ring bilden, mit der Massgabe, dass mindestens einer der Reste $A_1$, $A_2$ und D eine faserreaktive Gruppe aufweist.

**2.** Reaktivfarbstoffe gemäss Anspruch 1, dadurch gekennzeichnet, dass Q unsubstituiertes oder durch Methyl, Trifluormethyl, Methoxy, Sulfo, Nitro, Chlor oder Brom substituiertes Phenyl, 1- oder 2-Naphthyl oder Furanyl-, Thienyl- oder Benzthiazolyl ist.

**3.** Reaktivfarbstoffe gemäss Anspruch 2, dadurch gekennzeichnet, dass Q Phenyl ist.

**4.** Reaktivfarbstoffe gemäss einem der Ansprüche 1 bis 3, dadurch gekennzeichnet, dass D der Rest eines gegebenenfalls substituierten Aminobenzols, Aminonaphthalins, Phenylazo-aminobenzols, Naphthylazo-aminobenzols,Phenylazo-aminonaphthalins oder Naphthylazo-aminonaphthalins ist.

**5.** Reaktivfarbstoffe gemäss Anspruch 4, dadurch gekennzeichnet, dass D unsubstituiert oder durch $C_1$-$C_4$-Alkyl, $C_1$-$C_4$-Alkoxy, Amino, N-Mono- oder N,N-Di-$C_1$-$C_4$-Alkylamino - wobei der Alkylteil unsubstituiert oder durch -OH, $OCOCH_3$, $-SO_3H$, $-OSO_3H$, -CN oder Halogen substituiert ist -, Phenylamino, $C_1$-$C_4$-Alkanoylamino, Benzoylamino, $C_1$-$C_4$-Alkoxycarbonyl, Nitro, Cyano, Trifluormethyl, Halogen, Hydroxy, Carboxy, Sulfo, Sulfomethyl, Sulfamoyl, N-Mono-oder N,N-Di-$C_1$-$C_4$-Alkylsulfamoyl, N-Phenylsulfamoyl, Carbamoyl, N-Mono-oder N,N-Di-$C_1$-$C_4$-Alkylcarbamoyl, Ureido, $C_1$-$C_4$-Alkylsulfonyl und/oder einen Reaktivrest substituiert ist.

**6.** Reaktivfarbstoffe gemäss einem der Ansprüche 1 bis 5, dadurch gekennzeichnet, dass D durch einem Reaktivrest der Formel

$-SO_2-Z$ (2),

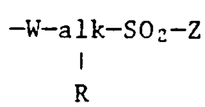 (2a),

-W-alk-E-alk'-$SO_2$-Z (2b),

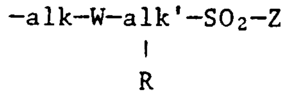
(2c),

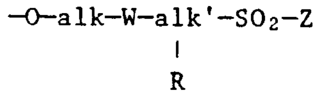
(2d),

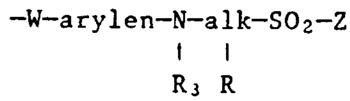
(2e),

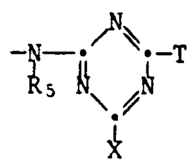
(3) oder

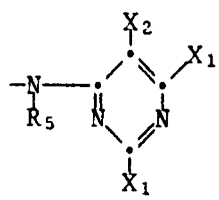
(5),

worin W eine funktionelle Gruppe, $R_3$ Wasserstoff, unsubstituiertes oder durch Hydroxy, Sulfo, Sulfato, Carboxy oder Cyano substituiertes $C_1$-$C_4$-Alkyl oder ein Rest der Formel

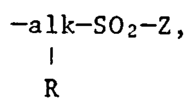

R Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder die Gruppe $-SO_2-Z$, Z $-CH=CH_2$ oder $-CH_2-CH_2-Y$, Y eine Abgangsgruppe, E -O- oder $-NR_4$, $R_4$ Wasserstoff oder $C_1$-$C_4$-Alkyl, alk und alk′ unabhängig voneinander $C_1$-$C_6$-Alkylen, arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest, $R_5$ Wasserstoff oder unsubstituiertes oder durch Carboxy, Cyano, Hydroxy, Sulfo oder Sulfato substituiertes $C_1$-$C_4$-Alkyl und X eine als Anion abspaltbare Gruppe ist, T unabhängig die Bedeutung von X hat oder eine Gruppierung enthaltend einen weiteren Reaktivrest darstellt oder für einen nicht-reaktiven Substituenten steht, einer der Reste $X_1$ unabhängig die Bedeutung von X und der andere Rest $X_1$ die Bedeutung von T hat und $X_2$ ein negativer Substituent ist, oder durch einen 2,3-Dichlorchinoxalin-6-carbonylamino- oder 2,4-Dichlorpyrimidin-5-carbonylaminorest substituiert ist.

**7.** Reaktivfarbstoffe gemäss Anspruch 6, dadurch gekennzeichnet, dass D durch einen faserreaktiven Rest der Formel (2) oder (2a) substituiert ist, worin W eine Gruppe -CONH- oder -NHCO- bedeutet, alk für einen $C_1$-$C_4$-Alkylenrest steht und Z die im Anspruch 6 angegebene Bedeutung hat.

**8.** Reaktivfarbstoffe gemäss Anspruch 6 oder 7, dadurch gekennzeichnet, dass Y eine Gruppe -Cl, $-OSO_3H$, $-SSO_3H$, $-OCO-CH_3$, $-OCO-C_6H_5$ oder $-OPO_3H_2$ ist.

**9.** Reaktivfarbstoffe gemäss einem der Ansprüche 6 oder 8, dadurch gekennzeichnet, dass D durch einen faserreaktiven Rest der Formel (3) substituiert ist, und X Fluor, Chlor, Brom, Sulfo, $C_1$-$C_4$-Alkylsulfonyl oder Phenylsulfonyl ist.

**10.** Reaktivfarbstoffe gemäss einem der Ansprüche 6, 8 oder 9, dadurch gekennzeichnet, dass T eine Gruppierung enthaltend einen Reaktivrest darstellt, die der Formel

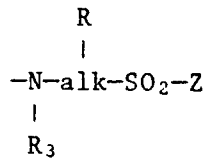
(4),

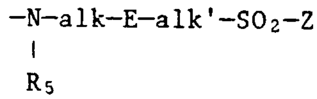
(4a),

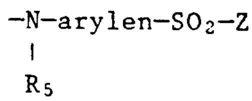
(4b)

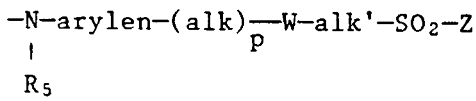
(4c) oder

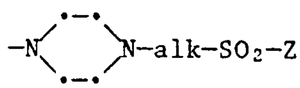
(4d),

entspricht, worin R, $R_3$, $R_5$, E, W, Z, alk, alk′ und arylen die im Anspruch 6 angegebene Bedeutung haben und p 0 oder 1 ist.

**11.** Reaktivfarbstoffe gemäss Anspruch 10, worin T eine Gruppe der Formel

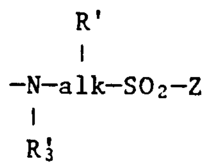
(4′),

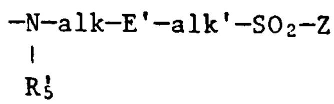
(4a′),

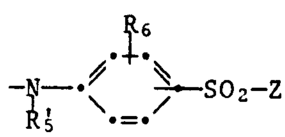
(4b′),

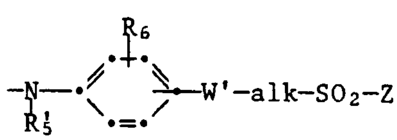
(4c′) oder

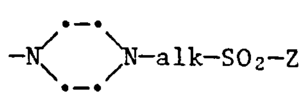
(4d),

ist, worin W′ $-COR_5'$ oder $-NR_5'$ CO-, R′ Wasserstoff oder die Gruppe $-SO_2$-Z, $R_3'$ Wasserstoff, $C_1$-$C_4$-Alkyl oder die Gruppe -alk-$SO_2$-Z, $R_5'$ Wasserstoff oder $C_1$-$C_4$-Alkyl, E′ -O- oder -NH- und $R_6$ Wasserstoff, Sulfo, Carboxy, Chlor, Methoxy oder Methyl ist, alk und alk′ unabhängig voneinander einen $C_1$-$C_4$-Alkylenrest bedeuten und Z die im Anspruch 6 angegebene Bedeutung hat.

**12.** Reaktivfarbstoffe gemäss einem der Ansprüche 6, 8 oder 9, dadurch gekennzeichnet, dass T als nichtreaktiver Substituent Amino, N-$C_1$-$C_4$-Alkylamino, das im Alkylteil unsubstituiert oder durch Hydroxy, Sulfato oder Sulfo substituiert ist, Morpholino, Phenylamino oder N-$C_1$-$C_4$-Alkyl,N-Phenylamino, worin das Phenyl jeweils unsubstituiert oder durch Sulfo, Carboxy, Methyl und/oder Methoxy substituiert ist, bedeutet.

**13.** Reaktivfarbstoffe gemäss Anspruch 6, dadurch gekennzeichnet, dass D durch einen Reaktivrest der im Anspruch 6 angegebenen Formel (5), worin $X_1$ Chlor oder Fluor und $X_2$ Chlor, Cyano, Formyl oder Methylsulfonyl bedeuten, substituiert ist.

**14.** Reaktivfarbstoffe gemäss einem der Ansprüche 1 bis 6, dadurch gekennzeichnet, dass D der Rest eines unsubstituierten oder durch Sulfo, Acetylamino, Methyl, Methoxy, Chlor oder Brom substituierten Aminobenzols oder Aminonaphthalins ist, der durch einen Reaktivrest der im Anspruch 6 angegebenen Formeln (2), (2a) oder (3) weitersubstituiert ist.

**15.** Reaktivfarbstoffe gemäss einem der Ansprüche 1 bis 5, dadurch gekennzeichnet, dass D der Rest eines unsubstituierten oder durch Sulfo, Carboxy, $C_1$-$C_4$-Alkoxy, $C_1$-$C_4$-Alkyl, $C_1$-$C_4$-Alkanoylamino und/oder Halogen substituierten Aminobenzols oder Aminonaphthalins ist.

**16.** Reaktivfarbstoffe gemäss einem der Ansprüche 1 bis 15, dadurch gekennzeichnet, dass $R_1$ und $R_2$ unabhängig voneinander Wasserstoff, einen unsubstituierten oder durch Hydroxy, Sulfo, Sulfato, Carboxy, Cyano, Halogen, $C_1$-$C_4$-Alkoxycarbonyl, $C_1$-$C_4$-Alkanoyloxy, Carbamoyl und/oder einen Reaktivrest substituierten $C_1$-$C_6$-Alkylrest, wobei das Alkyl mit Ausnahme von Methyl gegebenenfalls durch -O- oder -$NR_4$-unterbrochen ist und $R_4$ die im Anspruch 6 angegebene Bedeutung hat, oder einen unsubstituierten oder durch Sulfo, Carboxy, $C_1$-$C_4$-Alkyl, $C_1$-$C_4$-Alkoxy, Halogen, einen Reaktivrest und/oder eine Gruppe -N=N-K, worin K der Rest einer Kupplungskomponente der Benzol- oder Naphthalinreihe oder der heterocyclischen Reihe ist, substituierten Phenyl- oder Naphthylrest bedeuten oder $R_1$ und $R_2$ zusammen mit dem N-Atom einen Piperidinyl-, Piperazinyl- oder Pyrrolidinylrest, der unsubstituiert oder durch einen Rest der Formel

$$-(\text{alk})_{p}-SO_2-Z,$$

worin alk, p und Z die im Anspruch 10 angegebene Bedeutung haben, substituiert ist, bilden.

**17.** Reaktivfarbstoffe gemäss Anspruch 16, dadurch gekennzeichnet, dass es sich bei dem Reaktivrest am Phenyl- oder Naphthylrest $R_1$ oder $R_2$ um einen Rest der im Anspruch 6 angegebenen Formeln (2), (2a), (3) oder (5) oder um den 2,3-Dichlorchinoxalin-6-carbonylamino- oder 2,4-Dichlorpyrimidin-5-carbonylaminorest und bei dem Reaktivrest am $C_1$-$C_6$-Alkylrest $R_1$ oder $R_2$ um die Gruppe -$SO_2$-Z handelt.

**18.** Reaktivfarbstoffe gemäss einem der Ansprüche 1 bis 17, dadurch gekennzeichnet, dass $A_1$ und/oder $A_2$ eine Gruppe der im Anspruch 11 angegebenen Formeln (4b′) oder (4c′) oder eine Gruppe der Formel

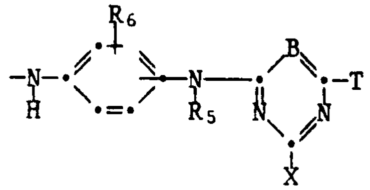

(3a),

worin $R_5$, X und T die im Anspruch 6 angegebene Bedeutung haben, $R_6$ Wasserstoff, Sulfo, chlor, Methoxy oder Carboxy bedeutet und B eine Gruppe

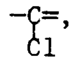, 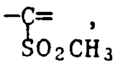, 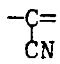

oder -N= ist, darstellen.

**19.** Reaktivfarbstoffe gemäss einem der Ansprüche 1 bis 17, dadurch gekennzeichnet, dass $A_1$ und/oder $A_2$ einen Rest der im Anspruch 1 angegebenen Formel (1a) bedeuten, worin $R_1$ und $R_2$ unabhängig voneinander Wasserstoff oder einen unsubstituierten oder durch Hydroxy, Sulfo, Sulfato, Carboxy, Cyano oder die Gruppe $-SO_2-Z$ substituierten und/oder durch -O- unterbrochenen $C_1$-$C_4$-Alkylrest bedeuten, wobei Z die im Anspruch 6 angegebene Bedeutung hat.

**20.** Reaktivfarbstoffe gemäss Anspruch 19, dadurch gekennzeichnet, dass einer der Reste $R_1$ oder $R_2$ Wasserstoff bedeutet.

**21.** Reaktivfarbstoffe gemäss einem der Ansprüche 1 bis 20, dadurch gekennzeichnet, dass $A_1$ ein Rest der in den Ansprüchen 1 oder 11 angegebenen Formel (1a), (4′) oder (4a′), worin $R_1$ Wasserstoff und $R_2$ Wasserstoff oder unsubstituiertes oder durch Hydroxy, Sulfo oder Sulfato substituiertes $C_1$-$C_4$-Alkyl sind, R′, $R_3'$ und $R_5'$ jeweils Wasserstoff bedeuten, E′ für -O- steht, und alk, alk′ und Z jeweils die im Anspruch 11 angegebene Bedeutung haben, ist und $A_2$ unabhängig die Bedeutung von $A_1$ hat oder unsubstituiertes oder durch Sulfo, Chlor, Methoxy, Carboxy oder einen Rest der im Anspruch 6 angegebenen Formel (2), (2a) oder (3) substituiertes Phenylamino ist.

**22.** Reaktivfarbstoffe der Formel (1) gemäss Anspruch 1, worin $A_1$ und $A_2$ unabhängig voneinander Amino, N-$C_1$-$C_4$-Alkylamino, worin das Alkyl unsubstituiert oder durch Hydroxy, Sulfato oder Sulfo substituiert ist, oder Phenylamino, worin das Phenyl unsubstituiert oder durch Sulfo, Carboxy, Methyl, Methoxy, Chlor und/oder durch einen Rest der Formel

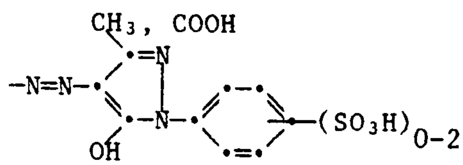 (8')

substituiert ist, bedeuten, D der Rest eines Aminobenzols oder Aminonaphthalins, welcher unsubstituiert oder durch Sulfo, Acetylamino, Methyl, Methoxy, Chlor oder Brom substituiert ist und darüberhinaus eine Reaktivrest der im Anspruch 6 angegebenen Formeln (2), (2a) oder (3) trägt, ist und Q für einen unsubstituierten oder durch Methyl, Trifluormethyl, Methoxy, Sulfo, Nitro, Chlor oder Brom substituierten Phenylrest, einen 1- oder 2-Naphthylrest oder einen Furanyl- Thienyl- oder Benzthiazolylrest steht.

**23.** Reaktivfarbstoffe der Formel (1) gemäss Anspruch 1, dadurch gekennzeichnet, dass $A_1$ ein Rest der in den Ansprüchen 1 oder 11 angegebenen Formel (1a), (4′) oder (4a′) ist, worin $R_1$ Wasserstoff und $R_2$ Wasserstoff oder unsubstituiertes oder durch Hydroxy, Sulfo oder Sulfato substituiertes $C_1$-$C_4$-Alkyl sind, R′, $R_3'$ und $R_5'$ jeweils Wasserstoff bedeuten, E′ für -O- steht, und alk, alk′ und Z jeweils die im Anspruch 11 angegebene Bedeutung haben, $A_2$ unabhängig die Bedeutung von $A_1$ hat oder unsubstituiertes oder durch Sulfo, Chlor, Methoxy, Carboxy oder einen Rest der im Anspruch 6 angegebenen Formel (2), (2a) oder (3) substituiertes Phenylamino ist, Q ein unsubstituierter oder durch Methyl, Trifluormethyl, Methoxy, Sulfo, Nitro, Chlor oder Brom substituierter Phenylrest, ein 1- oder 2-Naphthylrest oder ein Furanyl-, Thienyl- oder Benzthiazolylrest und D der Rest eines Aminobenzols oder Aminonaphthalins, der unsubstituiert oder durch Sulfo, Carboxy, $C_1$-$C_4$-Alkoxy, $C_1$-$C_4$-Alkyl, $C_1$-$C_4$-Alkanoylamino oder Halogen substituiert ist und gegebenenfalls ferner einen Reaktivrest der im Anspruch 6 angegebenen Formel (2), (2a) oder (3) trägt, ist.

**24.** Verfahren zur Herstellung von Verbindung der Formel (1), dadurch gekennzeichnet, dass man eine Diazokomponente der Formel

$D\text{-}NH_2$ (10)

oder ihr Vorprodukt mit einer Verbindung der Formel

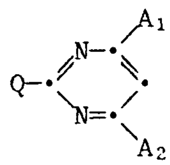

(11)

oder ihrem Vorprodukt durch Diazotierung und Kupplung zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst, wobei D, $A_1$, $A_2$ und Q die im Anspruch 1 genannte Bedeutung haben.

**25.** Verwendung der Reaktivfarbstoffe gemäss Anspruch 1 zum Färben und Bedrucken von cellulosehaltigen Fasermaterialien.

**26.** Verwendung gemäss Anspruch 25 zum Färben und Bedrucken von Baumwolle.

**27.** Verbindungen der Formel

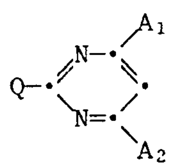

(11)

worin Q, $A_1$ und $A_2$ die im Anspruch 1 angegebene Bedeutung haben, mit der Massgabe, dass $A_1$ und/oder $A_2$ einen faserreaktiven Rest enthalten.

**28.** Verfahren zur Herstellung von Verbindungen der Formel (11), dadurch gekennzeichnet, dass man eine Verbindung der Formel

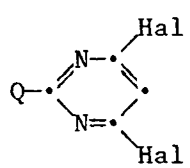

(12)

mit einem Amin der Formel

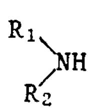

(1a*)

zur Verbindung der Formel

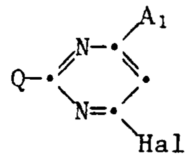

(13)

umsetzt und diese anschliessend mit einem weiteren Amin der Formel (1a*) zur Verbindung der Formel (11) umsetzt, wobei Q, $R_1$, $R_2$ und $A_1$ jeweils die im Anspruch 1 angegebene Bedeutung haben und Hal für Halogen, z.B. für Brom und insbesondere für Chlor, steht.

**Patentansprüche für folgenden Vertragsstaat : ES**

**1.** Verfahren zur Herstellung von Verbindungen der Formel

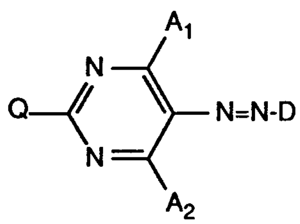

**(1),**

worin D der Rest einer Diazokomponente ist, Q einen gegebenenfalls substituierten Phenyl- oder Naphthylrest oder einen gegebenenfalls substituierten aromatisch-heterocyclischen Rest bedeutet und $A_1$ und $A_2$ unabhängig voneinander einen Rest der Formel

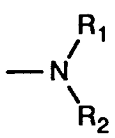

**(1a),**

worin $R_1$ und $R_2$ unabhängig voneinander für Wasserstoff, gegebenenfalls substituiertes $C_1$-$C_6$-Alkyl oder gegebenenfalls substituiertes Aryl stehen, bedeuten, oder $R_1$ und $R_2$ zusammen mit dem N-Atom einen gegebenenfalls weitersubstituierten heterocyclischen 5- oder 6-Ring bilden, mit der Massgabe, dass mindestens einer der Reste $A_1$, $A_2$ und D eine faserreaktive Gruppe aufweist,
dadurch gekennzeichnet,
dass man eine Diazokomponente der Formel

$D\text{-}NH_2$ (10)

oder ihr Vorprodukt mit einer Verbindung der Formel

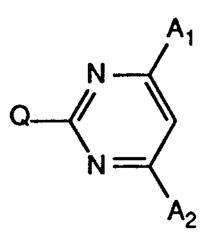

**(11)**

oder ihrem Vorprodukt durch Diazotierung und Kupplung zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst, wobei D, $A_1$, $A_2$ und Q die oben genannte Bedeutung haben.

**2.** Verfahren zur Herstellung gemäss Anspruch 1 von Verbindungen der Formel (1), wobei Q unsubstituiertes oder durch Methyl, Trifluormethyl, Methoxy, Sulfo, Nitro, Chlor oder Brom substituiertes Phenyl, 1- oder 2-Naphthyl, Furanyl, Thienyl oder Benzthiazolyl ist.

**3.** Verfahren zur Herstellung gemäss Anspruch 2 von Verbindungen der Formel (1), wobei Q Phenyl ist.

**4.** Verfahren zur Herstellung gemäss einem der Ansprüche 1 bis 3 von Verbindungen der Formel (1), wobei D der Rest eines gegebenenfalls substituierten Aminobenzols, Aminonaphthalins, Phenylazo-aminobenzols, Naphthyl-azo-aminobenzols, Phenylazo-aminonaphthalins oder Naphthylazo-aminonaphthalins ist.

**5.** Verfahren zur Herstellung gemäss Anspruch 4 von Verbindungen der Formel (1), wobei D unsubstituiert oder durch $C_1$-$C_4$-Alkyl, $C_1$-$C_4$-Alkoxy, Amino, N-Mono- oder N,N-Di-$C_1$-$C_4$-Alkylamino - wobei der Alkylteil unsubstituiert oder durch -OH, $-OCOCH_3$, $-SO_3H$, $-OSO_3H$, -CN oder Halogen substituiert ist -, Phenylamino, $C_1$-$C_4$-Alkanoylamino, Benzoylamino, $C_1$-$C_4$-Alkoxycarbonyl, Nitro, Cyano, Trifluormethyl, Halogen, Hydroxy, Carboxy, Sulfo, Sulfomethyl, Sulfamoyl, N-Mono-oder N,N-Di-$C_1$-$C_4$-Alkylsulfamoyl, N-Phenylsulfamoyl, Carbamoyl, N-Mono- oder N,N-Di-$C_1$-$C_4$-Alkylcarbamoyl, Ureido, $C_1$-$C_4$-Alkylsulfonyl und/oder einen Reaktivrest substituiert ist.

**6.** Verfahren zur Herstellung gemäss einem der Ansprüche 1 bis 5 von Verbindungen der Formel (1), wobei D durch einen Reaktivrest der Formel

$-SO_2-Z$ (2),

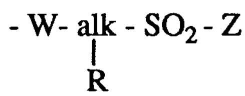

(2a)

$-W-alk-E-alk'-SO_2-Z$ (2b),

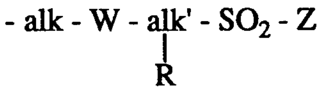

(2c),

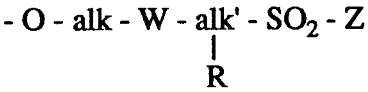

(2d)

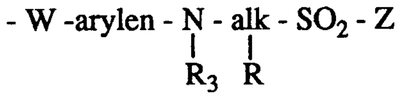

(2e),

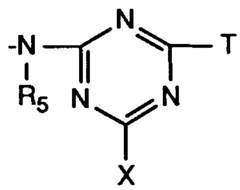

(3),

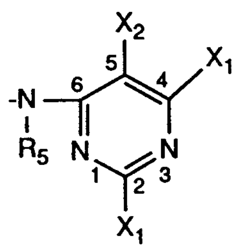

(5)

worin W eine funktionelle Gruppe, $R_3$ Wasserstoff, unsubstituiertes oder durch Hydroxy, Sulfo, Sulfato, Carboxy oder Cyano substituiertes $C_1$-$C_4$-Alkyl oder ein Rest der Formel

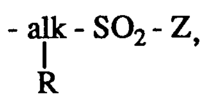

R Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder die Gruppe $-SO_2$-Z, Z $-CH=CH_2$ oder $-CH_2$-$CH_2$-Y, Y eine Abgangsgruppe, E -O- oder $-NR_4$, $R_4$ Wasserstoff oder $C_1$-$C_4$-Alkyl, alk und alk' unabhängig voneinander $C_1$-$C_6$-Alkylen, arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest, $R_5$ Wasserstoff oder unsubstituiertes oder durch Carboxy, Cyano, Hydroxy, Sulfo oder Sulfato substituiertes $C_1$-$C_4$-Alkyl und X eine als Anion abspaltbare Gruppe ist, T unabhängig die Bedeutung von X hat oder eine Gruppierung enthaltend einen weiteren Reaktivrest darstellt oder für einen nicht-reaktiven Substituenten steht, einer der Reste $X_1$ unabhängig die Bedeutung von X und der andere Rest $X_1$ die Bedeutung von T hat und $X_2$ ein negativer Substituent ist, oder durch einen 2,3-Dichlorchinoxalin-6-carbonylamino- oder 2,4-Dichlorpyrimidin-5-carbonylaminorest substituiert ist.

7. Verfahren zur Herstellung gemäss Anspruch 6 von Verbindungen der Formel (1), wobei D durch einen faserreaktiven Rest der Formel (2) oder (2a) substituiert ist, worin W eine Gruppe -CONH- oder -NHCO-bedeutet, alk für einen $C_1$-$C_4$-Alkylenrest steht und Z die im Anspruch 6 angegebene Bedeutung hat.

8. Verfahren zur Herstellung gemäss Anspruch 6 oder 7 von Verbindungen der Formel (1), wobei Y eine Gruppe -Cl, $-OSO_3H$, $-SSO_3H$, $-OCO-CH_3$, $-OCO-C_6H_5$ oder $-OPO_3H_2$ ist.

9. Verfahren zur Herstellung gemäss einem der Ansprüche 6 oder 8 von Verbindungen der Formel (1), wobei D durch einen faserreaktiven Rest der Formel (3) substituiert ist, und X Fluor, Chlor, Brom, Sulfo, $C_1$-$C_4$-Alkylsulfonyl oder Phenylsulfonyl ist.

10. Verfahren zur Herstellung gemäss einem der Ansprüche 6, 8 oder 9 von Verbindungen der Formel (1), wobei T eine Gruppierung enthaltend einen Reaktivrest darstellt, die der Formel

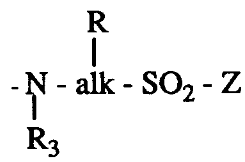
(4),

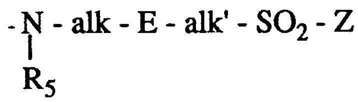
(4a),

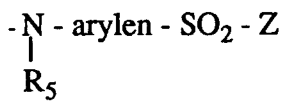
(4b),

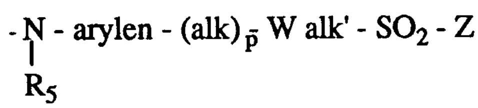
(4c) oder

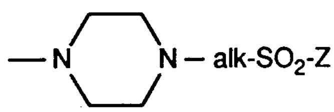
(4d),

entspricht, worin R, $R_3$, $R_5$, E, W, Z, alk, alk' und arylen die im Anspruch 6 angegebene Bedeutung haben und p 0 oder 1 ist.

11. Verfahren zur Herstellung gemäss Anspruch 10 von Verbindungen der Formel (1), wobei T eine Gruppe der Formel

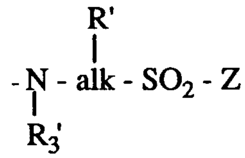

(4'),

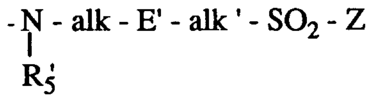

(4a'),

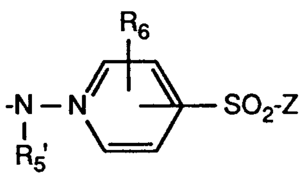

(4b'),

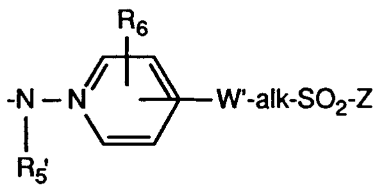

(4c') oder

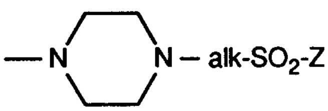

(4d),

ist, worin W' -COR$_5$' oder -NR$_5$'CO-, R' Wasserstoff oder die Gruppe -SO$_2$-Z, R$_3$' Wasserstoff, $C_1$-$C_4$-Alkyl oder die Gruppe -alk-SO$_2$-Z, R$_5$' Wasserstoff oder $C_1$-$C_4$-Alkyl, E' -O- oder -NH- und R$_6$ Wasserstoff, Sulfo, Carboxy, Chlor, Methoxy oder Methyl ist, alk und alk' unabhängig voneinander einen $C_1$-$C_4$-Alkylenrest bedeuten und Z die im Anspruch 6 angegebene Bedeutung hat.

**12.** Verfahren zur Herstellung gemäss einem der Ansprüche 6, 8 oder 9 von Verbindungen der Formel (1), wobei T als nichtreaktiver Substituent Amino, N-$C_1$-$C_4$-Alkylamino, das im Alkylteil unsubstituiert oder durch Hydroxy, Sulfato oder Sulfo substituiert ist, Morpholino, Phenyl- amino oder N-$C_1$-$C_4$-Alkyl, N-Phenylamino, worin das Phenyl jeweils unsubstituiert oder durch Sulfo, Carboxy, Methyl und/oder Methoxy substituiert ist, bedeutet.

**13.** Verfahren zur Herstellung gemäss Anspruch 6 von Verbindungen der Formel (1), wobei D durch einen Reaktivrest der im Anspruch 6 angegebenen Formel (5), worin $X_1$ Chlor oder Fluor und $X_2$ Chlor, Cyano, Formyl oder Methylsulfonyl bedeuten, substituiert ist.

**14.** Verfahren zur Herstellung gemäss einem der Ansprüche 1 bis 6 von Verbindungen der Formel (1), wobei D der Rest eines unsubstituierten oder durch Sulfo, Acetylamino, Methyl, Methoxy, Chlor oder Brom substituierten Aminobenzols oder Aminonaphthalins ist, der durch einen Reaktivrest der im Anspruch 6 angegebenen Formeln (2), (2a) oder (3) weitersubstituiert ist.

**15.** Verfahren zur Herstellung gemäss einem der Ansprüche 1 bis 5 von Verbindungen der Formel (1), wobei D der Rest eines unsubstituierten oder durch Sulfo, Carboxy, $C_1$-$C_4$-Alkoxy, $C_1$-$C_4$-Alkyl, $C_1$-$C_4$-Alkanoylamino und/oder Halogen substituierten Aminobenzols oder Aminonaphthalins ist.

**16.** Verfahren zur Herstellung gemäss einem der Ansprüche 1 bis 15 von Verbindungen der Formel (1), wobei $R_1$ und $R_2$ unabhängig voneinander Wasserstoff, einen unsubstituierten oder durch Hydroxy, Sulfo, Sulfato, Carboxy, Cyano, Halogen, $C_1$-$C_4$-Alkoxycarbonyl, $C_1$-$C_4$-Alkanoyloxy, Carbamoyl und/oder einen Reaktivrest substituierten $C_1$-$C_6$-Alkylrest, wobei das Alkyl mit Ausnahme von Methyl gegebenenfalls durch -O- oder -NR$_4$- unterbrochen ist und $R_4$ die im Anspruch 6 angegebene

Bedeutung hat, oder einen unsubstituierten oder durch Sulfo, Carboxy, $C_1$-$C_4$-Alkyl, $C_1$-$C_4$-Alkoxy, Halogen, einen Reaktivrest und/oder eine Gruppe -N=N-K, worin K der Rest einer Kupplungskomponente der Benzol- oder Naphthalinreihe oder der heterocyclischen Reihe ist, substituierten Phenyl- oder Naphthylrest bedeuten oder $R_1$ und $R_2$ zusammen mit dem N-Atom einen Piperidinyl-, Piperazinyl- oder Pyrrolidinylrest, der unsubstituiert oder durch einen Rest der Formel $-(alk)_p-SO_2-Z$, worin alk, p und Z die im Anspruch 10 angegebene Bedeutung haben, substituiert ist, bilden.

**17.** Verfahren zur Herstellung gemäss Anspruch 16 von Verbindungen der Formel (1), wobei es sich bei dem Reaktivrest am Phenyl- oder Naphthylrest $R_1$ oder $R_2$ um einen Rest der im Anspruch 6 angegebenen Formeln (2), (2a), (3) oder (5) oder um den 2,3-Dichlorchinoxalin-6-carbonylamino- oder 2,4-Dichlorpyrimidin-5-carbonylaminorest und bei dem Reaktivrest am $C_1$-$C_6$-Alkylrest $R_1$ oder $R_2$ um die Gruppe $-SO_2-Z$ handelt.

**18.** Verfahren zur Herstellung gemäss einem der Ansprüche 1 bis 17 von Verbindungen der Formel (1), wobei $A_1$ und/oder $A_2$ eine Gruppe der im Anspruch 11 angegebenen Formeln (4b') oder (4c') oder eine Gruppe der Formel

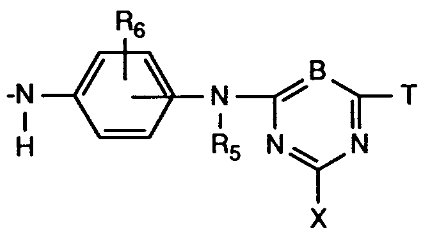

(3a),

worin $R_5$, X und T die im Anspruch 6 angegebene Bedeutung haben, $R_6$ Wasserstoff, Sulfo, Chlor, Methoxy oder Carboxy bedeutet und B eine Gruppe

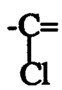 , 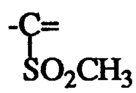 , 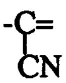

oder -N= ist, darstellen.

**19.** Verfahren zur Herstellung gemäss einem der Ansprüche 1 bis 17 von Verbindungen der Formel (1), wobei $A_1$ und/oder $A_2$ einen Rest der im Anspruch 1 angegebenen Formel (1a) bedeuten, worin $R_1$ und $R_2$ unabhängig voneinander Wasserstoff oder einen unsubstituierten oder durch Hydroxy, Sulfo, Sulfato, Carboxy, Cyano oder die Gruppe $-SO_2-Z$ substituierten und/oder durch -O- unterbrochenen $C_1$-$C_4$-Alkylrest bedeuten, wobei Z die im Anspruch 6 angegebene Bedeutung hat.

**20.** Verfahren zur Herstellung gemäss Anspruch 19 von Verbindungen der Formel (1), wobei einer der Reste $R_1$ oder $R_2$ Wasserstoff bedeutet.

**21.** Verfahren zur Herstellung gemäss einem der Ansprüche 1 bis 20 von Verbindungen der Formel (1), wobei $A_1$ ein Rest der in den Ansprüchen 1 oder 11 angegebenen Formel (1a), (4') oder (4a'), worin $R_1$ Wasserstoff und $R_2$ Wasserstoff oder unsubstituiertes oder durch Hydroxy, Sulfo oder Sulfato substituiertes $C_1$-$C_4$-Alkyl sind, R', $R_3$' und $R_5$' jeweils Wasserstoff bedeuten, E' für -O- steht, und alk, alk' und Z jeweils die im Anspruch 11 angegebene Bedeutung haben, ist und $A_2$ unabhängig die Bedeutung von $A_1$ hat oder unsubstituiertes oder durch Sulfo, Chlor, Methoxy, Carboxy oder einen Rest der im Anspruch 6 angegebenen Formel (2), (2a) oder (3) substituiertes Phenylamino ist.

**22.** Verfahren zur Herstellung der Formel (1) gemäss Anspruch 1 von Verbindungen der Formel (1), wobei $A_1$ und $A_2$ unabhängig voneinander Amino, N-$C_1$-$C_4$-Alkylamino, worin das Alkyl unsubstituiert oder durch Hydroxy, Sulfato oder Sulfo substituiert ist, oder Phenylamino, worin das Phenyl unsubstituiert oder durch Sulfo, Carboxy, Methyl, Methoxy, Chlor und/oder durch einen Rest der Formel

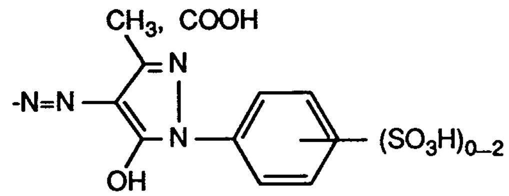

(8')

substituiert ist, bedeuten, D der Rest eines Aminobenzols oder Aminonaphthalins, welcher unsubstituiert oder durch Sulfo, Acetylamino, Methyl, Methoxy, Chlor oder Brom substituiert ist und darüberhinaus einen Reaktivrest der im Anspruch 6 angegebenen Formeln (2), (2a) oder (3) tragt, ist und Q für einen unsubstituierten oder durch Methyl, Trifluormethyl, Methoxy, Nitro, Chlor oder Brom substituierten Phenylrest, einen 1- oder 2-Naphthylrest oder einen Furanyl-, Thienyl- oder Benzthiazolylrest steht.

**23.** Verfahren zur Herstellung der Formel (1) gemäss Anspruch 1 von Verbindungen der Formel (1), wobei $A_1$ ein Rest der in den Ansprüchen 1 oder 11 angegebenen Formel (1a), (4') oder (4a') ist, worin $R_1$ Wasserstoff und $R_2$ Wasserstoff oder unsubstituiertes oder durch Hydroxy, Sulfo oder Sulfato substituiertes $C_1$-$C_4$-Alkyl sind, R', $R_3$' und $R_5$' jeweils Wasserstoff bedeuten, E' für -O- steht, und alk, alk' und Z jeweils die im Anspruch 11 angegebene Bedeutung haben, $A_2$ unabhängig die Bedeutung von $A_1$ hat oder unsubstituiertes oder durch Sulfo, Chlor, Methoxy, Carboxy oder einen Rest der im Anspruch 6 angegebenen Formel (2), (2a) oder (3) substituiertes Phenylamino ist, Q ein unsubstituierter oder durch Methyl, Trifluormethyl, Methoxy, Sulfo, Nitro, Chlor oder Brom substituierter Phenylrest, ein 1- oder 2-Naphthylrest oder ein Furanyl-, Thienyl- oder Benzthiazolylrest, und D der Rest eines Aminobenzols oder Aminonaphthalins, der unsubstituiert oder durch Sulfo, Carboxy, $C_1$-$C_4$-Alkoxy, $C_1$-$C_4$-Alkyl, $C_1$-$C_4$-Alkanoylamino oder Halogen substituiert ist und gegebenenfalls ferner einen Reaktivrest der im Anspruch 6 angegebenen Formel (2), (2a) oder (3) trägt, ist.

**24.** Verwendung der gemäss Anspruch 1 erhältlichen Reaktivfarbstoffe zum Färben und Bedrucken von cellulosehaltigen Fasermaterialien.

**25.** Verwendung gemäss Anspruch 24 zum Färben und Bedrucken von Baumwolle.

**26.** Verfahren zur Herstellung von Verbindungen der Formel

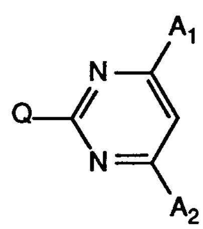

(11)

worin Q, $A_1$ und $A_2$ die im Anspruch 1 angegebene Bedeutung haben, mit der Massgabe, dass $A_1$ und/oder $A_2$ einen faserreaktiven Rest enthalten,
dadurch gekennzeichnet,
dass man eine Verbindung der Formel

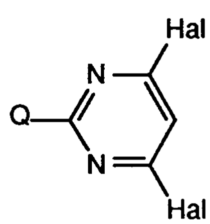

(12)

mit einem Amin der Formel

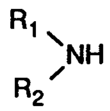

(1a*)

zur Verbindung der Formel

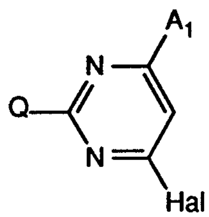

(13)

umsetzt und diese anschliessend mit einem weiteren Amin der Formel (1a*) zur Verbindung der Formel (11) umsetzt, wobei Q, $R_1$, $R_2$ und $A_1$ jeweils die im Anspruch 1 angegebene Bedeutung haben und Hal für Halogen, z.B. für Brom und insbesondere für Chlor, steht.

**Claims**

**Claims for the following Contracting States : BE, CH, DE, FR, GB, IT, LI**

**1.** A reactive dye of the formula

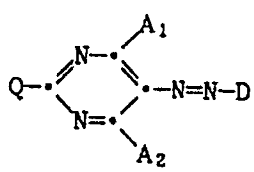

(1),

in which D is the radical of a diazo component, Q is a substituted or unsubstituted phenyl or naphthyl radical or a substituted or unsubstituted aromatic heterocyclic radical and $A_1$ and $A_2$ independently of one another are a radical of the formula

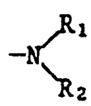

(1a),

in which $R_1$ and $R_2$ independently of one another are hydrogen, substituted or unsubstituted $C_1$-$C_6$alkyl or substituted or unsubstituted aryl, or $R_1$ and $R_2$ together with the nitrogen atom form a further substituted or unsubstituted heterocyclic 5- or 6-ring, with the proviso that at least one of the radicals $A_1$, $A_2$ and D has a fibre-reactive group.

**2.** A reactive dye according to claim 1, wherein Q is phenyl unsubstituted or substituted by methyl, trifluoromethyl, methoxy, sulfo, nitro, chlorine or bromine, or is 1- or 2-naphthyl or furyl, thienyl or benzothiazolyl.

**3.** A reactive dye according to claim 2, wherein Q is phenyl.

**4.** A reactive dye according to any one of claims 1 to 3, wherein D is the radical of a substituted or unsubstituted aminobenzene, aminonaphthalene, phenylazoaminobenzene, naphthylazoaminobenzene, phenylazoaminonaphthalene or naphthylazoaminonaphthalene.

**5.** A reactive dye according to claim 4, wherein D is unsubstituted or substituted by $C_1$-$C_4$alkyl, $C_1$-$C_4$alkoxy, amino, N-mono- or N,N-di-$C_1$-$C_4$alkylamino - the alkyl part being unsubstituted or substituted by -OH, $-OCOCH_3$, $-SO_3H$, $-OSO_3H$, -CN or halogen - phenylamino, $C_1$-$C_4$alkanoylamino, benzoylamino, $C_1$-$C_4$alkoxycarbonyl, nitro, cyano, trifluoromethyl, halogen, hydroxyl, carboxyl, sulfo, sulfomethyl, sulfamoyl, N-mono- or N,N-di-$C_1$-$C_4$alkylsulfamoyl, N-phenylsulfamoyl, carbamoyl, N-mono- or N,N-di-$C_1$-$C_4$-alkylcarbamoyl, ureido, $C_1$-$C_4$-alkylsulfonyl and/or a reactive radical.

**6.** A reactive dye according to any one of claims 1 to 5, wherein D is substituted by a reactive radical of the formula

$-SO_2-Z$ (2),

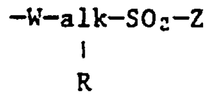
(2a),

-W-alk-E-alk'-$SO_2$-Z (2b),

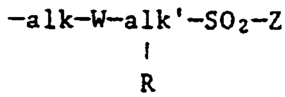
(2c),

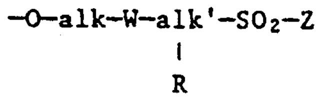
(2d),

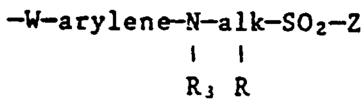
(2e),

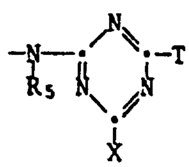
(3) or

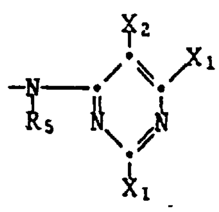
(5),

in which W is a functional group, $R_3$ is hydrogen, $C_1$-$C_4$alkyl unsubstituted or substituted by hydroxyl, sulfo, sulfato, carboxyl or cyano or is a radical of the formula

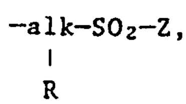

R is hydrogen, hydroxyl, sulfo, sulfato, carboxyl, cyano, halogen, $C_1$-$C_4$alkoxycarbonyl, $C_1$-$C_4$alkanoyloxy, carbamoyl or is the group $-SO_2-Z$, Z is $-CH-CH_2$ or $-CH_2-CH_2-Y$, Y is a leaving group, E is -O- or $-NR_4$, $R_4$ is hydrogen or $C_1$-$C_4$alkyl, alk and alk' independently of one another are $C_1$-$C_6$alkylene, arylene is a phenylene or naphthylene radical unsubstituted or substituted by sulfo,

carboxyl, $C_1$-$C_4$alkyl, $C_1$-$C_4$alkoxy or halogen, $R_5$ is hydrogen or $C_1$-$C_4$alkyl unsubstituted or substituted by carboxyl, cyano, hydroxyl, sulfo or sulfato and X is a group detachable as an anion, T independently has the definition of X or is a grouping containing a further reactive radical or is a non-reactive substituent, one of the radicals $X_1$ independently has the definition of X and the other radical $X_1$ has the definition of T and $X_2$ is an electronegative substituent, or is substituted by a 2,3-dichloroquinoxaline-6-carbonylamino or 2,4-dichloropyrimidine-5-carbonylamino radical.

**7.** A reactive dye according to claim 6, wherein D is substituted by a fibre-reactive radical of the formula (2) or (2a), in which W is a group -CONH- or -NHCO-, alk is a $C_1$-$C_4$alkylene radical and Z is as defined in claim 6.

**8.** A reactive dye according to claim 6 or 7, wherein Y is a -Cl, $-OSO_3H$, $-SSO_3H$, $-OCO-CH_3$, $-OCO-C_6H_5$ or $-OPO_3H_2$ group.

**9.** A reactive dye according to either of claims 6 and 8, wherein D is substituted by a fibre-reactive radical of the formula (3) and X is fluorine, chlorine, bromine, sulfo, $C_1$-$C_4$alkylsulfonyl or phenylsulfonyl.

**10.** A reactive dye according to any one of claims 6, 8 and 9, wherein T is a grouping containing a reactive radical which corresponds to the formula

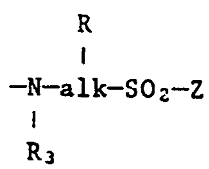 (4),

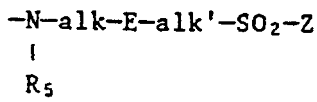 (4a),

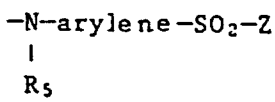 (4b)

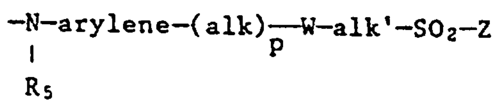 (4c) or

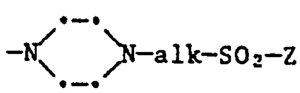 (4d),

in which R, $R_3$, $R_5$, E, W, Z, alk, alk' and arylene are as defined in claim 6 and p is 0 or 1.

**11.** A reactive dye according to claim 10, wherein T is a group of the formula

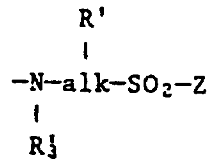

(4'),

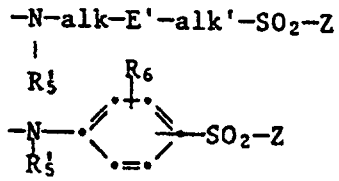

(4a'),

(4b'),

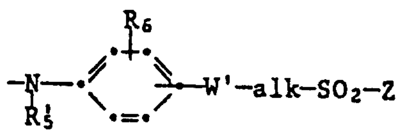

(4c') or

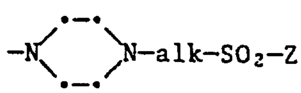

(4d),

in which W' is $-COR_5'$ or $-NR_5'CO-$, R' is hydrogen or the group $-SO_2-Z$, $R_3'$ is hydrogen, $C_1$-$C_4$alkyl or the group -alk-$SO_2$-Z, $R_5'$ is hydrogen or $C_1$-$C_4$alkyl, E' is -O- or -NH- and $R_6$ is hydrogen, sulfo, carboxyl, chlorine, methoxy or methyl, alk and alk' independently of one another are a $C_1$-$C_4$alkylene radical and Z is as defined in claim 6.

**12.** A reactive dye according to any one of claims 6, 8 and 9, wherein T as a non-reactive substituent is amino, N-$C_1$-$C_4$alkylamino, which is unsubstituted in the alkyl part or is substituted by hydroxyl, sulfato or sulfo, or is morpholino, phenylamino or N-$C_1$-$C_4$alkyl, N-phenylamino, in which each of the phenyls is unsubstituted or substituted by sulfo, carboxyl, methyl and/or methoxy.

**13.** A reactive dye according to claim 6, wherein D is substituted by a reactive radical of the formula (5) mentioned in claim 6, in which $X_1$ is chlorine or fluorine and $X_2$ is chlorine, cyano, formyl or methylsulfonyl.

**14.** A reactive dye according to any one of claims 1 to 6, wherein D is the radical of an aminobenzene or aminonaphthalene unsubstituted or substituted by sulfo, acetylamino, methyl, methoxy, chlorine or bromine, which is further substituted by a reactive radical of the formula (2), (2a) or (3) mentioned in claim 6.

**15.** A reactive dye according to any one of claims 1 to 5, wherein D is the radical of an aminobenzene or aminonaphthalene unsubstituted or substituted by sulfo, carboxyl, $C_1$-$C_4$alkoxy, $C_1$-$C_4$alkyl, $C_1$-$C_4$alkanoylamino and/or halogen.

**16.** A reactive dye according to any one of claims 1 to 15, wherein $R_1$ and $R_2$ independently of one another are hydrogen, a $C_1$-$C_6$alkyl radical unsubstituted or substituted by hydroxyl, sulfo, sulfato, carboxyl, cyano, halogen, $C_1$-$C_4$alkoxycarbonyl, $C_1$-$C_4$alkanoyloxy, carbamoyl and/or a reactive radical, the alkyl with the exception of methyl being uninterrupted or interrupted by -O- or $-NR_4-$ and $R_4$ being as defined in claim 6, or are a phenyl or naphthyl radical unsubstituted or substituted by sulfo, carboxyl, $C_1$-$C_4$alkyl, $C_1$-$C_4$alkoxy, halogen, a reactive radical and/or a group -N=N-K, where K is the radical of a coupling component of the benzene or naphthalene series or of the heterocyclic series, or $R_1$ and $R_2$ together with the nitrogen atom form a piperidyl, piperazinyl or pyrrolidinyl radical which is

unsubstituted or substituted by a radical of the formula $-(alk)_p-SO_2-Z$, in which alk, p and Z are as defined in claim 10.

**17.** A reactive dye according to claim 16, wherein the reactive radical on the phenyl or naphthyl radical $R_1$ or $R_2$ is a radical of the formula (2), (2a), (3) or (5) mentioned in claim 6 or is the 2,3-dichloroquinoxaline-6-carbonylamino or 2,4-dichloropyrimidine-5-carbonylamino radical and the reactive radical on the $C_1$-$C_6$alkyl radical $R_1$ or $R_2$ is the group $-SO_2-Z$.

**18.** A reactive dye according to any one of claims 1 to 17, wherein $A_1$ and/or $A_2$ is a group of the formula (4b') or (4c') mentioned in claim 11 or is a group of the formula

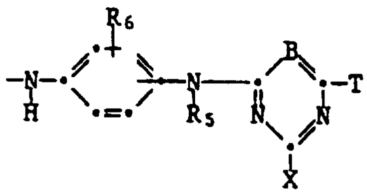 (3a),

in which $R_5$, X and T are as defined in claim 6, $R_6$ is hydrogen, sulfo, chlorine, methoxy or carboxyl and B is a group

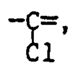, 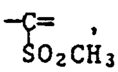, 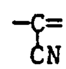

or -N=.

**19.** A reactive dye according to any one of claims 1 to 17, wherein $A_1$ and/or $A_2$ is a radical of the formula (1a) mentioned in claim 1, in which $R_1$ and $R_2$ independently of one another are hydrogen or a $C_1$-$C_4$alkyl radical unsubstituted or substituted by hydroxyl, sulfo, sulfato, carboxyl, cyano or the group $-SO_2-Z$ and/or interrupted by -O-, Z being as defined in claim 6.

**20.** A reactive dye according to claim 19, wherein one of the radicals $R_1$ or $R_2$ is hydrogen.

**21.** A reactive dye according to any one of claims 1 to 20, wherein $A_1$ is a radical of the formula (1a), (4') or (4a') mentioned in claim 1 or 11, in which $R_1$ is hydrogen and $R_2$ is hydrogen or $C_1$-$C_4$alkyl unsubstituted or substituted by hydroxyl, sulfo or sulfato, R', $R_3$' and $R_5$' are each hydrogen, E' is -O- and alk, alk' and Z are each as defined in claim 11, and $A_2$ independently has the definition of $A_1$ or is phenylamino unsubstituted or substituted by sulfo, chlorine, methoxy, carboxyl or a radical of the formula (2), (2a) or (3) mentioned in claim 6.

**22.** A reactive dye of the formula (1) according to claim 1, wherein $A_1$ and $A_2$ independently of one another are amino, N-$C_1$-$C_4$alkylamino, in which the alkyl is unsubstituted or substituted by hydroxyl, sulfato or sulfo, or is phenylamino, in which the phenyl is unsubstituted or substituted by sulfo, carboxyl, methyl, methoxy, chlorine and/or by a radical of the formula

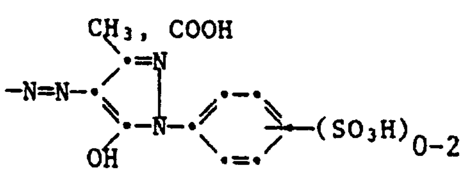 (8')

D is the radical of an aminobenzene or aminonaphthalene which is unsubstituted or substituted by sulfo, acetylamino, methyl, methoxy, chlorine or bromine and furthermore bears a reactive radical of the

formula (2), (2a) or (3) mentioned in claim 6, and Q is a phenyl radical unsubstituted or substituted by methyl, trifluoromethyl, methoxy, sulfo, nitro, chlorine or bromine, or is a 1- or 2-naphthyl radical or a furanyl, thienyl or benzothiazolyl radical.

**23.** A reactive dye of the formula (1) according to claim 1, wherein $A_1$ is a radical of the formula (1a), (4') or (4a') mentioned in claim 1 or 11, in which $R_1$ is hydrogen and $R_2$ is hydrogen or is $C_1$-$C_4$alkyl unsubstituted or substituted by hydroxyl, sulfo or sulfato, R', $R_3$' and $R_5$' are each hydrogen, E' is -O- and alk, alk' and Z are each as defined in claim 11, $A_2$ independently has the definition of $A_1$ or is phenylamino unsubstituted or substituted by sulfo, chlorine, methoxy, carboxyl or a radical of the formula (2), (2a) or (3) mentioned in claim 6, Q is a phenyl radical unsubstituted or substituted by methyl, trifluoromethyl, methoxy, sulfo, nitro, chlorine or bromine, or is a 1- or 2-naphthyl radical or a furyl, thienyl or benzothiazolyl radical and D is the radical of an aminobenzene or aminonaphthalene which is unsubstituted or substituted by sulfo, carboxyl, $C_1$-$C_4$alkoxy, $C_1$-$C_4$alkyl, $C_1$-$C_4$alkanoylamino or halogen and furthermore can bear a reactive radical of the formula (2), (2a) or (3) mentioned in claim 6.

**24.** A process for the preparation of compounds of the formula (1), which comprises reacting a diazo component of the formula

$D\text{-}NH_2$ (10)

or its precursor with a compound of the formula

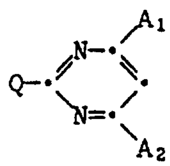

(11)

or its precursor by diazotization and coupling to give reactive dyes of the formula (1), or converting the resulting intermediates to the desired final dyes and, if desired, adding on a further conversion reaction, D, $A_1$, $A_2$ and Q being as defined in claim 1.

**25.** The use of the reactive dyes according to claim 1 for the dyeing and printing of cellulose-containing fibre materials.

**26.** The use according to claim 25 for the dyeing and printing of cotton.

**27.** A compound of the formula

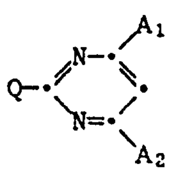

(11)

in which Q, $A_1$ and $A_2$ are as defined in claim 1, with the proviso that $A_1$ and/or $A_2$ contain a fibre-reactive radical.

**28.** A process for the preparation of compounds of the formula (11), which comprises reacting a compound of the formula

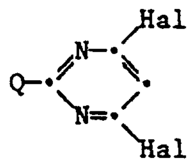

(12)

with an amine of the formula

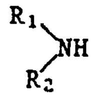

(1a*)

to give a compound of the formula

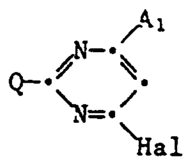

(13)

and subsequently reacting this compound with another amine of the formula (1a*) to give the compound of the formula (11), Q, $R_1$, $R_2$ and $A_1$ being each as defined in claim 1 and Hal being halogen, for example bromine and, in particular, chlorine.

**Claims for the following Contracting State : ES**

**1.** A process for the preparation of compounds of the formula

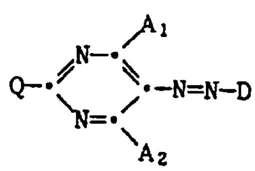

(1),

in which D is the radical of a diazo component, Q is a substituted or unsubstituted phenyl or naphthyl radical or a substituted or unsubstituted aromatic heterocyclic radical and $A_1$ and $A_2$ independently of one another are a radical of the formula

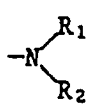

(1a),

in which $R_1$ and $R_2$ independently of one another are hydrogen, substituted or unsubstituted $C_1$-$C_6$alkyl or substituted or unsubstituted aryl, or $R_1$ and $R_2$ together with the nitrogen atom form a further substituted or unsubstituted heterocyclic 5- or 6-ring, with the proviso that at least one of the radicals $A_1$, $A_2$ and D has a fibre-reactive group, which comprises reacting a diazo component of the formula

$D\text{-}NH_2$ (10)

or its precursor with a compound of the formula

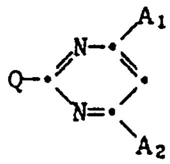

(11)

or its precursor by diazotization and coupling to give reactive dyes of the formula (1), or converting the resulting intermediates to the desired final dyes and, if desired, adding on a further conversion reaction, D, $A_1$, $A_2$ and Q being as defined above

**2.** A process for the preparation according to claim 1 of compounds of the formula (1) in which Q is phenyl unsubstituted or substituted by methyl, trifluoromethyl, methoxy, sulfo, nitro, chlorine or bromine, or is 1- or 2-naphthyl, furyl, thienyl or benzothiazolyl.

**3.** A process for the preparation according to claim 2 of compounds of the formula (1) in which Q is phenyl.

**4.** A process for the preparation according to any one of claims 1 to 3 of compounds of the formula (1) in which D is the radical of a substituted or unsubstituted aminobenzene, aminonaphthalene, phenylazoaminobenzene, naphthylazoaminobenzene, phenylazoaminonaphthalene or naphthylazoaminonaphthalene.

**5.** A process for the preparation according to claim 4 of compounds of the formula (1) in which D is unsubstituted or substituted by $C_1$-$C_4$alkyl, $C_1$-$C_4$alkoxy, amino, N-mono- or N,N-di-$C_1$-$C_4$alkylamino - the alkyl part being unsubstituted or substituted by -OH, $-OCOCH_3$, $-SO_3H$, $-OSO_3H$, -CN or halogen - phenylamino, $C_1$-$C_4$alkanoylamino, benzoylamino, $C_1$-$C_4$alkoxycarbonyl, nitro, cyano, trifluoromethyl, halogen, hydroxyl, carboxyl, sulfo, sulfomethyl, sulfamoyl, N-mono- or N,N-di-$C_1$-$C_4$alkylsulfamoyl, N-phenylsulfamoyl, carbamoyl, N-mono- or N,N-di-$C_1$-$C_4$alkylcarbamoyl, ureido, $C_1$-$C_4$-alkylsulfonyl and/or a reactive radical.

**6.** A process for the preparation according to any one of claims 1 to 5 of compounds of the formula (1) in which D is substituted by a reactive radical of the formula

$-SO_2$-Z (2),

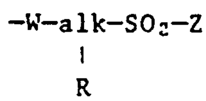

(2a),

-W-alk-E-alk'-$SO_2$-Z (2b),

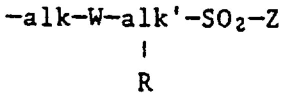 (2c),

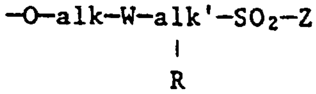 (2d),

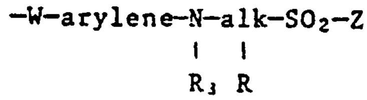 (2e),

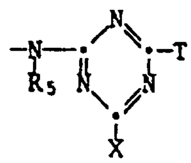 (3) or

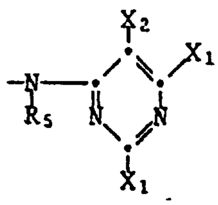 (5),

in which W is a functional group, $R_3$ is hydrogen, $C_1$-$C_4$alkyl unsubstituted or substituted by hydroxyl, sulfo, sulfato, carboxyl or cyano or is a radical of the formula

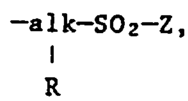

R is hydrogen, hydroxyl, sulfo, sulfato, carboxyl, cyano, halogen, $C_1$-$C_4$alkoxycarbonyl, $C_1$-$C_4$alkanoyloxy, carbamoyl or is the group $-SO_2-Z$, Z is $-CH=CH_2$ or $-CH_2-CH_2-Y$, Y is a leaving group, E is -O- or $-NR_4$, $R_4$ is hydrogen or $C_1$-$C_4$alkyl, alk and alk' independently of one another are $C_1$-$C_6$alkylene, arylene is a phenylene or naphthylene radical unsubstituted or substituted by sulfo, carboxyl, $C_1$-$C_4$alkyl, $C_1$-$C_4$alkoxy or halogen, $R_5$ is hydrogen or $C_1$-$C_4$alkyl unsubstituted or substituted by carboxyl, cyano, hydroxyl, sulfo or sulfato and X is a group detachable as an anion, T independently has the definition of X or is a grouping containing a further reactive radical or is a non-reactive substituent, one of the radicals $X_1$ independently has the definition of X and the other radical $X_1$ has the definition of T and $X_2$ is an electronegative substituent, or is substituted by a 2,3-dichloroquinoxaline-6-carbonylamino or 2,4-dichloropyrimidine-5-carbonylamino radical.

**7.** A process for the preparation according to claim 6 of compounds of the formula (1) in which D is substituted by a fibre-reactive radical of the formula (2) or (2a), in which W is a group -CONH- or -NHCO-, alk is a $C_1$-$C_4$alkylene radical and Z is as defined in claim 6.

**8.** A process for the preparation according to claim 6 or 7 of compounds of the formula (1) in which Y is a -Cl, $-OSO_3H$, $-SSO_3H$, $-OCO-CH_3$, $-OCO-C_6H_5$ or $-OPO_3H_2$ group.

**9.** A process for the preparation according to either of claims 6 and 8 of compounds of the formula (1) in which D is substituted by a fibre-reactive radical of the formula (3) and X is fluorine, chlorine, bromine, sulfo, $C_1$-$C_4$alkylsulfonyl or phenylsulfonyl.

**10.** A process for the preparation according to any one of claims 6, 8 or 9 of compounds of the formula (1) in which T is a grouping containing a reactive radical which corresponds to the formula

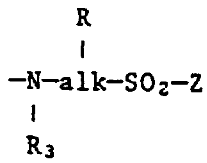 (4),

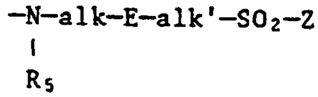 (4a),

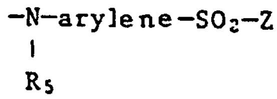 (4b)

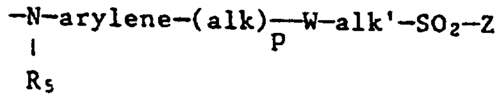 (4c) or

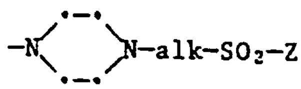 (4d),

in which R, $R_3$, $R_5$, E, W, Z, alk, alk' and arylene are as defined in claim 6 and p is 0 or 1.

**11.** A process for the preparation according to claim 10 of compounds of the formula (1) in which T is a group of the formula

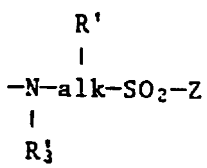 (4'),

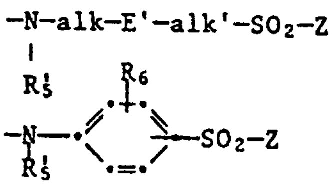 (4a'), (4b'),

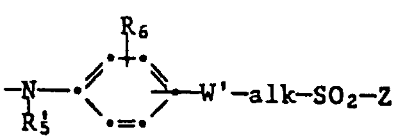 (4c') or

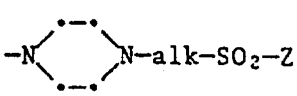 (4d),

in which W' is $-COR_5'$ or $-NR_5'CO-$, R' is hydrogen or the group $-SO_2-Z$, $R_3'$ is hydrogen, $C_1$-$C_4$alkyl or the group $-alk-SO_2-Z$, $R_5'$ is hydrogen or $C_1$-$C_4$alkyl, E' is -O- or -NH- and $R_6$ is hydrogen, sulfo, carboxyl, chlorine, methoxy or methyl, alk and alk' independently of one another are a $C_1$-$C_4$alkylene radical and Z is as defined in claim 6.

**12.** A process for the preparation according to any one of claims 6, 8 or 9 of compounds of the formula (1) in which T as a non-reactive substituent is amino, N-$C_1$-$C_4$alkylamino, which is unsubstituted in the alkyl part or is substituted by hydroxyl, sulfato or sulfo, or is morpholino, phenylamino or N-$C_1$-$C_4$alkyl, N-phenylamino, in which each of the phenyls is unsubstituted or substituted by sulfo, carboxyl, methyl and/or methoxy.

**13.** A process for the preparation according to claim 6 of compounds of the formula (1) in which D is substituted by a reactive radical of the formula (5) mentioned in claim 6, in which $X_1$ is chlorine or fluorine and $X_2$ is chlorine, cyano, formyl or methylsulfonyl.

**14.** A process for the preparation according to any one of claims 1 to 6 of compounds of the formula (1) in which D is the radical of an aminobenzene or aminonaphthalene unsubstituted or substituted by sulfo, acetylamino, methyl, methoxy, chlorine or bromine, which is further substituted by a reactive radical of the formula (2), (2a) or (3) mentioned in claim 6.

**15.** A process for the preparation according to any one of claims 1 to 5 of compounds of the formula (1) in which D is the radical of an aminobenzene or aminonaphthalene unsubstituted or substituted by sulfo, carboxyl, $C_1$-$C_4$alkoxy, $C_1$-$C_4$alkyl, $C_1$-$C_4$alkanoylamino and/or halogen.

**16.** A process for the preparation according to any one of claims 1 to 15 of compounds of the formula (1) in which $R_1$ and $R_2$ independently of one another are hydrogen, a $C_1$-$C_6$alkyl radical unsubstituted or substituted by hydroxyl, sulfo, sulfato, carboxyl, cyano, halogen, $C_1$-$C_4$alkoxycarbonyl, $C_1$-$C_4$alkanoyloxy, carbamoyl and/or a reactive radical, the alkyl with the exception of methyl being uninterrupted or interrupted by -O- or -$NR_4$- and $R_4$ being as defined in claim 6, or are a phenyl or naphthyl radical unsubstituted or substituted by sulfo, carboxyl, $C_1$-$C_4$alkyl, $C_1$-$C_4$alkoxy, halogen, a reactive radical and/or a group -N=N-K, where K is the radical of a coupling component of the benzene or naphthalene series or of the heterocyclic series, or $R_1$ and $R_2$ together with the nitrogen atom form a piperidyl, piperazinyl or pyrrolidinyl radical which is unsubstituted or substituted by a radical of the formula -(alk)-$_p$-$SO_2$-Z, in which alk, p and Z are as defined in claim 10.

**17.** A process for the preparation according to claim 16 of compounds of the formula (1) in which the reactive radical on the phenyl or naphthyl radical $R_1$ or $R_2$ is a radical of the formula (2), (2a), (3) or (5) mentioned in claim 6 or is the 2,3-dichloroquinoxaline-6-carbonylamino or 2,4-dichloropyrimidine-5-carbonylamino radical and the reactive radical on the $C_1$-$C_6$alkyl radical $R_1$ or $R_2$ is the group -$SO_2$-Z.

**18.** A process for the preparation according to any one of claims 1 to 17 of compounds of the formula (1) in which $A_1$ and/or $A_2$ is a group of the formula (4b') or (4c') mentioned in claim 11 or is a group of the formula

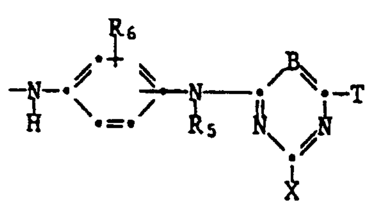 (3a),

in which $R_5$, X and T are as defined in claim 6, $R_6$ is hydrogen, sulfo, chlorine, methoxy or carboxyl and B is a group

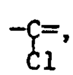, 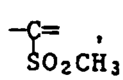, 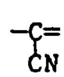

or -N=.

**19.** A process for the preparation according to any one of claims 1 to 17 of compounds of the formula (1) in which $A_1$ and/or $A_2$ is a radical of the formula (1a) mentioned in claim 1, in which $R_1$ and $R_2$ independently of one another are hydrogen or a $C_1$-$C_4$alkyl radical unsubstituted or substituted by hydroxyl, sulfo, sulfato, carboxyl, cyano or the group $-SO_2-Z$ and/or interrupted by -O-, Z being as defined in claim 6.

**20.** A process for the preparation according to claim 19 of compounds of the formula (1) in which one of the radicals $R_1$ or $R_2$ is hydrogen.

**21.** A process for the preparation according to any one of claims 1 to 20 of compounds of the formula (1) in which $A_1$ is a radical of the formula (1a), (4') or (4a') mentioned in claim 1 or 11, in which $R_1$ is hydrogen and $R_2$ is hydrogen or $C_1$-$C_4$alkyl unsubstituted or substituted by hydroxyl, sulfo or sulfato, R', $R_3$' and $R_5$' are each hydrogen, E' is -O-and alk, alk' and Z are each as defined in claim 11, and $A_2$ independently has the definition of $A_1$ or is phenylamino unsubstituted or substituted by sulfo, chlorine, methoxy, carboxyl or a radical of the formula (2), (2a) or (3) mentioned in claim 6.

**22.** A process for the preparation according to claim 1 of compounds of the formula (1) in which $A_1$ and $A_2$ independently of one another are amino, N-$C_1$-$C_4$alkylamino, in which the alkyl is unsubstituted or substituted by hydroxyl, sulfato or sulfo, or is phenylamino, in which the phenyl is unsubstituted or substituted by sulfo, carboxyl, methyl, methoxy, chlorine and/or by a radical of the formula

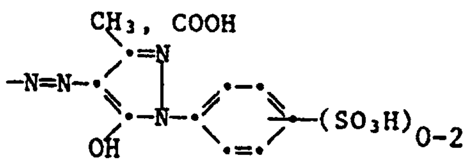

(8')

D is the radical of an aminobenzene or aminonaphthalene which is unsubstituted or substituted by sulfo, acetylamino, methyl, methoxy, chlorine or bromine and furthermore bears a reactive radical of the formula (2), (2a) or (3) mentioned in claim 6, and Q is a phenyl radical unsubstituted or substituted by methyl, trifluoromethyl, methoxy, sulfo, nitro, chlorine or bromine, or is a 1- or 2-naphthyl radical or a furyl, thienyl or benzothiazolyl radical.

**23.** A process for the preparation of the formula (1) according to claim 1 of compounds of the formula (1) in which $A_1$ is a radical of the formula (1a), (4') or (4a') mentioned in claim 1 or 11, in which $R_1$ is hydrogen and $R_2$ is hydrogen or is $C_1$-$C_4$alkyl unsubstituted or substituted by hydroxyl, sulfo or sulfato, R', $R_3$' and $R_5$' are each hydrogen, E' is -O-and alk, alk' and Z are each as defined in claim 11, $A_2$ independently has the definition of $A_1$ or is phenylamino unsubstituted or substituted by sulfo, chlorine, methoxy, carboxyl or a radical of the formula (2), (2a) or (3) mentioned in claim 6, Q is a phenyl radical unsubstituted or substituted by methyl, trifluoromethyl, methoxy, sulfo, nitro, chlorine or bromine, or is a 1- or 2-naphthyl radical or a furanyl, thienyl or benzothiazolyl radical and D is the radical of an aminobenzene or aminonaphthalene which is unsubstituted or substituted by sulfo, carboxyl, $C_1$-$C_4$alkoxy, $C_1$-$C_4$alkyl, $C_1$-$C_4$alkanoylamino or halogen and furthermore can bear a reactive radical of the formula (2), (2a) or (3) mentioned in claim 6.

**24.** The use of the reactive dyes obtainable according to claim 1 for the dyeing and printing of cellulose-containing fibre materials.

**25.** The use according to claim 24 for the dyeing and printing of cotton.

**26.** A process for the preparation of compounds of the formula

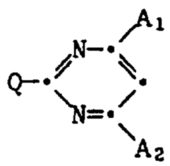

(11)

in which Q, $A_1$ and $A_2$ are as defined in claim 1, with the proviso that $A_1$ and/or $A_2$ contain a fibre-reactive radical, which comprises reacting a compound of the formula

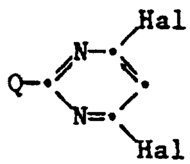

(12)

with an amine of the formula

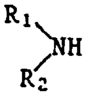

(1a*)

to give a compound of the formula

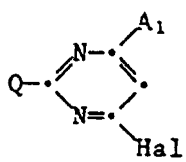

(13)

and subsequently reacting this compound with another amine of the formula (1a*) to give the compound of the formula (11), Q, $R_1$, $R_2$ and $A_1$ being each as defined in claim 1 and Hal being halogen, for example bromine and, in particular, chlorine.

**Revendications**
**Revendications pour les Etats contractants suivants : BE, CH, DE, FR, GB, IT, LI**

**1.** Colorants réactifs de formule :

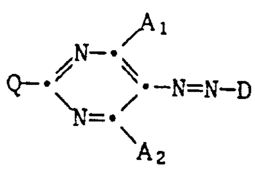

(1)

dans laquelle D désigne le reste d'un composant diazoïque, Q désigne un reste phényle ou naphtyle éventuellement substitué ou un reste aromatique-hétérocyclique éventuellement substitué et $A_1$ et $A_2$, indépendamment l'un de l'autre, désignent un reste de formule :

```
     R1
    /
 -N                                  (1a)
    \
     R2
```

dans laquelle $R_1$ et $R_2$, indépendamment l'un de l'autre, désignent un hydrogène, un alkyle en $C_1$-$C_6$ éventuellement substitué ou un aryle éventuellement substitué, ou bien $R_1$ et $R_2$ ensemble avec l'atome d'azote auquel ils sont attachés forment un noyau hétérocyclique à cinq ou six chaînons pouvant porter d'autres substituants, sous réserve qu'au moins un des restes $A_1$, $A_2$ et D désigne un groupe réactif avec les fibres.

**2.** Colorants réactifs selon la revendication 1, caractérisés par le fait que Q désigne un reste phényle, 1-naphtyle, 2-naphtyle, furannyle, thiényle ou benzothiazolyle, non-substitué ou substitué par méthyle, trifluorométhyle, méthoxy, sulfo, nitro, chlore ou brome.

**3.** Colorants réactifs selon la revendication 2, caractérisés par le fait que Q désigne phényle.

**4.** Colorants réactifs selon l'une des revendications 1 à 3, caractérisés par le fait que D désigne le reste d'un aminobenzène, aminonaphtalène, phénylazo-aminobenzène, naphtylazo-aminobenzène, phénylazo-aminonaphtalène ou naphtylazo-aminonaphtalène, éventuellement substitué.

**5.** Colorants réactifs selon la revendication 4, caractérisés par le fait que D est non-substitué ou substitué par alkyle en $C_1$-$C_4$, alcoxy en $C_1$-$C_4$, amino, N-mono(alkyl en $C_1$-$C_4$)amino, N,N-di(alkyl en $C_1$-$C_4$)-amino - la partie alkyle étant non-substituée ou substituée par -OH, $-OCOCH_3$, $-SO_3H$, $-OSO_3H$, -CN ou halogène -, phénylamino, (alcanoyl en $C_1$-$C_4$)-amino, benzoylamino, (alcoxy en $C_1$-$C_4$)carbonyle, nitro, cyano, trifluorométhyle, halogène, hydroxy, carboxy, sulfo, sulfométhyle, sulfamoyle, N-mono(alkyl en $C_1$-$C_4$)sulfamoyle, N,N-di(alkyl en $C_1$-$C_4$)sulfamoyle, N-phénylsulfamoyle, carbamoyle, N-mono(alkyl en $C_1$-$C_4$)carbamoyle, N,N-di(alkyl en $C_1$-$C_4$)carbamoyle, uréido, (alkyl en $C_1$-$C_4$)sulfonyle et/ou par un reste réactif.

**6.** Colorants réactifs selon l'une des revendications 1 à 5, caractérisés par le fait que D est substitué par un reste réactif de formule :

$-SO_2-Z$ (2)

```
-W-alk-SO2-Z                                (2a)
 |
 R
```

-W-alk-E-alk'-$SO_2$-Z (2b)

```
-alk-W-alk'-SO2-Z                           (2c)
     |
     R
```

```
-O-alk-W-alk'-SO2-Z                         (2d)
       |
       R
```

```
-W-arylène-N-alk-SO2-Z                      (2e)
           |  |
           R3 R
```

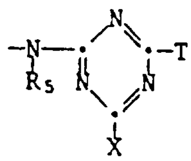

(3) ou

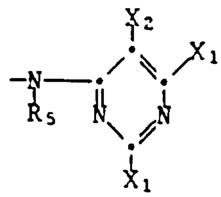

(5)

dans lesquelles W désigne un groupe fonctionnel, $R_3$ désigne l'hydrogène, un alkyle en $C_1$-$C_4$ non-substitué ou substitué par hydroxy, sulfo, sulfato, carboxy ou cyano ou bien un reste de formule

$$-\underset{\substack{|\\ R}}{\text{alk}}-SO_2-Z,$$

R désigne hydrogène, hydroxy, sulfo, sulfato, carboxy, cyano, halogène, (alcoxy en $C_1$-$C_4$)carbonyle, (alcanoyl en $C_1$-$C_4$)oxy, carbamoyle ou le groupe $-SO_2-Z$, Z désigne $-CH=CH_2$ ou $-CH_2-CH_2-Y$, Y désigne un groupe détachable, E désigne -O-ou $-NR_4$, $R_4$ désigne l'hydrogène ou un alkyle en $C_1$-$C_4$, alk et alk', indépendamment l'un de l'autre, désignent alkylène en $C_1$-$C_4$, arylène, phénylène ou naphtylène non-substitué ou substitué par sulfo, carboxy, alkyle en $C_1$-$C_4$, alcoxy en $C_1$-$C_4$ ou halogène, $R_5$ désigne l'hydrogène ou un alkyle en $C_1$-$C_4$ non-substitué ou substitué par carboxy, cyano, hydroxy, sulfo ou sulfato, et X désigne un groupe éliminable sous forme d'anion, T a, de façon indépendante, la signification de X ou bien représente un groupement renfermant un autre reste réactif ou bien représente un substituant non-réactif, l'un des restes $X_1$ a, de façon indépendante, la signification de X et l'autre reste $X_1$ a la signification de T, et $X_2$ désigne un substituant négatif ou bien est substitué par un reste 2,3-dichloroquinoxaline-6-carbonylamino ou par un reste 2,4-dichloropyrimidine-5-carbonylamino.

**7.** Colorants réactifs selon la revendication 6, caractérisés par le fait que D est substitué par un reste réagissant sur les fibres de formule (2) ou (2a) où W désigne un groupe -CONH- ou -NHCO-, alk désigne un reste alkylène en $C_1$-$C_4$ et Z a la signification indiquée dans la revendication 6.

**8.** Colorants réactifs selon la revendication 6 ou 7, caractérisés par le fait que Y désigne un groupe -Cl, $-OSO_3H$, $-SSO_3H$, $-OCO-CH_3$, $-OCO-C_6H_5$ ou $-OPO_3H_2$.

**9.** Colorants réactifs selon la revendication 6 ou 8, caractérisés par le fait que D est substitué par un reste réactif avec les fibres, de formule (3) et X désigne fluor, chlore, brome, sulfo, (alkyl en $C_1$-$C_4$)sulfonyle ou phénylsulfonyle.

**10.** Colorants réactifs selon l'une des revendications 6, 8 et 9, caractérisés par le fait que T représente un groupement renfermant un reste réactif de formule :

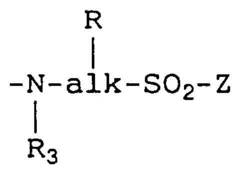

(4)

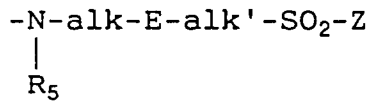

(4a)

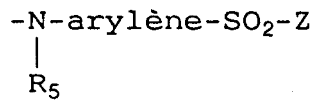

(4b)

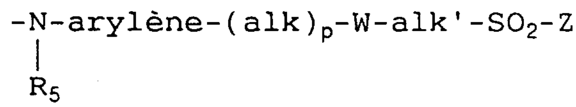

(4c) ou

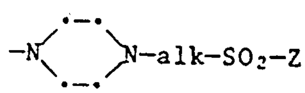

(4d)

dans lesquelles R, $R_3$, $R_5$, E, W, Z, alk, alk' et arylène ont les significations indiquées dans la revendication 6 et p désigne le nombre 0 ou 1.

**11.** Colorants réactifs selon la revendication 10, où T désigne un groupe de formule :

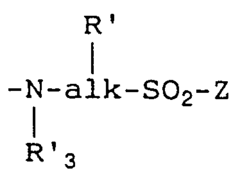

(4')

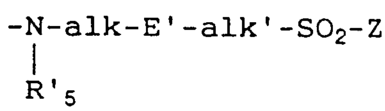

(4'a)

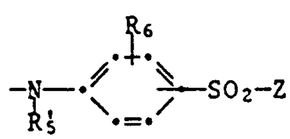

(4'b)

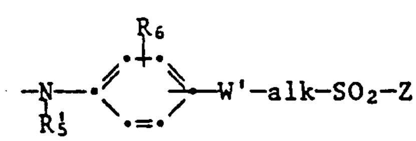

(4'c) ou

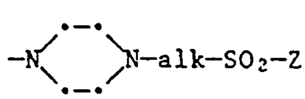

(4d)

dans lesquelles W' désigne -CONR'$_5$- ou -NR'$_5$CO-, R' désigne l'hydrogène ou le groupe -$SO_2$-Z, R'$_3$ désigne l'hydrogène, un alkyle en $C_1$-$C_4$ ou le groupe -alk-$SO_2$-Z, $R_5$' désigne l'hydrogène ou un alkyle en $C_1$-$C_4$, E' désigne -O-ou -NH- et $R_6$ désigne hydrogène, sulfo, carboxy, chlore, méthoxy ou méthyle, alk et alk', indépendamment l'un de l'autre, désignent un reste alkylène en $C_1$-$C_4$, et Z a la signification

indiquée dans la revendication 6.

**12.** Colorants réactifs selon l'une des revendications 6, 8 et 9, caractérisés par le fait que T signifie en tant que substituant non-réactif, amino, N-(alkyl en $C_1$-$C_4$)amino non-substitué dans la partie alkyle ou bien substitué par hydroxy, sulfato ou sulfo ; ou bien désigne morpholino, phénylamino ou N-(alkyl en $C_1$-$C_4$),N-phénylamino où le phényle est non-substitué ou substitué par sulfo, carboxy, méthyle et/ou méthoxy.

**13.** Colorants réactifs selon la revendication 6, caractérisés par le fait que D est substitué par un reste réactif de formule (5) indiquée dans la revendication 6, dans laquelle $X_1$ désigne chlore ou fluor et $X_2$ désigne chlore, cyano, formyle ou méthylsulfonyle.

**14.** Colorants réactifs selon l'une des revendications 1 à 6, caractérisés par le fait que D est le reste d'un aminobenzène ou aminonaphtalène non-substitué ou substitué par sulfo, acétylamino, méthyle, méthoxy, chlore ou brome, lequel reste est en outre substitué par un reste réactif de formule (2), (2a) ou (3), indiquée dans la revendication 6.

**15.** Colorants réactifs selon l'une des revendications 1 à 5, caractérisés par le fait que D désigne le reste d'un aminobenzène ou d'un aminonaphtalène non-substitué ou substitué par sulfo, carboxy, alcoxy en $C_1$-$C_4$, alkyle en $C_1$-$C_4$, (alcanoyl en $C_1$-$C_4$)amino et/ou halogène.

**16.** Colorants réactifs selon l'une des revendications 1 à 5, caractérisés par le fait que $R_1$ et $R_2$, indépendamment l'un de l'autre, désignent l'hydrogène ou un reste alkyle en $C_1$-$C_6$ non-substitué ou substitué par hydroxy, sulfo, sulfato, carboxy, cyano, halogène, (alcoxy en $C_1$-$C_4$)carbonyle, (alcanoyl en $C_1$-$C_4$)oxy, carbamoyle, et/ou substitué par un reste réactif, le reste alkyle sauf le reste méthyle pouvant être interrompu par -O- ou par $-NR_4-$, $R_4$ ayant la signification indiquée dans la revendication 6 ou bien désigne un reste phényle ou naphtyle non-substitué ou substitué par sulfo, carboxy, alkyle en $C_1$-$C_4$, alcoxy en $C_1$-$C_4$, halogène ou un reste réactif et/ou un groupe -N=N-K où K désigne le reste d'un composant de copulation de la série benzénique ou naphtalénique ou de la série hétérocyclique ou bien $R_1$ et $R_2$ forment ensemble avec l'atome d'azote auquel ils sont attachés un reste pipéridinyle, pipérazinyle ou pyrrolidinyle qui est non-substitué ou substitué par un reste de formule $-(alk)_p-SO_2-Z$, où alk, p et Z ont les significations indiquées dans la revendication 10.

**17.** Colorants réactifs selon la revendication 16, caractérisés par le fait que le reste réactif substituant le reste phényle ou naphtyle désignant $R_1$ ou $R_2$ est un reste de formule (2), (2a), (3) ou (5) selon la revendication 6 ou est un reste 2,3-dichloroquinoxaline-6-carbonylamino ou un reste 2,4-dichloropyrimidine-5-carbonylamino, et le reste réactif substituant le reste alkyle en $C_1$-$C_6$ $R_1$ ou $R_2$ est un groupe $-SO_2-Z$.

**18.** Colorants réactifs selon l'une des revendications 1 à 17, caractérisés par le fait que $A_1$ et/ou $A_2$ désignent un groupe de formule (4b') ou (4c') indiquée dans la revendication 11 ou bien un groupe de formule :

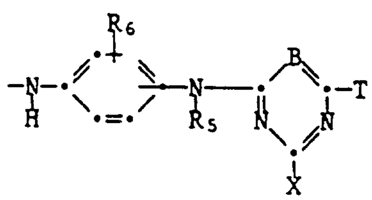

(3a)

dans laquelle $R_5$, X et T ont les significations indiquées dans la revendication 6, $R_6$ désigne hydrogène, sulfo, chlore, méthoxy ou carboxy, et B désigne un groupe

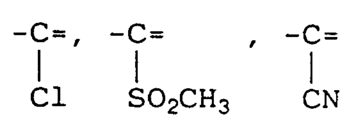

ou -N=.

**19.** Colorants réactifs selon l'une des revendications 1 à 17, caractérisés par le fait que $A_1$ et/ou $A_2$ désignent un reste de formule (1a) indiquée dans la revendication 1, où $R_1$ et $R_2$, indépendamment l'un de l'autre, désignent l'hydrogène ou un reste alkyle en $C_1$-$C_4$,non-substitué ou substitué par hydroxy, sulfo, sulfato, carboxy, cyano ou par le groupe $-SO_2-Z$ et/ou un reste alkyle en $C_1$-$C_4$ interrompu par -O-, Z ayant la signification indiquée dans la revendication 6.

**20.** Colorants réactifs selon la revendication 19, caractérisés par le fait que l'un des restes $R_1$ et $R_2$ désigne l'hydrogène.

**21.** Colorants réactifs selon l'une des revendications 1 à 10, caractérisés par le fait que $A_1$ désigne un reste de formule (1a), (4') ou (4'a) indiquée dans les revendications 1 à 11, où $R_1$ désigne l'hydrogène et $R_2$ désigne l'hydrogène ou un alkyle en $C_1$-$C_4$, non-substitué ou substitué par hydroxy, sulfo ou sulfato ; R', $R'_3$ et $R'_5$ désignent l'hydrogène, E' désigne -O-, et alk, alk' et Z ont les significations indiquées dans la revendication 11, et $A_2$ de façon indépendante a la signification de $A_1$ ou bien désigne un reste phénylamino, non-substitué ou substitué par sulfo, chlore, méthoxy, carboxy ou par un reste de formule (2), (2a) ou (3) indiquée dans la revendication 6.

**22.** Colorants réactifs de formule (1), selon la revendication 1, où $A_1$ et $A_2$, indépendamment l'un de l'autre, désignent amino, N-(alkyl en $C_1$-$C_4$)amino où l'alkyle est non-substitué ou bien substitué par hydroxy, sulfato ou sulfo ; ou phénylamino où le phényle est non-substitué ou substitué par sulfo, carboxy, méthyle, méthoxy, chlore et/ou par un reste de formule :

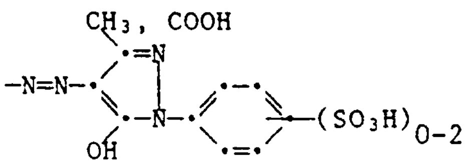

(8')

D désigne le reste d'un aminobenzène ou d'un aminonaphtalène qui est non-substitué ou bien substitué par sulfo, acétylamino, méthyle, méthoxy, chlore ou brome et comporte en outre un reste réactif de formule (2), (2a) ou (3) indiquée dans la revendication 6 et Q désigne un reste phényle, 1-naphtyle, 2-naphtyle, furannyle, thiényle ou benzothiazolyle, non-substitué ou substitué par méthyle, trifluorométhyle, méthoxy, sulfo, nitro, chlore ou brome.

**23.** Colorants réactifs de formule (1), selon la revendication 1, caractérisés par le fait que $A_1$ désigne un reste de formule (1a), (4') ou (4'a) indiquée dans la revendication 1 ou 11, où $R_1$ désigne l'hydrogène et $R_2$ désogne l'hydrogène ou un reste alkyle en $C_1$-$C_4$ non-substitué ou substitué par hydroxy, sulfo ou sulfato ; R', $R'_3$ et $R'_5$ désignent l'hydrogène, E' désigne -O-, et alk, alk' et Z ont les significations indiquées dans la revendication 11, $A_2$ a, de façon indépendante la signification de $A_1$ ou bien désigne un phénylamino non-substitué ou substitué par sulfo, chlore, méthoxy, carboxy ou par un reste de formule (2), (2a) ou (3), indiquée dans la revendication 6 ; Q désigne un reste phényle, 1-naphtyle, 2-naphtyle, furannyle, thiényle ou benzothiazolyle, non-substitué ou substitué par méthyle, trifluorométhyle, méthoxy, sulfo, nitro, chlore ou brome ; et D désigne le reste d'un aminobenzène ou aminonaphtalène non-substitué ou substitué par sulfo, carboxy, alcoxy en $C_1$-$C_4$, alkyle en $C_1$-$C_4$, (alcanoyl en $C_1$-$C_4$)amino ou halogène et comporte éventuellement un reste réactif de formule (2), (2a) ou (3) indiquée dans la revendication 6.

**24.** Procédé de préparation d'un composé de formule (1), caractérisé par le fait qu'on fait réagir un composant diazoïque de formule :

$D-NH_2$ (10)

ou son composé intermédiaire avec un composé de formule :

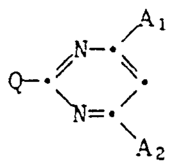

(11)

ou bien avec le produit intermédiaire de ce composé, la réaction se faisant par diazotation et copulation pour obtenir le colorant réactif de formule (1), ou bien on transforme les composés intermédiaires obtenus en les colorants finaux désirés, et éventuellement on y joint une réaction de transformation, dans les formules ci-dessus D, $A_1$, $A_2$ et Q ont les significations indiquées dans la revendication 1.

**25.** Utilisation des colorants réactifs selon la revendication 1, pour la teinture ou l'impression de matières fibreuses cellulosiques.

**26.** Utilisation selon la revendication 25, pour la teinture et l'impression du coton.

**27.** Composés de formule :

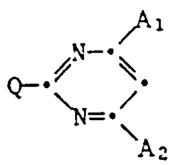

(11)

dans laquelle Q, $A_1$ et $A_2$ ont les significations indiquées dans la revendication 1, sous réserve que $A_1$ et/ou $A_2$ renferment un reste réactif avec les fibres.

**28.** Procédé de préparation de composés de formule (11), caractérisé par le fait qu'on fait réagir un composé de formule :

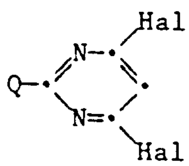

(12)

avec une amine de formule :

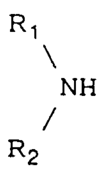

(1a*)

pour obtenir le composé de formule :

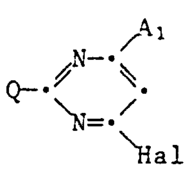

(13)

et on fait réagir ce dernier avec une autre amine de formule (1a*) pour obtenir un composé de formule

(11) où Q, $R_1$, $R_2$ et $A_1$ ont les significations indiquées dans la revendication 1 et Hal désigne un halogène, par exemple le brome et plus particulièrement le chlore.

**Revendications pour l'Etat contractant suivant : ES**

**1.** Procédé de préparation de composés de formule :

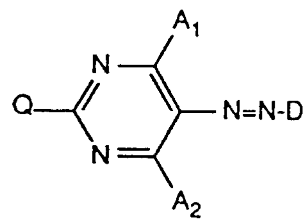

(1)

dans laquelle D désigne le reste d'un composant de diazotation, Q désigne un reste phényle ou naphtyle éventuellement substitué ou un reste aromatique-hétérocyclique éventuellement substitué, $A_1$ et $A_2$, indépendamment l'un de l'autre, désignent un reste de formule :

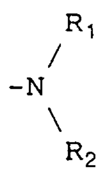

(1a)

dans laquelle $R_1$ et $R_2$, indépendamment l'un de l'autre, désignent un hydrogène, un alkyle en $C_1$-$C_6$ éventuellement substitué ou un aryle éventuellement substitué, ou bien $R_1$ et $R_2$ ensemble avec l'atome d'azote auquel ils sont attachés forment un noyau hétérocyclique à cinq ou six chaînons, portant éventuellement d'autres substituants, sous réserve qu'au moins un des restes $A_1$, $A_2$ et D présente un groupe réactif avec les fibres,
caractérisé par le fait qu'on fait réagir un composant diazoïque de formule :

$D\text{-}NH_2$ (10)

ou bien son composé intermédiaire avec un composé de formule :

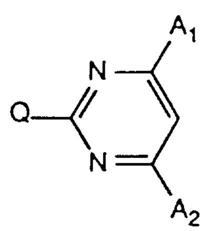

(11)

ou bien avec son composé intermédiaire, la réaction se faisant par diazotation et copulation pour obtenir les colorants réactifs de formule (1), ou bien on transforme les composés intermédiaires dans les colorants finaux désirés, et éventuellement on les soumet ensuite à une réaction de transformation ; dans les formules susmentionnées, D, $A_1$, $A_2$ et Q ont les significations ci-dessus indiquées.

**2.** Procédé de préparation selon la revendication 1, de composés de formule (1) dans laquelle Q désigne un reste phényle, 1-naphtyle, 2-naphtyle, furannyle, thiényle ou benzothiazolyle, non-substitué ou substitué par méthyle, trifluorométhyle, méthoxy, sulfo, nitro, chlore ou brome.

**3.** Procédé de préparation selon la revendication 2, de composés de formule (1), dans laquelle Q désigne phényle.

4. Procédé de préparation selon l'une des revendications 1 à 3, de composés de formule (1), dans laquelle D désigne le reste d'un aminobenzène, aminonaphtalène, phénylazo-aminobenzène, naphtylazo-aminobenzène, phénylazo-aminonaphtalèneou naphtylazo-aminonaphtalène, éventuellement substitué.

5. Procédé de préparation selon la revendication 4, de composés de formule (1), dans laquelle D est non-substitué ou bien substitué par alkyle en $C_1$-$C_4$, alcoxy en $C_1$-$C_4$, amino, N-mono(alkyl en $C_1$-$C_4$)amino, N,N-di(alkyl en $C_1$-$C_4$)amino, la partie alkyle étant non-substituée ou bien substituée par -OH, $-OCOCH_3$, $-SO_3H$, $-OSO_3H$, -CN ou par halogène ou bien est substituée par phénylamino, (alcanoyl en $C_1$-$C_4$)amino, benzoylamino, (alcoxy en $C_1$-$C_4$)carbonyle, nitro, cyano, trifluorométhyle, halogène, hydroxy, carboxy, sulfo, sulfométhyle, sulfamoyle, N-mono(alkyl en $C_1$-$C_4$)sulfamoyle, N,N-di(alkyl en $C_1$-$C_4$)sulfamoyle, N-phénylsulfamoyle, carbamoyle, N-mono(alkyl en $C_1$-$C_4$)carbamoyle, N,N-di(alkyl en $C_1$-$C_4$)carbamoyle, uréido, (alkyl en $C_1$-$C_4$)sulfonyle et/ou par un reste réactif.

6. Procédé de préparation selon l'une des revendications 1 à 5, de composés de formule (1), dans laquelle D désigne un reste réactif de formule :

$-SO_2-Z$ (2)

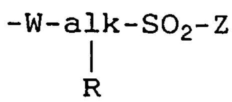

(2a)

-W-alk-E-alk'-$SO_2$-Z (2b)

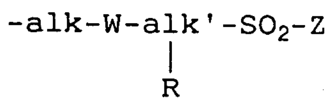

(2c)

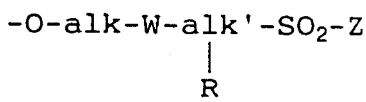

(2d)

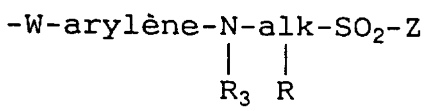

(2e)

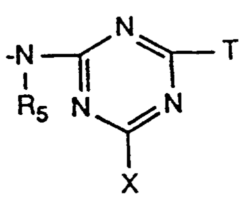

(3) ou

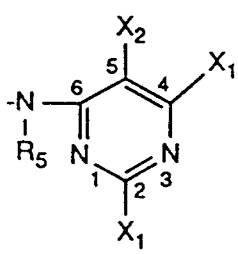

(5)

dans lesquelles W désigne un groupe fonctionnel, $R_3$ désigne l'hydrogène, un alkyle en $C_1$-$C_4$ non-substitué ou substitué par hydroxy, sulfo, sulfato, carboxy ou cyano ou un reste de formule

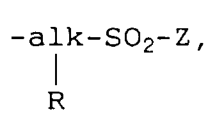

R désigne hydrogène, hydroxy, sulfo, sulfato, carboxy, cyano, halogène, (alcoxy en $C_1$-$C_4$)carbonyle, (alcanoyl en $C_1$-$C_4$)oxy, carbamoyle ou le groupe $-SO_2$-Z, Z désigne $-CH=CH_2$ ou $-CH_2$-$CH_2$-Y, Y étant un groupe détachable, E désigne -O-ou $-NR_4$, $R_4$ étant un hydrogène ou un alkyle en $C_1$-$C_4$, alk et alk', indépendamment l'un de l'autre, désignent un alkylène en $C_1$-$C_6$, un arylène, un phénylène ou un naphtylène non-substitué ou bien substitué par sulfo, carboxy, alkyle en $C_1$-$C_4$, alcoxy en $C_1$-$C_4$ ou par halogène, $R_5$ désigne l'hydrogène ou un alkyle en $C_1$-$C_4$ non-substitué ou bien substitué par carboxy, cyano, hydroxy, sulfo ou sulfato, et X désigne un groupe séparable sous forme d'anion, T a, de façon indépendante, la signification de X ou bien désigne un groupement renfermant un autre reste réactif ou bien désigne un substituant non-réactif, l'un des restes $X_1$ a, de façon indépendante, la signification de X et l'autre reste $X_1$ a la signification de T, et $X_2$ désigne un substituant négatif ou bien est substitué par un reste 2,3-dichloroquinoxaline-6-carbonylamino ou par un reste 2,4-dichloropyrimidine-5-carbonylamino.

7. Procédé de préparation selon la revendication 6, de composés de formule (1), dans laquelle D est substitué par un reste de formule (2) ou (2a) réactif avec les fibres, W désigne un groupe -CONH- ou -NHCO-, alk désigne un reste alkylène en $C_1$-$C_4$ et Z a la signification indiquée dans la revendication 6.

8. Procédé de préparation selon la revendication 6 ou 7, de composés de formule (1), dans laquelle Y désigne -Cl, $-OSO_3H$, $-SSO_3H$, $-OCO-CH_3$, $-OCO-C_6H_5$ ou $-OPO_3H_2$.

9. Procédé de préparation selon l'une des revendications 6 et 8, de composés de formule (1), dans laquelle D est substitué par un reste de formule (3) réactif avec les fibres, et X désigne du fluor, du chlore, du brome, un groupe sulfo ou un groupe (alkyl en $C_1$-$C_4$)sulfonyle ou un groupe phénylsulfonyle.

10. Procédé de préparation selon l'une des revendications 6, 8 ou 9, de composés de formule (1), dans laquelle T désigne un groupement renfermant un reste réactif ayant la formule :

R
|
$-N-alk-SO_2-Z$ (4)
|
$R_3$

$-N-alk-E-alk'-SO_2-Z$ (4a)
|
$R_5$

$-N-arylène-SO_2-Z$ (4b)
|
$R_5$

$-N-arylène-(alk)_p-W-alk'-SO_2-Z$ (4c) ou
|
$R_5$

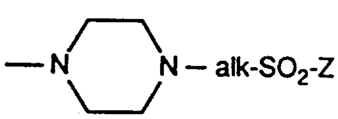
(4d)

dans lesquelles R, $R_3$, $R_5$, E, W, Z, alk, alk' et arylène ont les significations indiquées dans la revendication 6 et p désigne le nombre 0 ou 1.

11. Procédé de préparation selon la revendication 10, de composés de formule (1), dans laquelle T désigne un groupe de formule :

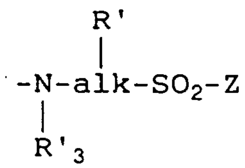

(4')

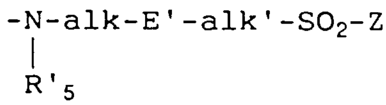

(4'a)

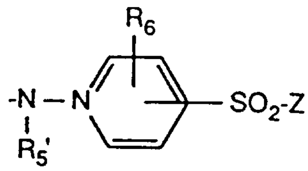

(4'b)

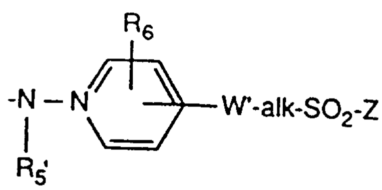

(4'c) ou

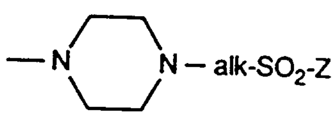

(4d)

dans lesquelles W' désigne -COR'$_5$- ou -NR'$_5$CO-, R' désigne l'hydrogène ou le groupe $-SO_2-Z$, R'$_3$ désigne l'hydrogène, un alkyle en $C_1$-$C_4$ ou le groupe $-alk-SO_2-Z$, $R_5$' désigne l'hydrogène ou un alkyle en $C_1$-$C_4$, E' désigne -O-ou -NH-, et $R_6$ désigne hydrogène, sulfo, carboxy, chlore, méthoxy ou méthyle, alk et alk', indépendamment l'un de l'autre, désignent un reste alkylène en $C_1$-$C_4$, et Z a la signification indiquée dans la revendication 6.

**12.** Procédé de préparation selon l'une des revendications, 6, 8 et 9, de composés de formule (1), dans laquelle T en tant que substituant non-réactif désigne amino, N-(alkyl en $C_1$-$C_4$)amino, la partie alkyle étant non-substituée ou bien substituée par hydroxy, sulfato ou sulfo, morpholino, phénylamino ou N-(alkyl en $C_1$-$C_4$),N-phénylamino où le phényle est non-substitué ou bien substitué par sulfo, carboxy, méthyle et/ou méthoxy.

**13.** Procédé de préparation selon la revendication 6, de composés de formule (1), dans laquelle D est substitué par un reste réactif de formule (5), indiquée dans la revendication 6, dans laquelle $X_1$ désigne chlore ou fluor et $X_2$ désigne chlore, cyano, formyle ou méthylsulfonyle.

**14.** Procédé de préparation selon l'une des revendications 1 à 6, de composés de formule (1), dans laquelle D désigne le reste d'un aminobenzène ou aminonaphtalène, non-substitué ou substitué par sulfo, acétylamino, méthyle, méthoxy, chlore ou brome, et qui est en outre substitué par un reste réactif de formule (2), (2a) ou (3), indiquée dans la revendication 6.

**15.** Procédé de préparation selon l'une des revendications 1 à 5, de composés de formule (1), dans laquelle D désigne le reste d'un aminobenzène ou d'un aminonaphtalène, non-substitué ou bien substitué par sulfo, carboxy, alcoxy en $C_1$-$C_4$, alkyle en $C_1$-$C_4$, (alcanoyl en $C_1$-$C_4$)amino et/ou par un halogène.

**16.** Procédé de préparation selon l'une des revendications 1 à 15, de composés de formule (1), dans laquelle $R_1$ et $R_2$, indépendamment l'un de l'autre, désignent l'hydrogène, un reste alkyle en $C_1$-$C_6$ non-substitué ou bien substitué par hydroxy, sulfo, sulfato, carboxy, cyano, halogène, (alcoxy en $C_1$-

$C_4$)carbonyle, (alcanoyl en $C_1$-$C_4$)oxy, carbamoyle et/ou par un reste réactif, où l'alkyle, à l'exception de méthyle, est éventuellement interrompu par -O- ou par -$NR_4$-, et $R_4$ a la signification indiquée dans la revendication 6, ou signifie un reste phényle ou naphtyle non-substitué ou bien substitué par sulfo, carboxy, alkyle en $C_1$-$C_4$, alcoxy en $C_1$-$C_4$, halogène, un reste réactif et/ou un groupe -N=N-K où K est le reste d'un composant de copulation de la série benzénique ou naphtalénique ou de la série hétérocyclique ou bien $R_1$ et $R_2$ forment ensemble avec l'atome d'azote auquel ils sont attachés un reste pipéridinyle, pipérazinyle ou pyrrolidinyle, qui est non-substitué ou bien substitué par un reste de formule $-(alk)_p-SO_2-Z$, où alk, p et Z ont les significations indiquées dans la revendication 10.

**17.** Procédé de préparation selon la revendication 16,, de composés de formule (1), dans laquelle le reste phényle ou naphtyle désignant $R_1$ ou $R_2$ est un reste de formule (2), (2a), (3) ou (5) selon la revendication 6 ou est un reste 2,3-dichloroquinoxaline-6-carbonylamino ou un reste 2,4-dichloropyrimidine-5-carbonylamino, et lorsque $R_1$ ou $R_2$ désigne un reste alkyle en $C_1$-$C_6$ substitué par un reste réactif, ce reste réactif désigne $-SO_2-Z$.

**18.** Procédé de préparation selon l'une des revendications 1 à 17, de composés de formule (1), dans laquelle $A_1$ et/ou $A_2$ représentent un groupe de formule (4b') ou (4c') indiquée dans la revendication 11 ou bien un groupe de formule :

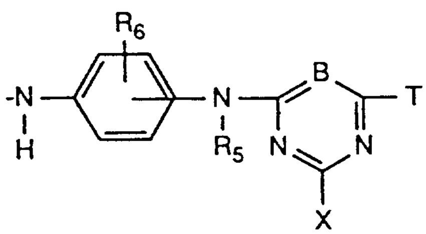

(3a)

dans laquelle $R_5$, X et T ont les significations indiquées dans la revendication 6, $R_6$ désigne hydrogène, sulfo, chlore, méthoxy ou carboxy et B désigne un groupe

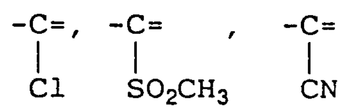

ou -N=.

**19.** Procédé de préparation selon l'une des revendications 1 à 17, de composés de formule (1), dans laquelle $A_1$ et/ou $A_2$ désignent un reste de formule (1a) indiquée dans la revendication 1, où $R_1$ et $R_2$, indépendamment l'un de l'autre, désignent l'hydrogène ou bien un reste alkyle en $C_1$-$C_4$ non-substitué ou bien substitué par hydroxy, sulfo, sulfato, carboxy, cyano ou par le groupe $-SO_2-Z$, et/ou interrompu par -O-, Z ayant la signification indiquée dans la revendication 6.

**20.** Procédé de préparation selon la revendication 19, de composés de formule (1), dans laquelle l'un des restes $R_1$ et $R_2$ désigne l'hydrogène.

**21.** Procédé de préparation selon l'une des revendications 1 à 20, de composés de formule (1), dans laquelle $A_1$ désigne un reste de formule (1a), (4') ou (4'a) indiquée dans la revendication 1 ou 11, où $R_1$ désigne l'hydrogène et $R_2$ désigne l'hydrogène ou bien un alkyle en $C_1$-$C_4$, non-substitué ou substitué par hydroxy, sulfo ou sulfato, R', $R'_3$ et $R'_5$ désignent l'hydrogène, E' désigne -O-, et alk, alk' et Z ont les significations indiquées dans la revendication 11, $A_2$ a, de façon indépendante, la signification de $A_1$ ou bien désigne un reste phénylamino non-substitué ou substitué par sulfo, chlore, méthoxy, carboxy ou par un reste de formule (2), (2a) ou (3) indiquée dans la revendication 6.

**22.** Procédé de préparation selon la revendication 1, de composés de formule (1), dans laquelle $A_1$ et $A_2$, indépendamment l'un de l'autre, désignent amino, N-(alkyl en $C_1$-$C_4$)amino où l'alkyle est non-substitué

ou bien substitué par hydroxy, sulfato ou sulfo, ou bien désigne phénylamino où le phényle est non-substitué ou bien substitué par sulfo, carboxy, méthyle, méthoxy, chlore et/ou par un reste de formule :

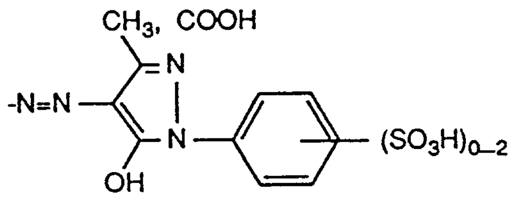

(8')

D désigne le reste d'un aminobenzène ou d'un aminonaphtalène qui est non-substitué ou bien substitué par sulfo, acétylamino, méthyle, méthoxy, chlore ou brome et qui porte en outre un reste réactif de formule (2), (2a) ou (3), indiquée dans la revendication 6, et Q désigne un reste phényle, 1-naphtyle, 2-naphtyle, furannyle, thiényle ou benzothiazolyle, non-substitué ou bien substitué par méthyle, trifluorométhyle, méthoxy, nitro, chlore ou brome.

**23.** Procédé de préparation selon la revendication 1, de composés de formule (1), dans laquelle $A_1$ désigne un reste de formule (1a), (4') ou (4'a), indiquée dans la revendication 1 ou 11, où $R_1$ désigne l'hydrogène et $R_2$ désigne l'hydrogène ou bien un reste alkyle en $C_1$-$C_4$ non-substitué ou substitué par hydroxy, sulfo ou sulfato ; R', $R'_3$ et $R'_5$ désignent l'hydrogène, E' désigne -O-, et alk, alk' et Z ont toujours les significations indiquées dans la revendication 11, $A_2$ a, de façon indépendante, la signification de $A_1$ ou bien désigne un phénylamino non-substitué ou substitué par sulfo, chlore, méthoxy, carboxy ou par un reste de formule (2), (2a) ou (3) indiquée dans la revendication 6, Q désigne un reste phényle, 1-naphtyle, 2-naphtyle, furannyle, thiényle ou benzothiazolyle, non-substitué ou substitué par méthyle, trifluorométhyle, méthoxy, sulfo, nitro, chlore ou brome ; et D désigne le reste d'un aminobenzène ou d'aminonaphtalène qui est non-substitué ou bien substitué par sulfo, carboxy, alcoxy en $C_1$-$C_4$, alkyle en $C_1$-$C_4$, (alcanoyl en $C_1$-$C_4$)amino ou bien par un halogène et qui éventuellement porte en outre un reste réactif de formule (2), (2a) ou (3) indiquée dans la revendication 6.

**24.** Utilisation du colorant réactif pouvant être obtenu par la revendication 1, pour la teinture et l'impression de matières en fibres cellulosiques.

**25.** Utilisation selon la revendication 24, pour la teinture et l'impression du coton.

**26.** Procédé de préparation de composés de formule :

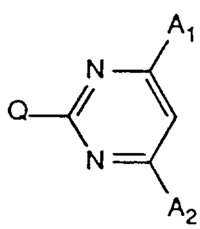

(11)

dans laquelle Q, $A_1$ et $A_2$ ont les significations indiquées dans la revendication 1, sous réserve que $A_1$ et/ou $A_2$ renferment un reste réactif avec les fibres,
caractérisé par le fait qu'on fait réagir un composé de formule :

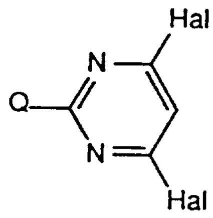

(12)

avec une amine de formule :

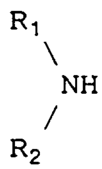

(1a*)

pour obtenir le composé de formule :

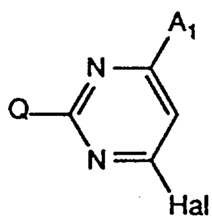

(13)

et qu'on fait réagir ensuite ce dernier avec une autre amine de formule (1a*) pour obtenir le composé de formule (11), Q, $R_1$, $R_2$ et $A_1$ ayant les significations indiquées dans la revendication 1 et Hal désigne un halogène, par exemple, le brome et plus particulièrement le chlore.